# EUROPEAN PATENT APPLICATION

(11) **EP 4 851 749 A1**
(43) Date of publication of application: **09.12.2026**
(21) Application number: 25896880.9
(22) Date of filing: 16.09.2025
(51) Int. Cl.: G06F 1/3206, G06F 1/329, G06F 9/48

(54) **PROCESSOR RESOURCE MANAGEMENT METHOD AND RELATED APPARATUS**

(30) Priority: 29.11.2024 CN 202411758108
(71) Applicant: HUAWEI TECHNOLOGIES CO., LTD., Shenzhen, Guangdong 518129 (CN)
(72) Inventor: LI, Shijun, Shenzhen, Guangdong 518129 (CN); ZHU, Shuang, Shenzhen, Guangdong 518129 (CN); ZHANG, Shuo, Shenzhen, Guangdong 518129 (CN); YAO, Xin, Shenzhen, Guangdong 518129 (CN); SUN, Jie, Shenzhen, Guangdong 518129 (CN); DING, Qing, Shenzhen, Guangdong 518129 (CN); SUN, Chao, Shenzhen, Guangdong 518129 (CN)
(74) Representative: Huawei European IPR
(86) International application number: PCT/CN2025/121676
(87) International publication number: WO 2026/113584

(57) **Abstract**

This application provides a processor resource management method and a related apparatus. An electronic device may identify a critical thread, a critical dependent thread, and a non-critical thread. When the critical thread and the critical dependent thread are run, the electronic device may dynamically adjust a frequency of a processor based on task processing states of the critical thread and the critical dependent thread, to accurately supply processor resources to the critical thread and the critical dependent thread. The electronic device may perform supply restriction on the processor resource provided for the non-critical thread. The method can improve utilization of the processor resources. Consequently, the electronic device can provide a user with smooth experience of using the electronic device, conserve power of the electronic device, and mitigate excessively rapid temperature rise of the electronic device. This achieves a balance between smooth device performance and requirements of long battery endurance and rapid cooling.

## Description

This application claims priority to Chinese Patent Application No. 202411758108.7, filed with the China National Intellectual Property Administration on November 29, 2024 and entitled "PROCESSOR RESOURCE MANAGEMENT METHOD AND RELATED APPARATUS", which is incorporated herein by reference in its entirety.

### TECHNICAL FIELD

This application relates to the field of terminal technologies, and in particular, to a processor resource management method and a related apparatus.

### BACKGROUND

With development of electronic devices, applications (for example, video playing applications, game applications, and social applications) in the electronic devices such as mobile phones, tablet computers, and smartwatches provide increasingly abundant functions for users, thereby satisfying requirements of the users in various aspects such as daily life, work, and travel. Running of an application in an electronic device depends on a computing power resource of a processor. A higher computing power resource provided by the electronic device for the application indicates smoother running of the application. However, this also causes higher power consumption and higher temperature of the electronic device. As the applications have increasing demands for computing power resources, how to improve utilization of processor resources is a problem that urgently needs to be resolved currently.

### SUMMARY

This application provides a processor resource management method and a related apparatus. An electronic device may identify a critical thread, a critical dependent thread, and a non-critical thread. The electronic device may preferentially supply processor resources to the critical thread and the critical dependent thread, and perform supply restriction on the processor resource provided for the non-critical thread. The method can improve utilization of processor resources, and provide a user with smooth experience of using the electronic device.

According to a first aspect, this application provides a processor resource management method. The method is applied to an electronic device, and the electronic device includes a first critical thread list. When running a first critical thread, the electronic device identifies a critical dependent thread of the first critical thread, where the first critical thread is any thread in the first critical thread list, the critical dependent thread of the first critical thread includes a thread other than the first critical thread on a first critical path, one node on the first critical path corresponds to one thread, both a head node and a tail node on the first critical path correspond to the first critical thread, and there is a wakeup relationship between two adjacent nodes on the first critical path. The electronic device increases a running priority of the critical dependent thread of the first critical thread.

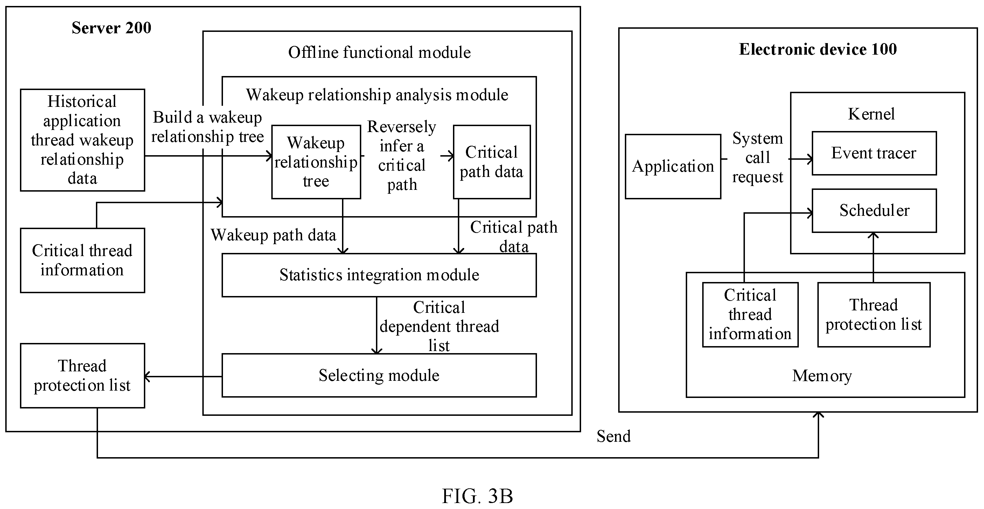

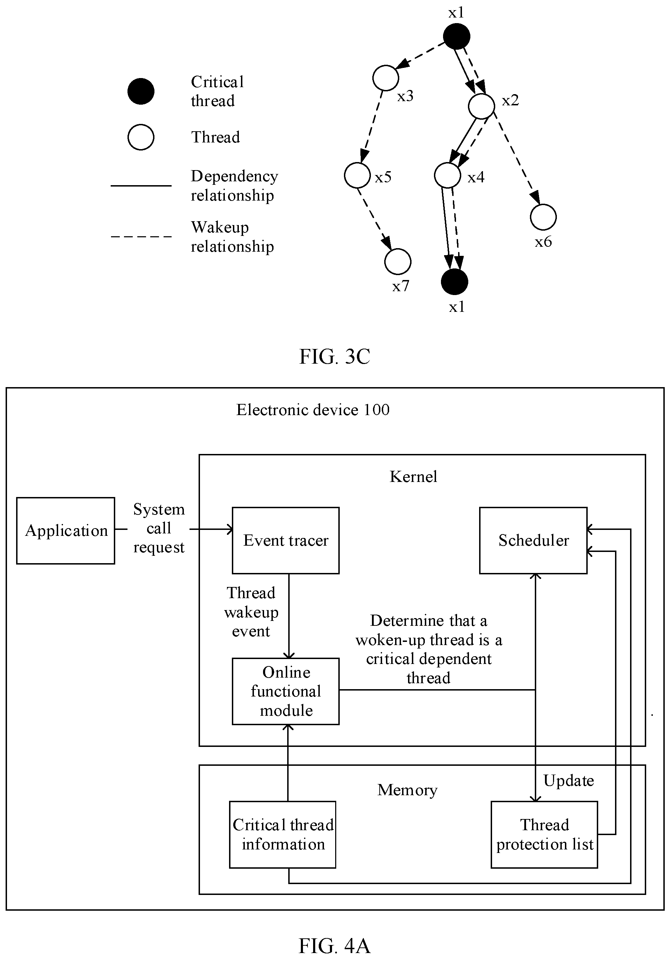

For the critical thread list, refer to critical thread information shown in FIG. 3B and FIG. 4A in this application. For the first critical path, refer to a critical path shown in FIG. 3C in this application: a thread x1-a thread x2-a thread x4-a thread x1.

It can be learned that in the method, threads directly and indirectly depended on by the critical thread can be identified, and processor resources are preferentially supplied to the threads depended on by the critical thread, thereby reducing blocking of the critical thread for a long time caused by blocking of a thread indirectly depended on by the critical thread when the thread indirectly depended on by the critical thread fails to be identified. This can improve a running speed of the critical thread, thereby improving smoothness of interaction between the electronic device and a user.

With reference to the first aspect, in some embodiments, the first critical thread list is associated with a first application scenario. Before the electronic device increases the running priority of the critical dependent thread of the first critical thread, the electronic device determines, based on a first application running in a foreground, that the electronic device is in the first application scenario.

It can be learned that the electronic device can identify the critical thread and the critical dependent thread corresponding to the current application scenario, and increase the priority of the critical dependent thread corresponding to the current application scenario. This can improve running smoothness of the foreground application, and provide the user with smooth experience of using the electronic device.

With reference to the first aspect, in some embodiments, the electronic device further includes a second critical thread list, and the second critical thread list is associated with a second application scenario. After the electronic device increases the running priority of the critical dependent thread of the first critical thread, the electronic device determines, based on a second application running in the foreground, that the electronic device is in the second application scenario. The electronic device identifies a critical dependent thread of a second critical thread, where the second critical thread is any thread in the second critical thread list, the critical dependent thread of the second critical thread includes a thread other than the second critical thread on a second critical path, one node on the second critical path corresponds to one thread, both a head node and a tail node on the second critical path correspond to the second critical thread, and there is a wakeup relationship between two adjacent nodes on the second critical path. The electronic device increases a running priority of the critical dependent thread of the second critical thread.

After the electronic device determines, based on the application running in the foreground, that the electronic device is in the second application scenario, the electronic device lowers the running priority of the critical dependent thread of the first critical thread.

It can be learned that, when an application scenario is switched, the electronic device may adjust a running priority of a corresponding thread, to preferentially supply a processor resource to a critical dependent thread of an application running in the foreground in real time. This can improve running smoothness of the foreground application, and provide the user with smooth experience of using the electronic device.

With reference to the first aspect, in some embodiments, the electronic device identifies the critical dependent thread of the first critical thread, and the electronic device searches a first critical dependent thread list for the critical dependent thread of the first critical thread, where the first critical dependent thread list includes the critical dependent thread of the first critical thread, and the first critical dependent thread list is obtained by the electronic device from a server.

For the first critical dependent thread list, refer to a thread protection list sent by a server 200 to an electronic device 100 in FIG. 3B in this application.

It can be learned that the electronic device can directly search the first critical dependent thread list obtained from the server for the critical dependent thread of the critical thread. This can improve a speed of identifying the critical dependent thread.

With reference to the first aspect, in some embodiments, the electronic device detects a first thread wakeup event, where the first thread wakeup event indicates a first wakeup relationship corresponding to a first thread waking up a second thread. The electronic device determines, based on historical wakeup relationships of threads in the electronic device, that the second thread is a critical dependent thread of the first critical thread, where the historical wakeup relationship includes a first historical quantity of occurrences of the first wakeup relationship and a second historical quantity of times that both the first thread and the second thread are actually critical dependent threads of the first critical thread in history when the first wakeup relationship occurs, where the first historical quantity is greater than a first quantity threshold, and a proportion of the second historical quantity to the first historical quantity is greater than a first probability threshold. The electronic device further searches a second critical dependent thread list for the critical dependent thread of the first critical thread, where the second critical dependent thread list includes the critical dependent thread of the first critical thread, and the second critical dependent thread list is generated by the electronic device based on the historical wakeup relationships of the threads.

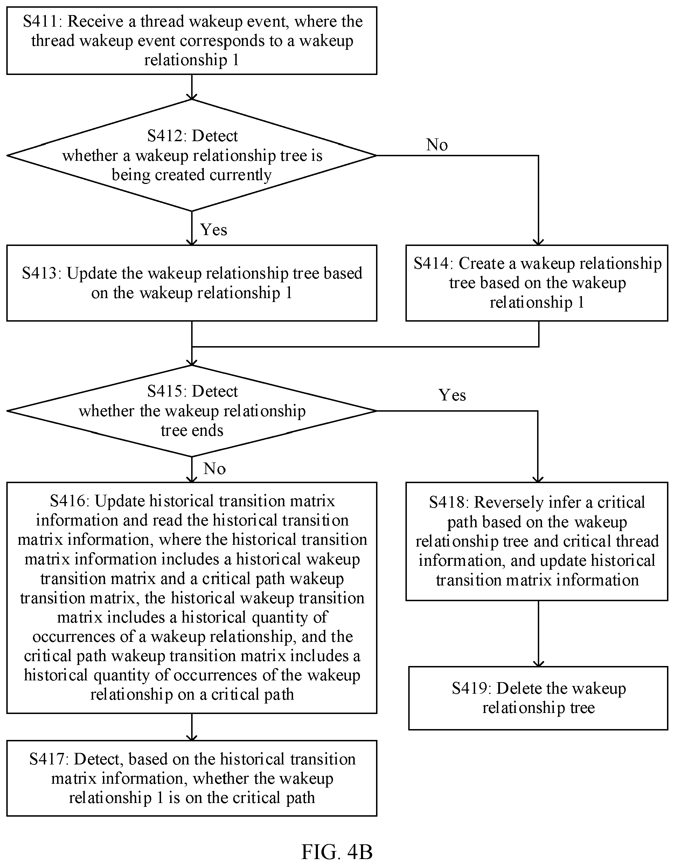

For the first wakeup relationship, refer to a wakeup relationship 1 shown in FIG. 4B in this application.

For the historical wakeup relationships, refer to historical transition matrix information shown in FIG. 4B in this application. For the first historical quantity, refer to a quantity of occurrences of a wakeup relationship shown in Table 2 in this application. For the second historical quantity, refer to a quantity of occurrences of a wakeup relationship shown in Table 3 in this application.

It can be learned that the electronic device may obtain a latest wakeup relationship between threads in real time based on thread running, to identify a critical dependent thread of a critical thread in real time.

With reference to the first aspect, in some embodiments, the second critical dependent thread list does not include the second thread. After the electronic device determines, based on the historical wakeup relationships of the threads in the electronic device, that the second thread is the critical dependent thread of the first critical thread, the electronic device adds the second thread to the second critical dependent thread list.

With reference to the first aspect, in some embodiments, after the electronic device adds the second thread to the second critical dependent thread list, the electronic device determines, based on the historical wakeup relationships, that the historical quantity of occurrences of the first wakeup relationship changes to a third historical quantity, and the historical quantity of times that both the first thread and the second thread are actually critical dependent threads of the first critical thread in history when the first wakeup relationship occurs changes to a fourth historical quantity, where a proportion of the fourth historical quantity to the third historical quantity is less than the first probability threshold. The electronic device removes the second thread from the second critical dependent thread list.

It can be learned that the electronic device can obtain a latest wakeup relationship between threads in real time based on thread running, to adaptively update a critical dependent thread. In addition, as the electronic device is used for a longer time, the electronic device can more accurately identify a critical dependent thread.

With reference to the first aspect, in some embodiments, the second critical dependent thread list is obtained by updating the first critical dependent thread list, the first critical dependent thread list is obtained by the electronic device from the server, and the first critical dependent thread list includes a critical dependent thread of one or more critical threads in the first critical thread list.

With reference to the first aspect, in some embodiments, the electronic device divides the threads in the electronic device into a foreground group and a non-foreground group, where the foreground group includes a thread of a foreground application running in the foreground and a thread that is in a system service and that is associated with the foreground application, and the non-foreground group includes a thread that is in the system service and that is not associated with the foreground application and a thread of a background application running in a background. The electronic device detects a CPU load rate of the thread in the foreground group. When the CPU load rate of the thread in the foreground group increases, the electronic device determines a first increment of a CPU time slice length based on an increment of the CPU load rate of the thread in the foreground group. The electronic device increases the CPU time slice length of the thread in the foreground group based on the first increment, and reduces the CPU time slice length of the thread in the non-foreground group.

It can be learned that the threads in the foreground group are threads with higher user sensitivity. Based on the thread groups, the electronic device may restrict, when the CPU load rate of the foreground group is high, a processor resource obtained by the thread in the non-foreground group, to provide a longer CPU time slice for the thread in the foreground group. In this way, a thread in the foreground group with a large task amount can obtain more processor resources, so that the thread can complete a task faster, and provide the user with smooth experience of using the device. In addition, when the CPU load rate of the foreground group decreases, the electronic device may provide longer CPU time slices for the threads in the non-foreground group, so that tasks of the threads in the non-foreground group can be fast executed. Group management and control of CPU time slices for different thread groups in the method can effectively improve utilization of processor resources, and can keep the threads in the non-foreground group running while ensuring smooth use of the device.

With reference to the first aspect, in some embodiments, before the electronic device detects the CPU load rate of the thread in the foreground group, the electronic device detects a first foreground event, where the first foreground event includes a change of the foreground application running in the foreground.

It may be understood that when the first foreground event occurs, a CPU load of the thread in the foreground group may change. That the electronic device adjusts, when detecting the foreground event, a ratio of CPU weights based on the change of the CPU load rate of the foreground group can reduce a quantity of times that the electronic device detects the CPU load rate of the foreground group, and improve efficiency of managing and controlling the CPU time slices of the thread groups.

With reference to the first aspect, in some embodiments, the electronic device divides the threads in the electronic device into a foreground group and a non-foreground group, where the foreground group includes a thread of a foreground application running in the foreground and a thread that is in a system service and that is associated with the foreground application, and the non-foreground group includes a thread that is in the system service and that is not associated with the foreground application and a thread of a background application running in a background. The electronic device detects an overall device load and/or a device housing temperature of the electronic device, where the overall device load includes CPU loads of the threads in the foreground group and the non-foreground group. When the overall device load is a first load and/or the device housing temperature is a first temperature, the electronic device determines a first bandwidth quota amount based on the first load and/or the first temperature, and performs CPU bandwidth quota allocation to the thread in the non-foreground group based on the first bandwidth quota amount.

It can be learned that the electronic device can perform bandwidth quota restriction on a thread in a non-foreground group based on the overall device load and/or the device temperature. Bandwidth quota allocation can reduce the overall device load in unit time. A higher overall device load indicates a higher bandwidth quota restriction by the electronic device on the thread in the non-foreground group, and a higher device temperature also indicates a higher bandwidth quota restriction by the electronic device on the thread in the non-foreground group. The method for restricting the bandwidth quota can control the overall device load and the device temperature of the electronic device, reduce an impact of a thread in the non-foreground group on running of a thread in the foreground group when the overall device load is excessively high, and reduce an excessively high device temperature.

With reference to the first aspect, in some embodiments, when the overall device load changes to a second load and/or the device housing temperature changes to a second temperature, the electronic device determines a second bandwidth quota amount based on the second load and/or the second temperature, and performs CPU bandwidth quota allocation to the thread in the non-foreground group based on the second bandwidth quota amount. If the second load is higher than the first load and/or the second temperature is higher than the first temperature, the second bandwidth quota amount is smaller than the first bandwidth quota amount.

With reference to the first aspect, in some embodiments, the electronic device divides the threads in the electronic device into a foreground group, a common thread group, and a restricted thread group, where the foreground group includes a thread of a foreground application running in the foreground and a thread that is in a system service and that is associated with the foreground application, the restricted thread group includes a delayable thread that is in the system service and that is not associated with the foreground application and a delayable thread in a background application running in a background, and the common thread group includes a thread that is in the system service and not in the restricted thread group and that is not associated with the foreground application and a thread that is in the background application and not in the restricted thread group. The electronic device continuously performs CPU bandwidth quota allocation to the thread in the restricted thread group based on a third bandwidth quota amount. The electronic device detects an overall device load and/or a device housing temperature of the electronic device, where the overall device load includes CPU loads of the threads in the foreground group, the common thread group, and the restricted thread group. When the overall device load is a first load and/or the device housing temperature is a first temperature, the electronic device determines a first bandwidth quota amount based on the first load and/or the first temperature, and performs CPU bandwidth quota allocation to the thread in the common thread group based on the first bandwidth quota amount.

It can be learned that the electronic device can perform persistent bandwidth quota restriction on a delayable thread with a high CPU load, to reduce a burst load. The electronic device may alternatively perform dynamic bandwidth quota restriction on a thread in a group other than the restricted thread group in the non-foreground group based on the overall device load and/or the device temperature. This can control the overall device load and the device temperature of the electronic device, reduce an impact of a thread in the non-foreground group on running of a thread in the foreground group when the overall device load is excessively high, and reduce the excessively high device temperature.

With reference to the first aspect, in some embodiments, the electronic device divides the threads in the electronic device into a foreground group and a non-foreground group, where the foreground group includes a thread of a foreground application running in the foreground and a thread that is in a system service and that is associated with the foreground application, and the non-foreground group includes a thread that is in the system service and that is not associated with the foreground application and a thread of a background application running in a background. When it is detected that a third thread is waiting for a fourth thread to release a first shared resource or waiting to obtain a first running result from the fourth thread, the electronic device labels the fourth thread with a first label, where the third thread is the thread in the foreground group, and the fourth thread is the thread in the non-foreground group. The electronic device performs one or more of the following operations on the thread with the first label: increasing a running priority, increasing a CPU time slice length, and releasing a CPU bandwidth quota. When the fourth thread releases the first shared resource or sends the first running result to the third thread, the electronic device removes the first label from the fourth thread.

That the third thread is waiting for the fourth thread to release the first shared resource or waiting to obtain the first running result from the fourth thread may include a case in which the third thread is waiting for the fourth thread to release a binder/thread lock.

It can be learned that, when the thread in the foreground group depends on the thread in the non-foreground group, the electronic device can temporarily increase a priority of the thread that is in the non-foreground group and that is depended on by the foreground group, increase a CPU time slice length of the thread, and release bandwidth quota restriction on the thread. In addition, moving the thread that is in the non-foreground group and that is depended on by the foreground group to the foreground group requires reaction and execution time of moving. Compared with changing the thread group of the thread that is depended on, the method for setting a critical region can more efficiently reduce priority inversion, and improve running smoothness of the thread in the foreground group.

With reference to the first aspect, in some embodiments, the foreground group includes the critical thread in the first critical thread list and the critical dependent thread of the critical thread in the first critical thread list.

With reference to the first aspect, in some embodiments, the electronic device detects an overall device load and/or a device housing temperature of the electronic device, where the overall device load includes loads of all threads in the electronic device. The electronic device determines a first CPU frequency based on the overall device load and/or the device housing temperature, and controlling a CPU frequency to be lower than or equal to the first CPU frequency when a CPU runs a non-critical thread, where the non-critical thread includes a thread other than the critical thread in the first critical thread list and the critical dependent thread of the critical thread in the first critical thread list.

It can be learned that through CPU frequency restriction on the non-critical thread, the electronic device can conserve power of the electronic device, and mitigate rapid temperature rise of the electronic device while the non-critical thread keeps running.

With reference to the first aspect, in some embodiments, the first critical thread is for completing a multi-frame task. In a running process of the first critical thread and the critical dependent thread of the first critical thread, the electronic device determines, based on a CPU frequency adjustment cycle, that a first frequency adjustment moment is in a time period in which a task of a first frame in the multi-frame task is running. The electronic device detects, at the first frequency adjustment moment, whether the task of the first frame is completed. If the task of the first frame is not completed, the electronic device increases the CPU frequency to a second CPU frequency based on a first frequency adjustment function. The first frequency adjustment function is a power function in which CPU computing power is a dependent variable, running time of a task of one frame in the multi-frame task is an independent variable, and an exponent is a positive number less than 1.

For the first frequency adjustment function, refer to an optimal frequency adjustment function in embodiments of this application.

With reference to the first aspect, in some embodiments, if the task of the first frame is completed, the electronic device reduces the CPU frequency to a third CPU frequency.

With reference to the first aspect, in some embodiments, neither a moment at which the task of the first frame starts to run nor a moment at which the task of the first frame is completed is the frequency adjustment moment determined based on the CPU frequency adjustment cycle. When it is detected that the task of the first frame starts to run, the electronic device increases the CPU frequency to a fourth CPU frequency. When it is detected that the task of the first frame is completed, the electronic device reduces the CPU frequency to a fifth CPU frequency.

It can be learned that the electronic device may increase the CPU frequency in real time when a frame task of the critical thread and a frame task of the critical dependent thread start, and reduce the CPU frequency in real time when the frame task of the critical thread and the frame task of the critical dependent thread end. During running of the frame task of the critical thread and the frame task of the critical dependent thread, the electronic device may perform CPU frequency adjustment based on the optimal frequency adjustment function. This can improve accuracy of a processor resource supply to the critical thread and the critical dependent thread, thereby improving utilization of the processor resources, and achieving a balance between smooth device performance and requirements of long battery endurance and rapid cooling.

With reference to the first aspect, in some embodiments, after the task of the first frame is completed, the electronic device determines, based on the CPU frequency adjustment cycle, that a second frequency adjustment moment is in a time period in which a task of a second frame in the multi-frame task is running. The electronic device detects, at the second frequency adjustment moment, whether the task of the second frame is completed. If the task of the second frame is not completed, the electronic device increases the CPU frequency to a sixth CPU frequency based on the first frequency adjustment function.

With reference to the first aspect, in some embodiments, the first critical thread is a thread for determining display content of a user interface, and the task of one frame in the multi-frame task includes determining display content of one frame of user interface; or the first critical thread is a thread for rendering the user interface, and the task of one frame in the multi-frame task includes rendering one frame of user interface.

The first frequency adjustment function is: $u \left(t\right) = \frac{kk ∗ maxUtil ∗ {Time}^{α}}{deadline - margin} .$

u(t) is computing power provided by the CPU of the electronic device at a moment, maxUtil is maximum computing power of the CPU of the electronic device, Time is time from the current moment to a moment at which a synchronization signal of a task of a current frame is delivered, the synchronization signal of the task of the current frame indicates the electronic device to run the task of the current frame, deadline is a cycle in which the electronic device refreshes the user interface, margin is determined based on duration in which one or more frames of tasks before the running task of the current frame in the first critical thread are completed, kk and α are determined based on historical running data of one or more threads and a CPU energy efficiency curve of the electronic device, and the one or more threads include the first critical thread and the critical dependent thread of the first critical thread.

According to a second aspect, this application provides a processor resource management method. An electronic device divides threads in the electronic device into a foreground group and a non-foreground group, where the foreground group includes a thread of a foreground application running in a foreground and a thread that is in a system service and that is associated with the foreground application, and the non-foreground group includes a thread that is in the system service and that is not associated with the foreground application and a thread of a background application running in a background. The electronic device performs one or more of the following operations on the thread in the non-foreground group: adjusting a CPU time slice length of one or more threads in the non-foreground group based on a change of a load rate of the thread in the foreground group, performing CPU bandwidth quota allocation to one or more threads in the non-foreground group, and controlling a CPU frequency to be lower than or equal to a first CPU frequency when a CPU runs one or more threads in the non-foreground group.

It can be learned that the electronic device may group the threads. The electronic device may use different processor resource management strategies for different thread groups, to improve processor resource supply accuracy and implement a balance between smooth device performance and requirements of long battery endurance and rapid cooling.

With reference to the second aspect, in some embodiments, when the CPU load rate of the thread in the foreground group increases, the electronic device determines a first increment of the CPU time slice length based on an increment of the CPU load rate of the thread in the foreground group. The electronic device increases a CPU time slice length of one or more threads in the foreground group based on the first increment, and reduces the CPU time slice length of the one or more threads in the non-foreground group.

It can be learned that the threads in the foreground group are threads with higher user sensitivity. Based on the thread groups, the electronic device may restrict, when the CPU load rate of the foreground group is high, a processor resource obtained by the thread in the non-foreground group, to provide a longer CPU time slice for the thread in the foreground group. In this way, a thread in the foreground group with a large task amount can obtain more processor resources, so that the thread can complete a task faster, and provide a user with smooth experience of using the device. In addition, when the CPU load rate of the foreground group decreases, the electronic device may provide longer CPU time slices for the threads in the non-foreground group, so that tasks of the threads in the non-foreground group can be fast executed. Group management and control of CPU time slices for different thread groups in the method can effectively improve utilization of processor resources, and can keep the threads in the non-foreground group running while ensuring smooth use of the device.

With reference to the second aspect, in some embodiments, the electronic device detects an overall device load and/or a device housing temperature of the electronic device, where the overall device load includes CPU loads of the threads in the foreground group and the non-foreground group. When the overall device load is a first load and/or the device housing temperature is a first temperature, the electronic device determines a first bandwidth quota amount based on the first load and/or the first temperature, and performs CPU bandwidth quota allocation to the one or more threads in the non-foreground group based on the first bandwidth quota amount.

It can be learned that the electronic device can perform bandwidth quota restriction on a thread in a non-foreground group based on the overall device load and/or the device temperature. Bandwidth quota allocation can reduce the overall device load in unit time. A higher overall device load indicates a higher bandwidth quota restriction by the electronic device on the thread in the non-foreground group, and a higher device temperature also indicates a higher bandwidth quota restriction by the electronic device on the thread in the non-foreground group. The method for restricting the bandwidth quota can control the overall device load and the device temperature of the electronic device, reduce an impact of a thread in the non-foreground group on running of a thread in the foreground group when the overall device load is excessively high, and reduce an excessively high device temperature.

With reference to the second aspect, in some embodiments, when the overall device load changes to a second load and/or the device housing temperature changes to a second temperature, the electronic device determines a second bandwidth quota amount based on the second load and/or the second temperature, and performs CPU bandwidth quota allocation to the one or more threads in the non-foreground group based on the second bandwidth quota amount. If the second load is higher than the first load and/or the second temperature is higher than the first temperature, the second bandwidth quota amount is smaller than the first bandwidth quota amount.

With reference to the second aspect, in some embodiments, the non-foreground group includes a common thread group and a restricted thread group, the restricted thread group includes a delayable thread that is in the system service and that is not associated with the foreground application and a delayable thread in the background application running in the background, and the common thread group includes a thread that is in the system service and not in the restricted thread group and that is not associated with the foreground application and a thread that is in the background application and not in the restricted thread group. For performing CPU bandwidth quota allocation to the one or more threads in the non-foreground group, the electronic device continuously performs CPU bandwidth quota allocation to one or more threads in the restricted thread group based on a third bandwidth quota amount. The electronic device detects an overall device load and/or a device housing temperature of the electronic device, where the overall device load includes CPU loads of the threads in the foreground group, the common thread group, and the restricted thread group. When the overall device load is a first load and/or the device housing temperature is a first temperature, the electronic device determines a first bandwidth quota amount based on the first load and/or the first temperature, and performs CPU bandwidth quota allocation to one or more threads in the common thread group based on the first bandwidth quota amount.

It can be learned that the electronic device can perform persistent bandwidth quota restriction on a delayable thread with a high CPU load, to reduce a burst load. The electronic device may alternatively perform dynamic bandwidth quota restriction on a thread in a group other than the restricted thread group in the non-foreground group based on the overall device load and/or the device temperature. This can control the overall device load and the device temperature of the electronic device, reduce an impact of a thread in the non-foreground group on running of a thread in the foreground group when the overall device load is excessively high, and reduce the excessively high device temperature.

With reference to the second aspect, in some embodiments, the first CPU frequency is determined based on the overall device load and/or the device housing temperature of the electronic device, and the overall device load includes loads of all the threads in the electronic device.

With reference to the second aspect, in some embodiments, when it is detected that a third thread is waiting for a fourth thread to release a first shared resource or waiting to obtain a first running result from the fourth thread, the electronic device labels the fourth thread with a first label, where the third thread is the thread in the foreground group, and the fourth thread is the thread in the non-foreground group. The electronic device performs one or more of the following operations on the thread with the first label: increasing a running priority, increasing a CPU time slice length, and releasing a CPU bandwidth quota. When the fourth thread releases the first shared resource or sends the first running result to the third thread, the electronic device removes the first label from the fourth thread.

It can be learned that, when the thread in the foreground group depends on the thread in the non-foreground group, the electronic device can temporarily increase a priority of the thread that is in the non-foreground group and that is depended on by the foreground group, increase a CPU time slice length of the thread, and release bandwidth quota restriction on the thread. In addition, moving the thread that is in the non-foreground group and that is depended on by the foreground group to the foreground group requires reaction and execution time of moving. Compared with changing the thread group of the thread that is depended on, the method for setting a critical region can more efficiently reduce priority inversion, and improve running smoothness of the thread in the foreground group.

According to a third aspect, this application provides an electronic device. The electronic device may include a memory and a processor. The memory may be configured to store a computer program. The processor may be configured to invoke the computer program, to perform the method according to any one of the possible implementations of the first aspect or the second aspect.

According to a fourth aspect, this application provides a computer-readable storage medium. The computer-readable storage medium stores instructions, and the instructions are executed by a processor to implement the method according to any one of the possible implementations of the first aspect or the second aspect.

According to a fifth aspect, this application provides a computer program product. The computer program product may include computer instructions, and when the computer instructions are run on a processor, the method according to any one of the possible implementations of the first aspect or the second aspect may be implemented.

According to a sixth aspect, this application provides a chip. The chip is used in an electronic device, the chip includes one or more processors, and the processor is configured to invoke computer instructions to enable the electronic device to perform the method according to any one of the possible implementations of the first aspect or the second aspect.

It may be understood that the electronic device according to the third aspect, the computer-readable storage medium according to the fourth aspect, the computer program product according to the fifth aspect, and the chip according to the sixth aspect are all configured to perform the methods according to embodiments of this application. Therefore, for beneficial effect that can be achieved, refer to beneficial effect in corresponding methods. Details are not described herein again.

### BRIEF DESCRIPTION OF DRAWINGS

FIG. 1 is a diagram of processor resource management according to an embodiment of this application;
FIG. 2A is a flowchart of a thread scheduling method according to an embodiment of this application;
FIG. 2B is a diagram of thread priority adjustment according to an embodiment of this application;
FIG. 3A and FIG. 3B are a diagram of identifying a critical dependent thread according to an embodiment of this application;
FIG. 3C is a diagram of a wakeup relationship tree according to an embodiment of this application;
FIG. 4A and FIG. 4B are another diagram of identifying a critical dependent thread according to an embodiment of this application;
FIG. 4C to FIG. 4G are diagrams of some wakeup relationship trees according to an embodiment of this application;
FIG. 5 is a diagram of thread grouping according to an embodiment of this application;
FIG. 6A is a flowchart of a method for group management and control of CPU time slices according to an embodiment of this application;
FIG. 6B is a diagram of group management and control of CPU time slices according to an embodiment of this application;
FIG. 7A is a flowchart of a method for restricting a bandwidth quota based on a thread group according to an embodiment of this application;
FIG. 7B is a flowchart of another method for restricting a bandwidth quota based on a thread group according to an embodiment of this application;
FIG. 8 is a flowchart of a processor resource allocation method according to an embodiment of this application;
FIG. 9 is a flowchart of a method for restricting a CPU frequency of a non-critical thread according to an embodiment of this application;
FIG. 10 is a diagram of a frequency adjustment curve according to an embodiment of this application;
FIG. 11A is a diagram of determining an optimal frequency adjustment function according to an embodiment of this application;
FIG. 11B is a diagram of a CPU energy efficiency curve according to an embodiment of this application;
FIG. 12A is a flowchart of a method for determining an optimal frequency adjustment function according to an embodiment of this application;
FIG. 12B is a diagram of thread running according to an embodiment of this application;
FIG. 12C is a flowchart of a method for determining frame loss data and power consumption of a critical thread and a critical dependent thread based on a set of slope parameters and curvature parameters according to an embodiment of this application;
FIG. 12D is a diagram of frequency adjustment according to an embodiment of this application;
FIG. 13A is a diagram of a frame interpolation scenario according to an embodiment of this application;
FIG. 13B is a diagram of a frame skipping scenario according to an embodiment of this application;
FIG. 14A is a diagram of an optimal frequency adjustment curve according to an embodiment of this application;
FIG. 14B is a diagram of comparison between an optimal frequency adjustment curve and a non-optimal frequency adjustment curve according to an embodiment of this application;
FIG. 15 is a diagram of frequency adjustment according to an embodiment of this application;
FIG. 16A is a diagram of a hardware structure of an electronic device 100 according to an embodiment of this application; and
FIG. 16B-1 to FIG. 16B-3 are a diagram of a software structure of an electronic device 100 according to an embodiment of this application.

### DESCRIPTION OF EMBODIMENTS

The following describes technical solutions in embodiments of this application with reference to accompanying drawings in embodiments of this application. In descriptions of embodiments of this application, terms used in the following embodiments are merely intended to describe purposes of specific embodiments, but are not intended to limit this application. The terms "one", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one or more (including two). The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

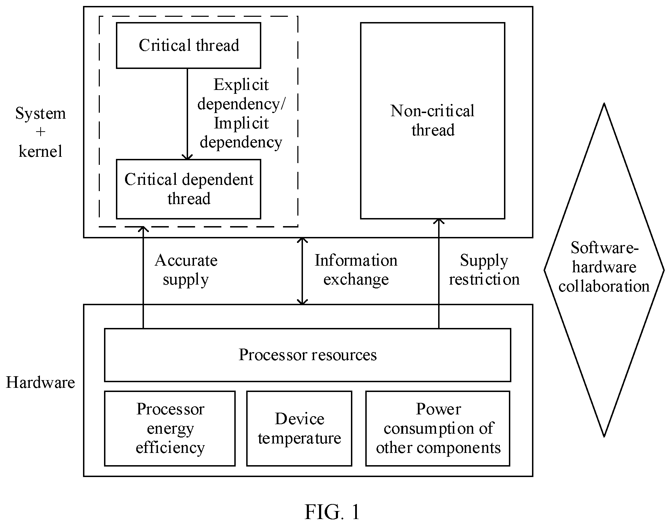

This application provides a processor resource management method. As shown in FIG. 1, an electronic device may manage a processor resource of the electronic device through information exchange (that is, software-hardware collaboration) between a software layer and a hardware layer. The software layer of the electronic device may include a system and a kernel of the electronic device. At the software layer of the electronic device, the electronic device may identify a critical thread, a critical dependent thread, and a non-critical thread. The critical dependent thread may include a thread directly or indirectly depended on by the critical thread. At the hardware layer of the electronic device, the electronic device may adjust a frequency of a processor based on factors such as processor energy efficiency, device temperature, and power consumption of other components (for example, a communication module, a camera, and a screen), to implement processor resource management. When the critical thread and the critical dependent thread are run, the electronic device may dynamically adjust the frequency of the processor based on task processing states of the critical thread and the critical dependent thread, to accurately supply processor resources to the critical thread and the critical dependent thread. The electronic device may perform supply restriction on the processor resource provided for the non-critical thread. In this way, running of the non-critical thread can be ensured, and blocking of the critical thread and the critical dependent thread due to excessive processor resource occupancy of the non-critical thread can be reduced when the critical thread and the critical dependent thread have a large task amount.

It can be learned that, in the method, the critical thread, the critical dependent thread, and the non-critical thread are accurately identified, to accurately allocate appropriate processor resources to different threads. The method can improve utilization of processor resources, and reduce an oversupply or undersupply of processor resources to threads. In this way, the electronic device can provide a user with smooth experience of using the electronic device, conserve power of the electronic device, and mitigate excessively rapid temperature rise of the electronic device. This achieves a balance between smooth device performance and requirements of long battery endurance and rapid cooling.

For ease of understanding, some concepts in this application are described herein.

**Thread**: The thread is a smallest unit that can be operated and scheduled by an operating system. The thread is an internal execution unit of a process. One thread can be a control flow in a single sequence in a process. The process is an instance of a running program in the operating system, is responsible for resource allocation and scheduling, and has independent address space and other auxiliary data. One process may include a plurality of threads, and the plurality of threads may share resources (for example, memory resources and file descriptors) of the same process.

A life cycle of the thread may include a creation state, a running state, a ready state, a blocked state, and an end state. The creation state may indicate a state in which the thread is being created. The running state may indicate a running state in which the thread occupies a central processing unit (central processing unit, CPU). The ready state may indicate that the thread is currently ready to run, but a specific running moment depends on when a scheduler schedules the thread. For example, when the current CPU is occupied by another process, the thread may be in a ready state to wait for the scheduler to invoke. The blocked state may indicate that the thread is waiting for a target event to occur (for example, waiting for a to-be-accessed resource to be released by another thread), temporarily stops running, and actively gives up a right to use the CPU. The end state may indicate a state in which the thread ends running.

**Critical thread**: The critical thread may indicate a thread that greatly affects user perception of running smoothness of the electronic device. If the critical thread is blocked for a long time, the user obviously perceives that running of the electronic device freezes and user interaction is not smooth. In some embodiments, the critical thread may include but is not limited to a user interface (user interface, UI) thread, a render service (render service, RS) thread, an audio (audio) playing thread, and a main thread of a foreground application. The UI thread may be responsible for processing interaction with a user interface and determine specific content displayed on the user interface. The RS thread may be used to render the user interface. If the UI thread and the RS thread are blocked for a long time, the electronic device may respond slowly to user operations or lose a frame, or an interface of the electronic device may be frozen, affecting user experience. The RS thread may also be referred to as a graphics thread. The audio playing thread may be used to implement audio playing. If the audio playing thread is blocked for a long time, audio playing may be frozen on the electronic device. The main thread of the application is a start point of the application and is a thread created when the application is started. The main thread of the application may be used to perform an initialization operation of the application, including allocating a resource, setting an environment, and the like. The main thread of the application may create one or more sub-threads. If the main thread of the foreground application is blocked for a long time, the foreground application may start slowly or running of the foreground application freezes after startup.

**Critical dependent thread**: The critical dependent thread may include a thread directly or indirectly depended on by the critical thread. For example, a thread 1 is a critical thread. The thread 1 depends on a thread 2. The thread 2 depends on a thread 3. In this case, both the thread 2 and the thread 3 are critical dependent threads. The thread 2 is a thread directly depended on by the thread 1. The thread 3 is a thread indirectly depended on by the thread 1. An accurate supply of a processor resource by the electronic device to the critical dependent thread can effectively reduce blocking of the critical thread and improve smoothness of interaction between the electronic device and the user.

**Non-critical thread**: The non-critical thread may be a thread other than the critical thread and the critical dependent thread. Generally, delayed running of the non-critical thread of the electronic device does not affect user perception of running smoothness of the electronic device. For example, the non-critical thread may include a background data downloading thread. Slow running of the background data download thread does not affect interaction between the user and the foreground application. When processor resources are limited, the electronic device restricts a processor resource provided for the non-critical thread, to preferentially ensure fast running of the critical thread and the critical dependent thread, and improve smoothness of interaction between the electronic device and the user.

**Dependency relationship**: The dependency relationship between two threads can indicate that running of one of the two threads depends on the other thread to release a shared resource, return a running result, send an event notification, or the like. For example, the thread 1 depends on the thread 2. The thread 2 may be referred to as the dependent thread of the thread 1. The thread 1 can enter the ready state only after the thread 2 releases a shared resource to be accessed by the thread 1, the thread 2 returns a running result required by the thread 1 to the thread 1, or the thread 2 sends a corresponding event notification to the thread 1. When the thread 2 is running, the thread 1 is blocked. If the thread 2 cannot run in time due to not high enough priority or inappropriate processor resource allocation, the thread 1 is forced to wait and may be blocked for a long time.

The dependency relationship may include explicit dependency and implicit dependency. The explicit dependency may indicate a dependency relationship with a direct invocation relationship. For example, the thread 1 invokes the thread 2 during running and waits for the thread 2 to return the running result. After the thread 2 runs and obtains the running result required by the thread 1, the thread 2 may wake up the thread 1, and send the corresponding running result to the thread 1. The thread 1 may continue to run based on the running result of the thread 2. In the process, the thread 1 depends on the thread 2, and the dependency relationship between the thread 1 and the thread 2 may be referred to as the explicit dependency. The implicit dependency may indicate a dependency relationship without a direct invocation relationship. For example, the thread 1 needs to access a resource A during running. Currently, the resource A is being accessed by a thread 3 (that is, the thread 3 holds a lock of the resource A). The thread 1 can access the resource A only after the thread 3 releases the lock of the resource A. Therefore, the thread 1 enters the blocked state during a period in which the thread 3 holds the lock of the resource A. After the thread 3 releases the lock of the resource A, the thread 1 may enter the ready state, and access the resource A after obtaining a right to use the CPU. In the process, the thread 1 depends on the thread 3, and the dependency relationship between the thread 1 and the thread 3 may be referred to as the implicit dependency.

**Wakeup relationship**: The wakeup relationship may include the dependency relationship and a relationship of two threads in which one thread does not have a dependency relationship with but wakes up the other thread. For example, when the thread 1 explicitly depends on the thread 2, the thread 1 and the thread 2 have the wakeup relationship. The thread 1 wakes up the thread 2 (that is, the thread 2 is a woken-up thread), and the thread 2 wakes up the thread 1 after running for a period of time (that is, the thread 1 is a woken-up thread). When the thread 1 implicitly depends on the thread 3, the thread 1 and the thread 3 have a wakeup relationship. The thread 1 may be equivalent to being woken up by the thread 3. When the thread 1 and a thread 4 do not have a dependency relationship, the thread 1 may wake up the thread 4 in the running process. The thread 1 and the thread 4 have a wakeup relationship. The thread 1 does not enter the blocked state due to running of the thread 4. The thread 1 and the thread 4 may run in parallel.

**Processor resource**: The processor resource may include computing power of the CPU. The computing power of the CPU may be described based on dhrystone million instructions executed per second (dhrystone million instructions executed per second, DMIPS). Computing power of the CPU=quantity of CPU cores*dominant frequency*DMPIS. The dominant frequency of the CPU may indicate an operating clock frequency of the CPU core. It can be seen that a higher CPU operating frequency indicates more computing resources provided by the CPU and smoother thread running. However, the more computing resources provided by the CPU indicates higher power consumption of the CPU. Adjusting a processor resource provided by the electronic device for a thread may include but is not limited to: adjusting a CPU time slice for the thread to occupy the CPU and adjusting a frequency of the CPU when the thread is running. The CPU time slice may indicate duration that the thread can run on the CPU at a time.

**Kernel**: The kernel is a main component of the operating system (operating system, OS), and is also a core interface between hardware of the electronic device and processes of the OS. The kernel can provide most basic functions of the OS, and is responsible for managing the processes of the system, a memory, device drivers, files, and network systems.

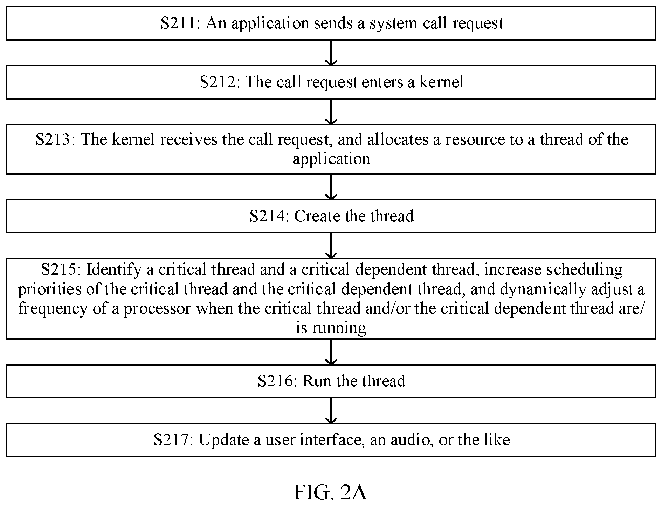

FIG. 2A is a flowchart of an example of a thread scheduling method according to this application.

S211: An application sends a system call request.

The application may be any application in the electronic device, for example, an instant messaging application, a short video application, or a shopping application.

A system call is an interface provided by an operating system for the application. The application obtains a service of the operating system based on the system call request. To ensure stability and security of the operating system and prevent the application from performing an illegal operation, when the application performs a resource-related operation (for example, storage allocation, a read/write operation, and file management), the application needs to submit a service request to the operating system in a system call manner, and the operating system performs the operation on behalf of the application. A process of the application may switch a running state from a user mode to a kernel mode based on the system call. After the system call is executed, the running state of the process is switched back from the kernel mode to the user mode.

S212: The call request enters a kernel.

S213: The kernel receives the call request, and allocates a resource to a thread of the application.

S214: Create the thread.

The application may create the thread based on the resource allocated to the thread, to execute a corresponding task (for example, a user interface update task or an audio update task).

S215: Identify a critical thread and a critical dependent thread, increase scheduling priorities of the critical thread and the critical dependent thread, and dynamically adjust a frequency of a processor when the critical thread and/or the critical dependent thread are/is running.

In some embodiments, the electronic device may determine whether the thread created in step S214 is a critical thread. The electronic device may store critical thread lists corresponding to different application scenarios. The critical thread lists in different application scenarios may be the same, partially different, or totally different. The electronic device may determine a current application scenario based on an application currently running on a foreground. For example, the application scenario may include a short video playing and switching scenario, a chat scenario of the instant messaging application, and a scenario of browsing a commodity in the shopping application. If the thread created in step S214 is in a critical thread list corresponding to a current application scenario, the electronic device may determine that the thread is a critical thread. Otherwise, the thread is not a critical thread.

If the thread created in step S214 is a critical thread, the electronic device may further identify a critical dependent thread of the critical thread.

If the thread created in step S214 is not a critical thread, the electronic device may detect whether the thread is a critical dependent thread.

A method for identifying the critical dependent thread is described in the following embodiment. Details are not described herein.

The electronic device may increase the scheduling priorities of the critical thread and the critical dependent thread. After the scheduling priorities are increased, the electronic device may preferentially run the critical thread and the critical dependent thread. Optionally, the electronic device may allocate longer CPU time slices to threads with higher priorities, so that the threads can be fast completed.

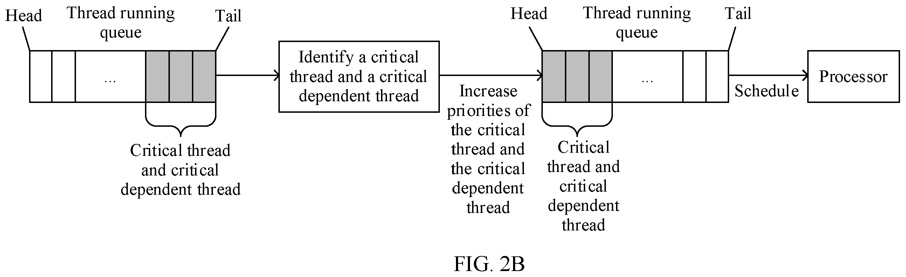

As shown in FIG. 2B, the scheduler in the electronic device may schedule threads according to an arranged sequence of the threads in a thread running queue, and allocate a use right of a processor to a currently scheduled thread. Before the electronic device identifies a critical thread and a critical dependent thread, the critical thread and the critical dependent thread are at a tail of the thread running queue. After identifying the critical thread and the critical dependent thread, the electronic device may increase priorities of the critical thread and the critical dependent thread. For example, the electronic device may move the critical thread and the critical dependent thread from the tail of the thread running queue to a head of the thread running queue. In this way, the scheduler in the electronic device can preferentially schedule the critical thread and the critical dependent thread.

In some embodiments, the electronic device may further dynamically adjust a frequency of the processor when the critical thread and/or the critical dependent thread are/is in a running state.

For example, when the critical thread or the critical dependent thread has a large to-be-executed task amount, the electronic device may increase the frequency of the processor, so that the critical thread or the critical dependent thread can complete target tasks in a specific time period. This can reduce freezing that occurs because the critical thread and the critical dependent thread cannot complete the target tasks in time due to an undersupply of processor resources to the critical thread and the critical dependent thread.

For another example, when the critical thread or the critical dependent thread has a light to-be-executed task amount, or has completed target tasks but still needs to wait to execute a subsequent task, the electronic device may reduce the frequency of the processor, to reduce power consumption of the electronic device. This can reduce a waste of processor resources caused by an oversupply of processor resources to the critical thread and the critical dependent thread, thereby helping improve battery endurance of the electronic device and reduce device overheating.

A method for dynamically adjusting the frequency of the processor by the electronic device is described in the following embodiment. Details are not described herein.

It should be noted that increasing the scheduling priorities of the critical thread and the critical dependent thread is optional. In other words, the electronic device may alternatively dynamically adjust the frequency of the processor only when the critical thread and/or the critical dependent thread are/is running.

In some embodiments, if the thread created in step S214 is a non-critical thread, the electronic device may perform supply restriction on the processor resource provided for the non-critical thread when running the non-critical thread. A specific method for restricting the supply is described in the following embodiment. Details are not described herein.

S216: Run the thread.

S217: Update a user interface, an audio, or the like.

The task executed during running of the thread may include a user interface update or an audio update. A type of the task is not limited in this embodiment of this application.

It can be learned from the method that in the method, the critical thread, the critical dependent thread, and the non-critical thread are accurately identified, to increase the priorities of the critical thread and the critical dependent thread, and accurately allocate appropriate processor resources to different threads. The method can improve utilization of processor resources, and reduce an oversupply or undersupply of processor resources to threads. In this way, the electronic device can provide a user with smooth experience of using the electronic device, conserve power of the electronic device, and mitigate excessively rapid temperature rise of the electronic device. This achieves a balance between smooth device performance and requirements of long battery endurance and rapid cooling.

The following describes a method for identifying a critical dependent thread according to an embodiment of this application.

In some embodiments, the electronic device may identify the critical dependent thread based on an offline mode. The offline mode may indicate that the critical dependent thread is identified on a server side based on critical thread information and historical application thread wakeup relationship data. A server may send information about the critical dependent thread to the electronic device (for example, a mobile phone, a tablet computer, or a smartwatch) on a user side. The electronic device on the user side may identify, based on the information about the critical dependent thread, whether a currently running thread is the critical dependent thread, and then determine a corresponding processor resource allocation strategy.

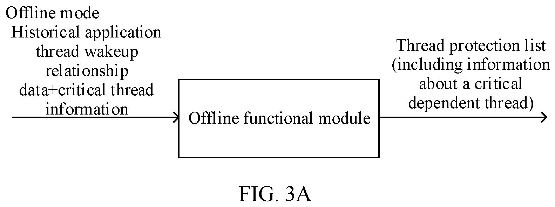

**FIG. 3A** **and** **FIG. 3B** **are a diagram of an example of identifying a critical dependent thread according to this application.**

As shown in FIG. 3A and FIG. 3B, an offline functional module may be a module deployed in a server 200. The offline functional module may receive historical application thread wakeup relationship data and critical thread information and output a thread protection list. The thread protection list may include information about a critical dependent thread.

The historical application thread wakeup relationship data may include wakeup relationships between various threads collected based on big data statistics. In some embodiments, when an application is running in the electronic device on a user side, an event tracer in the electronic device may trace a running state of a thread and generate a trace file. The event tracer may be a function trace module (which may be referred to as an ftrace module for short). The trace file may include data such as thread running time and a dependency relationship between threads. The historical application thread wakeup relationship data may be data included in the trace file.

The critical thread information may include names of critical threads corresponding to different application scenarios. The offline functional module may identify critical dependent threads of the critical threads in different application scenarios.

The information about the critical dependent thread in the thread protection list may include an application scenario to which the critical dependent thread belongs and a name of the critical dependent thread.

As shown in FIG. 3B, the offline functional module may include a wakeup relationship analysis module, a statistics integration module, and a selecting module.

The wakeup relationship analysis module may be configured to build a wakeup relationship tree based on the historical wakeup relationship data of the application thread. The wakeup relationship tree may be built based on a directed acyclic graph (directed acyclic graph, DAG). Then, the wakeup relationship analysis module may reversely infer a critical path in the wakeup relationship tree based on the critical thread information, to obtain critical path data.

**FIG. 3C** **is a diagram of an example of a wakeup relationship tree.**

As shown in FIG. 3C, a wakeup relationship analysis module may build, based on historical wakeup relationship data of an application thread, the wakeup relationship tree including threads x1 to x7. A black circle may indicate a critical thread. A white circle may indicate a thread. Two circles connected by a solid line may indicate that threads represented by the two circles have a dependency relationship. Two circles connected by a dashed line may indicate that threads represented by the two circles have a wakeup relationship.

As shown in FIG. 3C, the thread x1 wakes up the thread x2 and the thread x3, the thread x2 wakes up the thread x4 and the thread x6, the thread x3 wakes up the thread x5, the thread x4 wakes up the thread x1, and the thread x5 wakes up the thread x7. The wakeup relationship analysis module may determine a critical path in the wakeup relationship data through reverse inference. The critical path may indicate a path whose start point and end point on a wakeup path are a same critical thread. For example, the thread x1 is a critical thread. With the thread x1 as a start point, the wakeup relationship analysis module may search the wakeup relationship tree for a thread that wakes up the thread x1, namely, the thread x4. Further, with the thread x4 as a start point, the wakeup relationship analysis module may search the wakeup relationship tree for a thread that wakes up the thread x4, namely, the thread x2. Further, with the thread x2 as a start point, the wakeup relationship analysis module may search the wakeup relationship tree for a thread that wakes up the thread x2, namely, the thread x1. In this way, the wakeup relationship analysis module may determine that the critical path is the thread x1-the thread x2-the thread x4-the thread x1. Threads (namely, the thread x2 and the thread x4) other than the critical thread on the critical path are critical dependent threads.

The wakeup relationship analysis module may send wakeup path data and critical path data to a statistics integration module. The wakeup path data may include a quantity of occurrences of each wakeup relationship in the wakeup relationship tree, a priority of each thread in all the threads in the wakeup relationship tree, and running duration of a thread in the wakeup relationship tree. The critical path data may include a dependency relationship on the critical path and a priority of a thread on the critical path in all the threads on the critical path.

The statistics integration module may perform statistics integration on the wakeup path data and the critical path data, to generate a critical dependent thread list. The critical dependent thread list may include names of critical dependent threads. Optionally, the critical dependent thread list may further include one or more pieces of information such as a frequency of occurrences of a critical dependent thread on the critical path, a quantity of occurrences of a critical dependent thread in a wakeup relationship, a priority of a critical dependent thread on the critical path, a priority of a critical dependent thread in all the threads in the wakeup relationship tree, and running duration of a critical dependent thread.

For the critical dependent thread list, refer to the following Table 1.

**Table 1**

| Name of a critical dependent thread | Frequency of occurrences on the critical path | Quantity of occurrences in a wakeup relationship | Priority on the critical path | Overall priority | Running duration |
|---|---|---|---|---|---|
| Thread x2 | 434 | 2193 | 31 | 30 | 121 |
| Thread x4 | 344 | 353 | 30 | 30 | 77 |
| ... | ... | ... | ... | ... | ... |

The overall priority in Table 1 may indicate a priority of a critical dependent thread in all the threads in the wakeup relationship tree. Table 1 merely describes an example of this application, and should not constitute any limitation on this application.

In some embodiments, the statistics integration module may send the critical dependent thread list to the selecting module. The selecting module may select a part of critical dependent threads from all critical dependent threads based on one or more pieces of information such as a frequency of occurrences of a critical dependent thread on the critical path, a quantity of occurrences of a critical dependent thread in a wakeup relationship, a priority of a critical dependent thread on the critical path, an overall priority of a critical dependent thread, and running duration of a critical dependent thread, and generate a thread protection list.

The server 200 may send the thread protection list to an electronic device 100. The electronic device 100 may store the thread protection list, and determine, based on the thread protection list, whether a thread run by the electronic device 100 is a critical thread or a critical dependent thread. The electronic device 100 may be the electronic device on a user side. In some embodiments, the server 200 may send the thread protection list to the electronic device 100 on an occasion, for example, when a system version of the electronic device 100 is upgraded. Optionally, the server 200 may periodically or aperiodically update the thread protection list, and send an updated thread protection list to the electronic device 100. This can improve accuracy of identifying a critical thread and a critical dependent thread by the electronic device 100.

Alternatively, the server 200 may directly send information about all critical dependent threads to the electronic device 100. In other words, the server 200 may select a critical dependent thread without using the selecting module.

As shown in FIG. 3B, the electronic device 100 may include an application, a kernel, and a memory. When receiving the thread protection list from the server 200, the electronic device 100 may store the thread protection list in the memory. The memory may further store critical thread information. The kernel may include the event tracer and a scheduler. The application may initiate a system call request to the kernel. For the system call request, refer to the description of step S211 shown in FIG. 2A. The event tracer may trace and obtain running information of a corresponding thread based on the system call request. The scheduler may be configured to obtain the critical thread information and the thread protection list, and determine, based on the thread protection list, whether to adjust a priority of a thread.

Optionally, the electronic device 100 may further include an application scenario detection module. The application scenario detection module may detect a current application scenario of the electronic device 100 based on information such as an application currently running in a foreground of the electronic device and a received user operation. The application scenario detection module may determine, based on the critical thread information, the thread protection list, and the current application scenario of the electronic device 100, a critical thread and a critical dependent thread that correspond to the current application scenario. The application scenario detection module may send the critical thread and the critical dependent thread that correspond to the current application scenario to the scheduler. Then, the scheduler may increase priorities of the critical thread and the critical dependent thread corresponding to the current application scenario.

In some embodiments, the electronic device may identify the critical dependent thread based on an online mode. The online mode may indicate that the electronic device on a user side collects and records a wakeup relationship when the electronic device runs a thread, and identifies, based on critical thread information and the wakeup relationship recorded by the electronic device, whether a currently running thread is a critical dependent thread. As a quantity of threads run by the electronic device increases, a quantity of wakeup relationships recorded by the electronic device also increases. The electronic device may periodically or aperiodically update critical dependent threads identified by the electronic device (for example, determine a thread that was previously a non-critical thread as a critical dependent thread, or determine a previously determined critical dependent thread as a non-critical thread).

**FIG. 4A** **and** **FIG. 4B** **are another diagram of an example of identifying a critical dependent thread according to this application.**

As shown in FIG. 4A, the electronic device 100 may include an application, a kernel, and a memory. The kernel may include an event tracer, a scheduler, and an online functional module. The memory may store critical thread information and a thread protection list.

In the electronic device 100, an application may initiate a system call request to the kernel. The event tracer may trace and obtain running information of a corresponding thread based on the system call request. The event tracer may determine, based on the running information of the thread, a thread wakeup event corresponding to the system call request of the application. The event tracer may send the thread wakeup event to the online functional module. The online functional module may obtain the critical thread information from the memory, and determine, based on the thread wakeup event and the critical thread information, whether a woken-up thread is a critical dependent thread. If the currently woken-up thread is a critical dependent thread, the online functional module may indicate the scheduler to increase a priority of the currently woken-up thread.

Optionally, the electronic device 100 may further include an application scenario detection module. The application scenario detection module may detect a current application scenario of the electronic device 100 based on information such as an application currently running in a foreground of the electronic device and a received user operation. The application scenario detection module may determine, based on the critical thread information, a critical thread corresponding to the current application scenario. The application scenario detection module may send the critical thread corresponding to the current application scenario to the online functional module. The online functional module may identify a critical dependent thread corresponding to the current scenario based on the thread wakeup event and the critical thread corresponding to the current application scenario.

In some embodiments, the online functional module may update the thread protection list based on a result of identifying a critical thread or a critical dependent thread from a plurality of threads in a period of time. The scheduler may adjust a priority of a corresponding thread based on the critical dependent thread in the thread protection list. In addition, the scheduler may further obtain the critical thread information, and increase a priority of the critical thread.

The online functional module may identify whether a thread is a critical thread or a critical dependent thread according to a method shown in FIG. 4B.

S411: Receive a thread wakeup event, where the thread wakeup event corresponds to a wakeup relationship 1.

The wakeup relationship 1 may include a wakeup thread and a woken-up thread. For example, the wakeup relationship 1 may be that a thread x1 (namely, the wakeup thread) wakes up a thread x2 (namely, the woken-up thread). Alternatively, the wakeup relationship 1 may be that a thread x2 (that is, the wakeup thread) wakes up a thread x4 (that is, the woken-up thread). The wakeup relationship 1 is not limited in this embodiment of this application.

S412: Detect whether a wakeup relationship tree is being created currently.

If a wakeup relationship tree is being created currently, the online functional module may perform the following step S413.

If no wakeup relationship tree is being created currently, the online functional module may perform the following step S414.

S413: Update the wakeup relationship tree based on the wakeup relationship 1.

In some embodiments, if the wakeup relationship 1 does not exist in the wakeup relationship tree, and the wakeup thread in the wakeup relationship 1 is a thread existing in the wakeup relationship tree, the online functional module may add the wakeup relationship 1 to the wakeup relationship tree, and perform the following step S415.

If the wakeup relationship 1 already exists in the wakeup relationship tree, the wakeup relationship tree does not need to be updated.

If the wakeup thread in the wakeup relationship 1 is not an existing thread in the wakeup relationship tree, the online functional module may not need to add the wakeup relationship 1 to the wakeup relationship tree. The online functional module may not need to detect whether the wakeup relationship 1 is on a critical path (that is, the subsequent steps S415 to S419 do not need to be performed).

S414: Create a wakeup relationship tree based on the wakeup relationship 1.

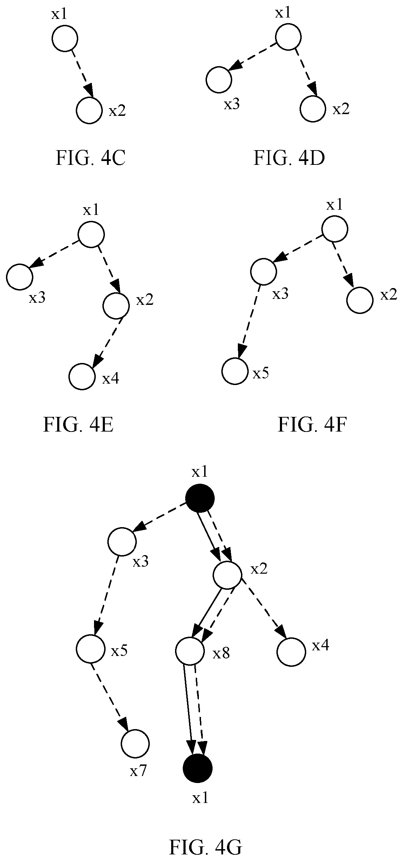

For example, if the wakeup relationship 1 is that the thread x1 wakes up the thread x2, and the online functional module detects that no wakeup relationship tree is being created currently, the online functional module may create a wakeup relationship tree shown in FIG. 4C. As shown in FIG. 4C, a circle representing the thread x1 points to a circle representing the thread x2, to indicate that the thread x1 wakes up the thread x2.

In some embodiments, if the wakeup thread in the wakeup relationship 1 is a critical thread, the online functional module may create the wakeup relationship tree with the critical thread as a start point. If the wakeup thread in the wakeup relationship 1 is not a critical thread, the online functional module may not need to create the wakeup relationship tree. In other words, when no wakeup relationship tree is being created currently, and the wakeup thread in the wakeup relationship 1 is not a critical thread, the online functional module may not need to detect whether the wakeup relationship 1 is on the critical path.

The wakeup relationship tree may be stored in the memory in a data structure of a tree in a running state. The online functional module may perform operations such as adding, deleting, modifying, and querying on the wakeup relationship tree.

S415: Detect whether the wakeup relationship tree ends.

The online functional module may detect, based on the wakeup relationship 1, whether the wakeup relationship tree ends. If the wakeup thread in the wakeup relationship 1 is an existing thread in the wakeup relationship tree, and the woken-up thread in the wakeup relationship 1 is a critical thread in the wakeup relationship tree, the wakeup relationship tree ends. Otherwise, the wakeup relationship tree does not end.

If the wakeup relationship tree does not end, the online functional module may perform the following step S416.

If the wakeup relationship tree ends, the online functional module may perform the following step S418.

S416: Update historical transition matrix information and read the historical transition matrix information, where the historical transition matrix information includes a historical wakeup transition matrix and a critical path wakeup transition matrix, the historical wakeup transition matrix includes a historical quantity of occurrences of a wakeup relationship, and the critical path wakeup transition matrix includes a historical quantity of occurrences of the wakeup relationship on the critical path.

For details about the historical wakeup transition matrix, refer to the following Table 2.

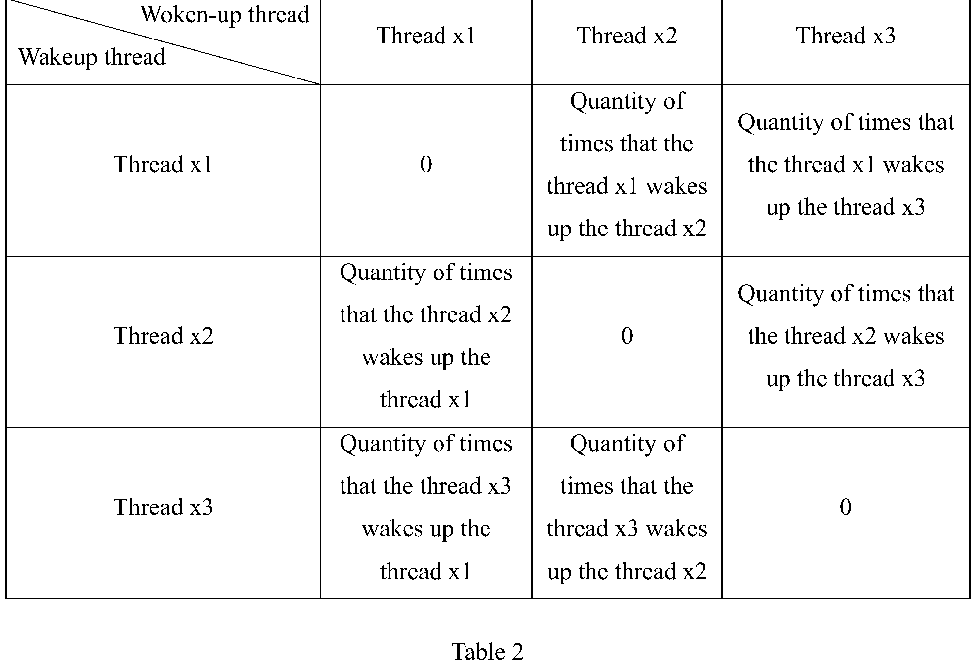

For example, threads on the critical path include a thread x1, a thread x2, and a thread x4. For details about the critical path wakeup transition matrix, refer to the following Table 3.

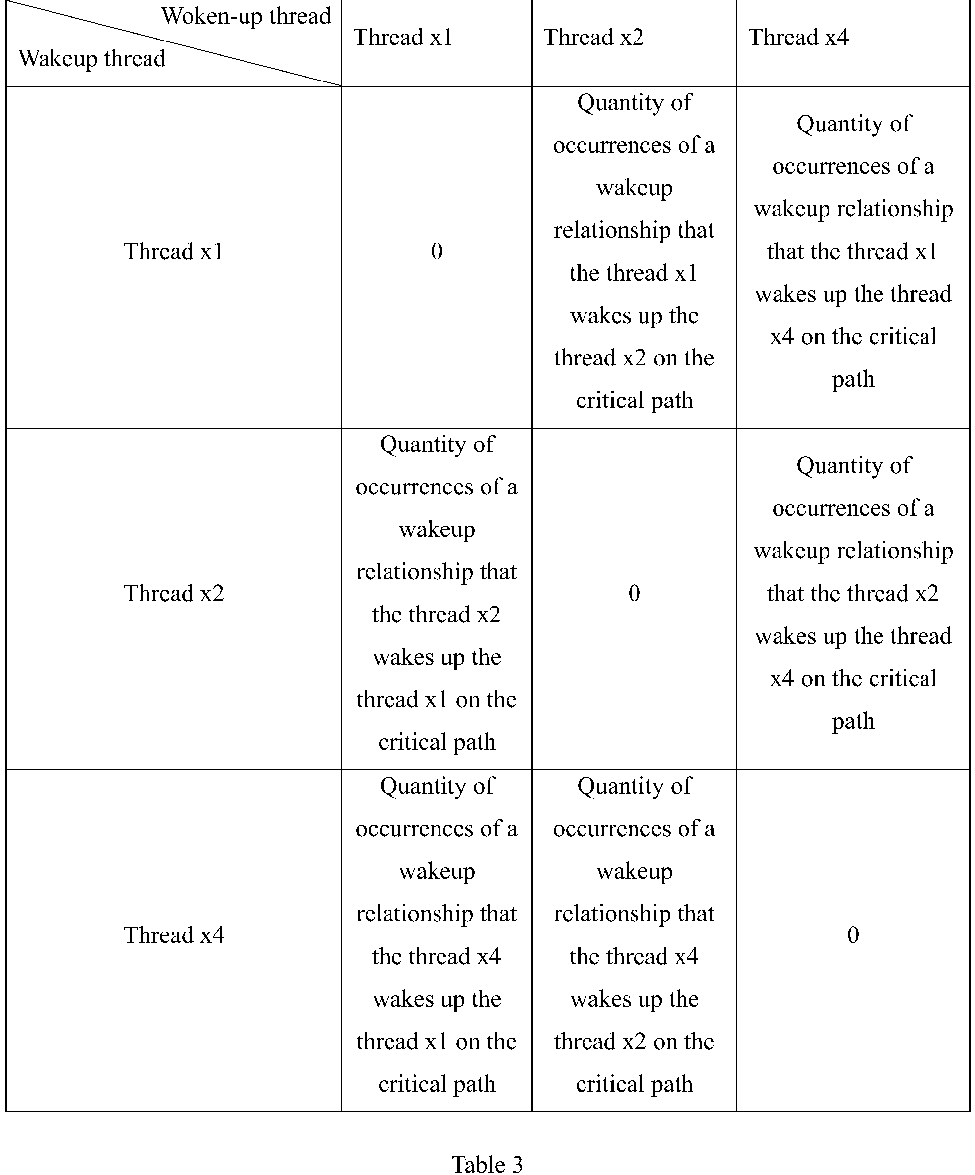

If the wakeup relationship 1 already exists in the current wakeup relationship tree, the online functional module may increase a quantity of occurrences of the wakeup relationship 1 by 1 in the historical wakeup transition matrix.

For example, if the wakeup relationship 1 is that the thread x1 wakes up the thread x2, and the online functional module detects that a wakeup relationship tree shown in FIG. 4D already exists, the online functional module may not need to adjust the wakeup relationship tree, but increase a quantity of occurrences of the wakeup relationship that the thread x1 wakes up the thread x2 by 1 in the historical wakeup transition matrix.

For another example, if the wakeup relationship 1 is that the thread x2 wakes up the thread x4, and the online functional module detects that the wakeup relationship tree shown in FIG. 4D already exists, the online functional module may update the wakeup relationship tree shown in FIG. 4D, to generate a wakeup relationship tree shown in FIG. 4E. As shown in FIG. 4E, the online functional module adds, based on the wakeup relationship tree shown in FIG. 4D, a branch pointing from the thread x2 to the thread x4. If a row and a column corresponding to the thread x4 already exist in the historical wakeup transition matrix, the online functional module may not need to update the historical wakeup transition matrix. If the row and the column corresponding to the thread x4 do not exist in the historical wakeup transition matrix, the online functional module may add the row and the column corresponding to the thread x4 to the historical wakeup transition matrix.

If the wakeup relationship 1 is on the existing critical path, the online functional module may increase a quantity of occurrences of the wakeup relationship 1 by 1 in the critical path wakeup transition matrix. The critical path may be a critical path determined by the online functional module based on a previous wakeup relationship and previous critical thread information.

For example, if the wakeup relationship 1 is that the thread x2 wakes up the thread x4, and the existing critical path is the thread x1-the thread x2-the thread x4-the thread x1, the online functional module may increase the quantity of occurrences of the wakeup relationship 1 by 1 in the critical path wakeup transition matrix.

For another example, if the wakeup relationship 1 is that the thread x3 wakes up a thread x5, and the online functional module detects that the wakeup relationship tree shown in FIG. 4D already exists, the online functional module may update the wakeup relationship tree shown in FIG. 4D, to generate a wakeup relationship tree shown in FIG. 4F. As shown in FIG. 4F, the online functional module adds, based on the wakeup relationship tree shown in FIG. 4D, a branch pointing from the thread x3 to the thread x5. The online functional module may update the historical wakeup transition matrix based on the description in the foregoing embodiment. If the critical path is the thread x1-the thread x2-the thread x4-the thread x1, the wakeup relationship 1 is not in the existing critical path. Therefore, the online functional module may not need to update the critical path wakeup transition matrix.

S417: Detect, based on the historical transition matrix information, whether the wakeup relationship 1 is on the critical path.

In some embodiments, the online functional module may detect, based on the historical wakeup transition matrix and the critical path wakeup transition matrix, a historical probability that the wakeup relationship 1 is on the critical path. The probability that the wakeup relationship 1 is on the critical path may be predicted by using a Markov model probability prediction method. Alternatively, the probability that the wakeup relationship 1 is on the critical path may be the quantity of occurrences of the wakeup relationship 1 on the critical path in the critical path wakeup transition matrix divided by the quantity of occurrences of the wakeup relationship 1 in the historical wakeup transition matrix. The online functional module may detect whether the historical probability that the wakeup relationship 1 is on the critical path is higher than a preset probability threshold and whether the quantity of occurrences of the wakeup relationship 1 in the historical wakeup transition matrix is greater than a preset quantity threshold. For example, a value of the probability threshold may be 0.7, 0.8, or the like. A value of the quantity threshold may be 10, 20, or the like. Values of the probability threshold and the quantity threshold are not limited in this embodiment of this application.

If the historical probability that the wakeup relationship 1 is on the critical path is higher than the probability threshold and the quantity of occurrences of the wakeup relationship 1 in the historical wakeup transition matrix is greater than the quantity threshold, the online functional module may determine that the wakeup relationship 1 is on the critical path. In other words, a thread in the wakeup relationship 1 is a critical thread or a critical dependent thread.

If the historical probability that the wakeup relationship 1 is on the critical path is lower than or equal to the probability threshold, or the quantity of occurrences of the wakeup relationship 1 in the historical wakeup transition matrix is less than or equal to the quantity threshold, the online functional module may determine that the wakeup relationship 1 is not on the critical path. In other words, the woken-up thread in the wakeup relationship 1 is not a critical dependent thread.

It may be understood that the currently built wakeup relationship tree does not end, and the online functional module temporarily cannot reversely infer the critical path of the currently built wakeup relationship tree. The critical path may change (for example, a thread depended on by the critical thread changes). Therefore, the wakeup relationship 1 may be on the critical path previously but not on the critical path currently, or may not be on the critical path previously but be on the critical path currently. The online functional module may predict, based on the historical transition matrix information, whether the wakeup relationship 1 is on the critical path of the currently built wakeup relationship tree. The historical probability that the wakeup relationship 1 is on the critical path reflects a probability that the wakeup relationship 1 is on a previously determined critical path. A higher historical probability that the wakeup relationship 1 is on the critical path indicates a higher probability that the wakeup relationship 1 is on the critical path of the currently built wakeup relationship tree. A greater quantity of historical occurrences of the wakeup relationship 1 may indicate that a thread in the wakeup relationship 1 is frequently woken up, and may indicate a higher probability that the thread in the wakeup relationship 1 is a critical dependent thread.

If it is determined that the wakeup relationship 1 is on the critical path, the online functional module may indicate the scheduler to increase a priority of the woken-up thread in the wakeup relationship 1.

S418: Reversely infer a critical path based on the wakeup relationship tree and the critical thread information, and update historical transition matrix information.

For example, when the wakeup relationship tree is determined to end in step S415, the online functional module builds a wakeup relationship tree shown in FIG. 4G. The online functional module reversely infers the critical path in the wakeup relationship tree. For a method for reversely inferring the critical path, refer to the description in the foregoing embodiment. An example in which the thread x1 is a critical thread is still used for description herein. According to the wakeup relationship tree shown in FIG. 4G, the online functional module may determine that the critical path is the thread x1-the thread x2-a thread x8-the thread x1.

If a previous critical path determined by the online functional module is the thread x1-the thread x2-the thread x4-the thread x1, the online functional module may update the critical path to the critical path shown in FIG. 4G (that is, the thread x1-the thread x2-the thread x8-the thread x1). It can be learned that the wakeup relationship that the thread x2 wakes up the thread x4 is on the previous critical path, but is not on the critical path in this running process of the critical thread x1.

When the critical path is updated to the thread x1-the thread x2-the thread x8-the thread x1, the online functional module may update the critical path wakeup transition matrix. The online functional module may add a row and a column corresponding to the thread x8 to the critical path wakeup transition matrix. In the critical path wakeup transition matrix, the row and the column corresponding to the thread x4 may still be retained.

S419: Delete the wakeup relationship tree.

When the wakeup relationship tree ends, the online functional module may delete the wakeup relationship tree. When a next wakeup relationship event is received, the online functional module may create a new wakeup relationship tree.

In some embodiments, based on updated historical transition matrix information in step S418, the online functional module may update the thread protection list. The online functional module may calculate historical probabilities that wakeup relationships is on the critical path in the critical path wakeup transition matrix, and quantities of occurrences of the wakeup relationships in the historical wakeup transition matrix. A historical probability that a wakeup relationship is on a critical path may be: a quantity of occurrences of the wakeup relationship on the critical path in a critical path wakeup transition matrix divided by a quantity of occurrences of the wakeup relationship in a historical wakeup transition matrix.

If a historical probability that a wakeup relationship is on a critical path is higher than the probability threshold, and a quantity of occurrences of the wakeup relationship in a historical wakeup transition matrix is greater than the quantity threshold, the online functional module may add, to the thread protection list, a thread other than a critical thread in the wakeup relationship as a critical dependent thread.

If a historical probability that a wakeup relationship corresponding to a thread that was previously added to the thread protection list is on the critical path lower than or equal to the probability threshold, or if a quantity of occurrences of the wakeup relationship corresponding to the thread in the historical wakeup transition matrix is less than or equal to the quantity threshold, the online functional module may remove the thread from the thread protection list.

An occasion on which the online functional module updates the thread protection list is not limited in this embodiment of this application. For example, the online functional module may periodically update the thread protection list. Alternatively, the online functional module may update the thread protection list each time after building a wakeup relationship tree and reversely inferring a critical path.

It can be learned that threads directly and indirectly depended on by a critical thread can be accurately identified in both the offline mode and the online mode. This can reduce blocking of a critical thread for a long time caused by blocking of a thread indirectly depended on by the critical thread when the thread indirectly depended on by the critical thread fails to be identified. In the offline mode, the electronic device 100 may directly use the thread protection list sent by a server 200 to identify a critical dependent thread. This can improve a speed of identifying the critical dependent thread. In the online mode, the electronic device 100 may obtain a latest wakeup relationship between threads in real time based on thread running, to adaptively update a critical dependent thread. In addition, as the electronic device 100 is used for a longer time, the electronic device 100 can more accurately identify a critical dependent thread.

In some embodiments, the electronic device 100 may store general critical thread information. The general critical thread information may include names of threads that are used as critical threads in a plurality of application scenarios. For example, the general critical thread information may include an RS thread. When it is detected that a critical thread in the general critical thread information is running, the electronic device 100 may identify a critical dependent thread of the critical thread in the offline mode and/or the online mode. Then, the electronic device 100 may increase a running priority of the critical dependent thread.

In some embodiments, critical threads corresponding to different application scenarios may be different. The electronic device 100 may store critical thread information in different application scenarios. The electronic device may determine a critical thread based on a current application scenario, and then identify a critical dependent thread of the critical thread in the current application scenario. For a method for identifying an application scenario, refer to the descriptions in the foregoing embodiments.

For example, when an application 1 runs in the foreground of the electronic device 100, the electronic device 100 may identify that a current application scenario is an application scenario 1. Critical thread information associated with the application scenario 1 may include the RS thread and a UI thread of the application 1. The UI thread of the application 1 may be used to determine display content included in a user interface of the application 1. The electronic device 100 may identify a critical dependent thread of the UI thread of the application 1, and increase a running priority of the critical dependent thread of the UI thread of the application 1. When the application running in the foreground of the electronic device 100 is switched from the application 1 to the application 2, the electronic device 100 may identify that the current application scenario changes to an application scenario 2. Critical thread information in the application scenario 2 may include the RS thread and a UI thread of the application 2. The UI thread of the application 2 may be used to determine display content included in a user interface of the application 2. The electronic device 100 may identify a critical dependent thread of the UI thread of the application 2, and increase a running priority of the critical dependent thread of the UI thread of the application 2. After the application running in the foreground is switched from the application 1 to the application 2, the application 1 changes to an application running in a background. The electronic device 100 may lower a running priority of the critical dependent thread of the UI thread of the application 1. In addition, because the RS thread is a critical thread in both the application scenario 1 and the application scenario 2, the electronic device 100 may set a critical dependent thread of the RS thread to a high priority in both the application scenario 1 and the application scenario 2.

In some embodiments, the electronic device may identify the critical dependent thread by combining the offline mode and the online mode. The electronic device 100 may store the thread protection list sent by the server 200 shown in FIG. 3B. The online functional module in the electronic device 100 may update the thread protection list based on the thread protection list sent by the server 200 and an actual critical path in a thread running process of the electronic device 100.

In some embodiments, the electronic device 100 may store a thread priority configuration file. A format of the thread priority configuration file is not limited in this embodiment of this application. For example, the thread priority configuration file may be an extensible markup language (extensible markup language, XML) file.

The electronic device 100 may determine the thread priority configuration file based on the thread protection list shown in FIG. 3B or FIG. 4A. The thread priority configuration file may include a priority configuration strategy for the critical thread and the critical dependent thread. The scheduler may increase priorities of the critical thread and the critical dependent thread based on the thread priority configuration file. In this way, processor resources can be preferentially provided to the critical thread and the critical dependent thread.

When the thread protection list is updated, the thread priority configuration file may be updated accordingly.

In some embodiments, the scheduler in the electronic device 100 creates a related thread group (related thread group, RTG). The RTG provides a capability of scheduling and optimizing a group of threads, supports separate load statistics and prediction on threads in the RTG, and sets a function of a prioritized CPU cluster (cluster), thereby selecting an optimal CPU for running the threads in the RTG and selecting an appropriate CPU frequency for running based on a group load. The scheduler in the electronic device 100 may add the critical thread and the critical dependent thread to the RTG, and ensure a supply of processor resources to the critical thread and the critical dependent thread based on an RTG mechanism. The scheduler may update the threads in the RTG based on an update of the protected thread list. An RTG implementation is not limited in this embodiment of this application.

The method for increasing the priorities of the critical thread and the critical dependent thread based on the thread priority configuration file or the RTG is merely an example in this application. The electronic device 100 may further use another method to increase the priorities of the critical thread and the critical dependent thread. This is not limited in this embodiment of this application.

In some embodiments, the electronic device may group threads. The electronic device may use different processor resource management strategies for different thread groups, to improve processor resource supply accuracy and implement a balance between smooth device performance and requirements of long battery endurance and rapid cooling.

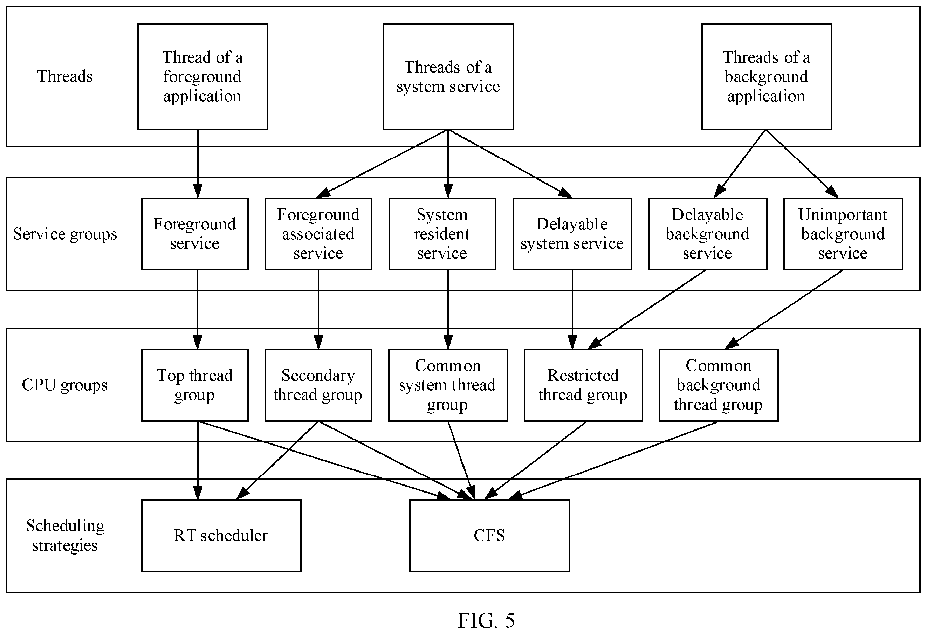

**FIG. 5** **is a diagram of an example of thread grouping according to this application.**

As shown in FIG. 5, threads in the electronic device may include a thread of a foreground application, threads of a system service, and threads of a background application. The foreground application may include an application running in a foreground of the electronic device. The electronic device may display a user interface of the foreground application on a screen, or play an audio of the foreground application. The foreground application can receive a user operation and interact with a user. The system service may include a program that executes a specified system function, to support running of another application. The system service usually runs in a background. For example, the system service may include but is not limited to: a service for managing an application window opened on the device, a power management service, a service for providing location information, and a network connection service. The background application may include an application, other than the system service, running in the background of the electronic device. When the application runs in the background, the application usually cannot interact with the user. In some embodiments, after the foreground application is switched to running in the background, the foreground application changes to a background application, and the background application may also be switched to running in the foreground, and changes to a foreground application. For example, the electronic device runs a shopping application in the foreground (that is, displays a user interface of the shopping application), and runs an instant messaging application in the background. In response to an operation of invoking a user interface of the instant messaging application, the electronic device may display the user interface of the instant messaging application on the screen, and cancel displaying the user interface of the shopping application. In this way, the shopping application changes from a foreground application to a background application, and the instant messaging application changes from a background application to a foreground application.

In some embodiments, the electronic device may classify the threads into different service groups based on parameters such as foreground/background running states of applications or services to which the threads belong and types of tasks to be executed by the threads.

For example, the electronic device may classify the thread of the foreground application, the threads of the system service, and the threads of the background application into one or more of the following service groups: a foreground service, a foreground associated service, a system resident service, a delayable system service, a delayable background service, and an unimportant background service. The foreground service may include the thread of the foreground application. The foreground associated service may include a part that is of the threads of the system service and that needs to be invoked by the foreground service. The system resident service may include a thread that needs to run for a long time in the system service. The delayable system service may include a thread that can run in a delayed manner in the system service. The delayable background service may include a thread that can run in a delayed manner in the background application. The unimportant background service may include a thread other than the thread of the delayable background service in the threads of the background application.

Optionally, the foreground service and the foreground associated service may alternatively be classified into one service group. The delayable system service and the delayable background service may also be classified into one service group. The delayable system service and the delayable background service may include but are not limited to: a thread of an upload service or a download service, a thread of an application compilation and installation service, and a thread of a software upgrade and update service. A method for identifying the delayable system service and the delayable background service is not limited in this embodiment of this application.

In some embodiments, threads in the one or more service groups may be dynamically changed. For example, when an application 1 runs in the foreground and an application 2 runs in the background, a thread of the application 1 may be classified into the foreground service, and a thread of the application 2 may be classified into the delayable background service or the unimportant background service. When the application 2 changes to running in the foreground, and the application 1 changes to an application in the background, the thread of the application 1 may be moved from the foreground service to the delayable background service or the unimportant background service, and the thread of the application 2 may be moved to the foreground service. The thread in the foreground associated service may also change from a thread associated with the thread of the application 1 to a thread associated with the thread of the application 2.

In some embodiments, the electronic device may further classify the threads into different CPU groups based on importance of processor resources allocated to the threads. The electronic device may divide different CPU groups based on the service groups. A thread of higher importance or with higher user sensitivity indicates higher importance of a processor resource allocated by the electronic device to the thread. A higher user sensitivity of a thread may indicate that blocking or delayed running of the thread is more likely to be perceived by the user.

For example, the electronic device may classify the service groups into one or more of the following CPU groups: top thread group, secondary thread group, common system thread group, restricted thread group, and common background thread group. The CPU groups may be sorted in descending order of importance of processor resources allocated to the threads as follows: top thread group, secondary thread group, common system thread group, common background thread group, and restricted thread group. The top thread group may include the thread in foreground service. The top thread group may also be referred to as a top-app group. The secondary thread group may include the thread in the foreground associated service. The secondary thread group may also be referred to as a foreground group. The common system thread group may include the thread in the system resident service. The common system thread group may also be referred to as a system group. The restricted thread group may include the thread in the delayable system service and the thread in the delayable background service. The restricted thread group may also be referred to as a limit-background group. The common background thread group may include the thread in the unimportant background service. The common background thread group may also be referred to as a background group. The names of the CPU groups are merely examples for description of this application, and should not constitute any limitation on this application.

Optionally, the top thread group and the secondary thread group may also be divided into one CPU group. The common system thread group, the restricted thread group, and the common background thread group may also be divided into one CPU group. Alternatively, the common system thread group and the common background thread group may be classified into one CPU group.

In some embodiments, the threads may have priorities. The priorities of the threads determine importance of the threads for scheduling. A thread with a high priority may be scheduled more frequently when contending for a processor resource, to ensure timely response of the thread.

The electronic device may include a realtime (realtime, RT) scheduler and a completely fair scheduler (completely fair scheduler, CFS). The RT scheduler and the CFS may use different scheduling strategies to schedule the threads. The RT scheduler and the CFS may be respectively used to schedule threads with different priorities. For example, the CFS may be configured to schedule a thread whose priority is within a priority range 1. The RT scheduler may be configured to schedule a thread whose priority is within a priority range 2. Values of the priority range 1 and the priority range 2 are not limited in this embodiment of this application. For example, the priority range 1 may be [1, 40]. The priority range 2 may be [41, 139]. In other words, if a priority of a thread is higher than or equal to 1 and lower than or equal to 40, the thread may be scheduled by the CFS. If a priority of a thread is higher than or equal to 41 and lower than or equal to 139, the thread may be scheduled by the RT scheduler.

The CFS may be configured to determine a requirement of each thread for a processor resource based on parameters such as a type of the thread and a priority of the thread, and then allocate a processor resource to each thread as required, to implement fair allocation of the processor resource to each thread.

The RT scheduler may be configured to schedule a thread based on a priority of the thread. A thread with a highest priority first obtains a processor resource. In addition, the thread with the highest priority may preempt a resource with a low priority.

In the CPU groups, the top thread group and the secondary thread group may include a thread whose priority is within the priority range 1 and a thread whose priority is within the priority range 2. In the top thread group and secondary thread group, the thread whose priority is in the priority range 1 may be scheduled by the CFS. In the top thread group and secondary thread group, the thread whose priority is in the priority range 2 may be scheduled by the RT scheduler. All threads in the common system thread group, the restricted thread group, and the common background thread group may be threads whose priorities are within the priority range 1. Therefore, the threads in the common system thread group, the restricted thread group, and the common background thread group may be scheduled by the CFS.

In some embodiments, the electronic device may identify a critical thread, a critical dependent thread, and a non-critical thread. For details, refer to the descriptions in the foregoing embodiments. If the electronic device identifies that a thread in any one of the system resident service, the delayable system service, the delayable background service, and the unimportant background service is a critical dependent thread, the electronic device may move the thread from the common system thread group, the restricted thread group, or the common background thread group to the top thread group or the secondary thread group. Optionally, if the electronic device identifies that a thread in the foreground service or the foreground associated service is a non-critical dependent thread, the electronic device may move the thread from the top thread group or the secondary thread group to the common system thread group, the restricted thread group, or the common background thread group.

It should be noted that the service groups and the CPU groups of the threads are merely examples for description in this application, and shall not constitute a limitation on this application. The electronic device may further divide the threads into more or fewer service groups, and divide the threads into more or fewer CPU groups.

In some embodiments, based on the CPU groups shown in FIG. 5, the electronic device may perform group management and control on CPU time slices allocated to the threads.

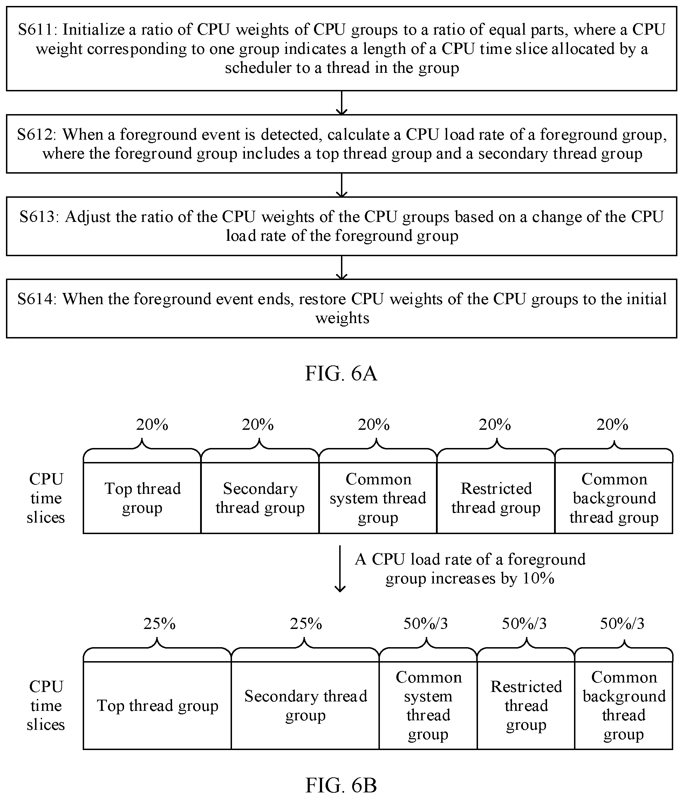

**FIG. 6A** **is a flowchart of an example of a method for group management and control of CPU time slices according to an embodiment of this application.**

S611: Initialize a ratio of CPU weights of CPU groups to a ratio of equal parts, where a CPU weight corresponding to one group indicates a length of a CPU time slice allocated by a scheduler to a thread in the group.

In some embodiments, the CPU groups of threads may include a top thread group, a secondary thread group, a common system thread group, a restricted thread group, and a common background thread group. The electronic device may initialize CPU weights of the top thread group, the secondary thread group, the common system thread group, the restricted thread group, and the common background thread group to 1:1:1:1:1. As shown in FIG. 6B, all CPU time slice proportions of the top thread group, the secondary thread group, the common system thread group, the restricted thread group, and the common background thread group may be 20%. A length of a CPU time slice allocated to a CPU group is total CPU time*CPU time slice proportion of the CPU group. The total CPU time may be a total time length of CPU time slices that can be allocated by the scheduler, that is, a size of a scheduling range of the scheduler. The scheduling range may also be referred to as a scheduling cycle.

The scheduler may allocate CPU time slices to a plurality of threads in a CPU group based on the length of the CPU time slice allocated to the CPU group. Lengths of CPU time slices allocated to a plurality of threads in a CPU group may be the same or different.

It should be noted that the ratio of the CPU weights of the groups may be a basis for the CFS to allocate CPU time slices to threads managed by the CFS. The CPU time slice proportion of the top thread group may be specifically a proportion of CPU time slices occupied by threads managed by the CFS in the top thread group to a scheduling range of the CFS. The CPU time slice proportion of the secondary thread group may be specifically a proportion of CPU time slices occupied by threads managed by the CFS in the secondary thread group to the scheduling range of the CFS. CPU time slices of threads managed by the RT scheduler in the top thread group and the secondary thread group may be allocated by the RT scheduler instead of being determined by the CPU weights of the foregoing groups.

S612: When a foreground event is detected, calculate a CPU load rate of a foreground group, where the foreground group includes a top thread group and a secondary thread group.

The foreground event may indicate an event corresponding to a task executed by a foreground application, and includes but is not limited to: an application startup event, an audio/video switching event, and a page update or switching event. The page update or switching event may include an event in which an application running in a foreground changes (for example, a user interface displayed by the electronic device is switched from a user interface of an application 1 to a user interface of an application 2). A method for detecting a foreground event is not limited in this embodiment of this application.

When the foreground event is detected, the electronic device may calculate the CPU load rate of the foreground group. A CPU load of a thread may indicate a quantity of calculations that the thread needs a CPU to perform. A larger quantity of tasks to be executed by a thread indicates a higher CPU load of the thread. A method for detecting a CPU load of a thread is not limited in this embodiment of this application. For example, the CPU load may be calculated based on a CPU windows-assist load tracing (windows-assist load tracing, WALT) scheduling cycle.

In some embodiments, the CPU load rate of the foreground group may specifically include a proportion of CPU loads of the threads managed by the CFS in the top thread group and the secondary thread group to CPU loads of all threads managed by the CFS.

Alternatively, the CPU load rate of the foreground group may include a proportion of CPU loads of all threads in the top thread group and the secondary thread group to CPU loads of all threads of the electronic device.

S613: Adjust the ratio of the CPU weights of the CPU groups based on a change of the CPU load rate of the foreground group.

In some embodiments, when the CPU load rate of the foreground group increases, the electronic device may increase a CPU time slice proportion of the foreground group by a same percentage.

As shown in FIG. 6B, when the CPU load rate of the foreground group increases by 10%, the CPU time slice proportion of the foreground group may increase by 10% accordingly. It can be learned that before the CPU load rate of the foreground group increases, CPU time slice proportions of the top thread group and the secondary thread group are 40% in total. After the CPU load rate of the foreground group increases by 10%, the CPU time slice proportions of the top thread group and the secondary thread group are 50% in total, that is, the CPU time slice proportions increase by 10%. Correspondingly, after the CPU load rate of the foreground group increases by 10%, a CPU time slice proportion of the non-foreground group (namely, the common system thread group, the restricted thread group, and the common background thread group) decreases from 60% to 50%.

In some embodiments, because the foreground group includes the top thread group and the secondary thread group, the electronic device may increase CPU time slice proportions of the top thread group and the secondary thread group based on an increment of the CPU time slice proportion of the foreground group. For example, increments of the CPU time slice proportions of the top thread group and the secondary thread group may be the same. When the CPU time slice proportion of the foreground group increases by 10%, the CPU time slice proportions of the top thread group and the secondary thread group each may increase by 5% (that is, increase from 20% to 25%). Alternatively, the electronic device may determine the CPU time slice proportions of the top thread group and the secondary thread group based on a CPU load of the top thread group and a CPU load of the secondary thread group. If the CPU load of the top thread group is higher than the CPU load of the secondary thread group, the increment of the CPU time slice proportion of the top thread group may be greater than the increment of the CPU time slice proportion of the secondary thread group. Similarly, because the non-foreground group includes the common system thread group, the restricted thread group, and the common background thread group, the electronic device may reduce CPU time slice proportions of the common system thread group, the restricted thread group, and the common background thread group based on a decrement of the CPU time slice proportion of the non-foreground group. The CPU time slice proportions of the common system thread group, the restricted thread group, and the common background thread group may be equally or unequally reduced.

As shown in FIG. 6B, when the load rate of the foreground group increases by 10%, the electronic device may change the CPU weights of the top thread group, the secondary thread group, the common system thread group, the restricted thread group, and the common background thread group from 1:1:1:1:1 to 3:3:2:2:2. The CFS of the electronic device may allocate CPU time slices to the threads in the CPU groups according to CPU weights of 3:3:2:2:2.

In some embodiments, when the CPU load rate of the foreground group decreases, the electronic device may reduce a CPU time slice proportion of the foreground group by a same percentage. For a method of reducing the CPU time slice proportion of the foreground group by the same percentage, refer to the method of increasing the CPU time slice proportion of the foreground group by the same percentage. Details are not described herein again.

A method for adjusting the ratio of the CPU weights by the electronic device based on the change of the CPU load rate of the foreground group is not limited in this embodiment of this application. Instead of increasing or reducing the CPU time slice proportion of the foreground group by the same percentage, the electronic device may alternatively increase or reduce the CPU time slice proportion of the foreground group by a different percentage. For example, when the CPU load rate of the foreground group increases by X%, the electronic device may increase the CPU time slice proportion of the foreground group by 2X%. When the CPU load rate of the foreground group decreases by X%, the electronic device may reduce the CPU time slice proportion of the foreground group by 0.5X%.

It may be understood that when the foreground event occurs, the CPU load of the thread in the foreground group may change. That the electronic device adjusts, when detecting the foreground event, the ratio of the CPU weights based on the change of the CPU load rate of the foreground group can reduce a quantity of times that the electronic device detects the CPU load rate of the foreground group, and improve efficiency of managing and controlling the CPU time slices of the thread groups.

In some embodiments, the electronic device may alternatively calculate the CPU load rate of the foreground group at other time. This is not limited to the foregoing foreground event detection. For example, the electronic device may periodically calculate the CPU load rate of the foreground group, and adjust the ratio of the CPU weights when the CPU load rate of the foreground group changes, and then adjust the lengths of the CPU time slices allocated to the thread groups. An occasion on which the electronic device calculates the CPU load rate of the foreground group and adjusts the ratio of the CPU weights is not limited in this embodiment of this application.

S614: When the foreground event ends, restore the CPU weights of the CPU groups to the initial weights.

That the foreground event ends may indicate that a task corresponding to the foreground event is completed. After the foreground event ends, the electronic device may restore the CPU weights of the CPU groups to the initial weights, for example, equal weights.

It can be learned from the method that the threads in the foreground group are threads with higher user sensitivity. Based on the CPU groups, the electronic device may restrict, when the CPU load rate of the foreground group is high, a processor resource obtained by the thread in the non-foreground group, to provide a longer CPU time slice for the thread in the foreground group. In this way, a thread in the foreground group with a large task amount can obtain more processor resources, so that the thread can complete a task faster, and provide a user with smooth experience of using the device. In addition, when the CPU load rate of the foreground group decreases, the electronic device may provide longer CPU time slices for the threads in the non-foreground group, so that tasks of the threads in the non-foreground group can be fast executed. Group management and control of CPU time slices for different CPU groups in the method can effectively improve utilization of processor resources, and can keep the threads in the non-foreground group running while ensuring smooth use of the device.

In some embodiments, based on the CPU groups shown in FIG. 5, the electronic device may restrict bandwidth quotas of processor resources obtained by different CPU groups.

Bandwidth quota allocation is a mechanism to restrict a CPU running time slice based on absolute time. It can be learned from the foregoing embodiment that the electronic device can allocate CPU time slices to threads. A bandwidth quota may indicate that a thread is allowed to run in only a fixed time quota (quota) in a CPU time slice allocated to the thread. When the time quota is exceeded, running of the thread is restricted. After a next CPU time slice is obtained, the thread may continue to run in the corresponding time quota.

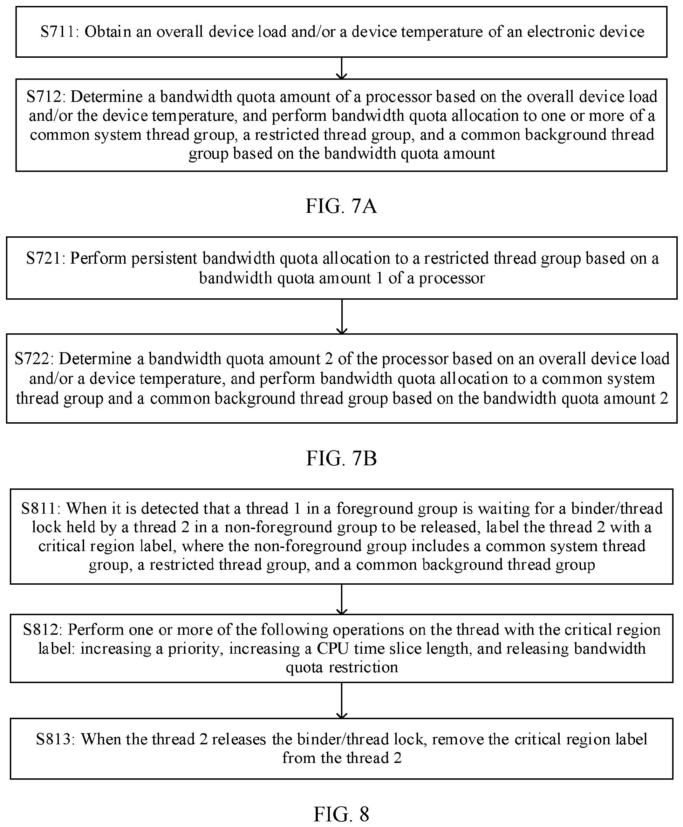

**FIG. 7A** **is a flowchart of an example of a method for restricting a bandwidth quota based on a thread group.**

S711: Obtain an overall device load and/or a device temperature of the electronic device.

The overall device load may indicate a ratio of computing power of a CPU that needs to be consumed by all threads running in the electronic device in a period of time to maximum computing power that can be provided by the CPU. A higher overall device load may indicate that higher current computing power consumption of the CPU, and faster power consumption and more rapid temperature rise of the electronic device.

The device temperature may be a housing temperature of the electronic device, for example, a temperature of a rear cover. Alternatively, the device temperature may be a temperature of a processor of the electronic device.

S712: Determine a bandwidth quota amount of a processor based on the overall device load and/or the device temperature, and perform bandwidth quota allocation to one or more of a common system thread group, a restricted thread group, and a common background thread group based on the bandwidth quota amount.

In some embodiments, the electronic device may store a correspondence between the bandwidth quota amount and the overall device load and/or the device temperature. The electronic device may determine the current bandwidth quota amount of the processor based on the correspondence.

For the correspondence between the overall device load and the bandwidth quota amount, refer to the following Table 4.

**Table 4**

| Overall device load | Bandwidth quota amount |
|---|---|
| >90% | 10% |
| (80%, 90%] | 30% |
| (60%, 80%] | 50% |

As shown in Table 4, when the overall device load is higher than 90%, the bandwidth quota amount may be 10%. That the bandwidth quota amount may be 10% may indicate that a time quota allowed by the electronic device to run a thread is 10% of a CPU time slice of the thread. For example, when the CPU time slice allocated by the electronic device to the thread is 100 ms, the time quota for running the thread by the electronic device is 10 ms. When the overall device load is higher than 80% and lower than or equal to 90%, the bandwidth quota amount may be 30% (that is, the time quota is 30% of the corresponding CPU time slice). When the overall device load is higher than 60% and lower than or equal to 80%, the bandwidth quota amount may be 50% (that is, the time quota is 50% of the corresponding CPU time slice). It can be learned that a higher overall device load indicates a smaller bandwidth quota amount, and a higher bandwidth quota restriction by the electronic device on the thread.

For the correspondence between the device temperature and the bandwidth quota amount, refer to the following Table 5.

**Table 5**

| Device temperature (°C) | Bandwidth quota amount |
|---|---|
| >46 | 10% |
| (42, 46] | 30% |
| (38, 42] | 50% |

As shown in Table 5, when the device temperature is higher than 46°C, the bandwidth quota amount may be 10%. When the device temperature is higher than 42°C and lower than or equal to 46°C, the bandwidth quota amount may be 30%. When the device temperature is higher than 38°C and lower than or equal to 42°C, the bandwidth quota amount may be 50%. It can be learned that a higher device temperature indicates a smaller bandwidth quota amount, and a higher bandwidth quota restriction by the electronic device on the thread.

Table 4 and Table 5 are merely examples for description of this application, and should not constitute a limitation on this application. The electronic device may alternatively determine, based on a corresponding model or calculation formula, the bandwidth quota amount corresponding to the current overall device load or device temperature. This is not limited to the foregoing table query manner.

In some embodiments, the electronic device may determine the bandwidth quota amount by combining the overall device load with the device temperature. For example, the electronic device may use, based on the correspondence between the overall device load and the bandwidth quota amount shown in Table 4 and the correspondence between the device temperature and the bandwidth quota amount shown in Table 5, a smaller value of the bandwidth quota amount corresponding to the current overall device load and the bandwidth quota amount corresponding to the current device temperature to perform bandwidth quota allocation, or the electronic device may use an average value of the bandwidth quota amount corresponding to the current overall device load and the bandwidth quota amount corresponding to the current device temperature to perform bandwidth quota allocation. A method for determining the bandwidth quota amount based on the overall device load and the device temperature is not limited in this embodiment of this application.

When the overall device load and/or the device temperature change/changes, the electronic device may dynamically adjust restriction on the bandwidth quota of the thread.

In some embodiments, the electronic device may perform bandwidth quota allocation to one or more of the common system thread group, the restricted thread group, and the common background thread group. Because threads in the top thread group and the secondary thread group shown in FIG. 5 are important threads, the electronic device may not need to perform bandwidth quota allocation on the top thread group and the secondary thread group.

In some embodiments, when the overall device load is lower than a preset threshold (for example, 60%) and/or the device temperature is lower than a preset threshold (for example, 38°C), the electronic device may stop performing bandwidth quota allocation to the common system thread group, the restricted thread group, and the common background thread group. Values of the thresholds are not limited in this embodiment of this application.

It can be learned from the method that the electronic device can perform bandwidth quota restriction on a thread in a non-foreground group based on the overall device load and/or the device temperature. Bandwidth quota allocation can reduce the overall device load in unit time. A higher overall device load indicates a higher bandwidth quota restriction by the electronic device on the thread in the non-foreground group, and a higher device temperature also indicates a higher bandwidth quota restriction by the electronic device on the thread in the non-foreground group. The method for restricting the bandwidth quota can control the overall device load and the device temperature of the electronic device, reduce an impact of a thread in the non-foreground group on running of a thread in the foreground group when the overall device load is excessively high, and reduce an excessively high device temperature.

**FIG. 7B** **is a flowchart of an example of another method for restricting a bandwidth quota based on a thread group.**

S721: Perform persistent bandwidth quota allocation to a restricted thread group based on a bandwidth quota amount 1 of a processor.

The bandwidth quota amount 1 may be preset. A value of the bandwidth quota amount 1 is not limited in this embodiment of this application. For example, the bandwidth quota amount 1 may be 10%.

In some embodiments, the electronic device may identify a delayable thread with a high CPU load in the restricted thread group. For the CPU load of the thread, refer to the descriptions of FIG. 6A. The thread with the high CPU load may include a thread whose CPU load is higher than a preset load threshold. The electronic device may use the bandwidth quota amount 1 to perform persistent bandwidth quota allocation to the delayable thread with the high CPU load.

S722: Determine a bandwidth quota amount 2 of the processor based on an overall device load and/or a device temperature, and perform bandwidth quota allocation to a common system thread group and a common background thread group based on the bandwidth quota amount 2.

For a method for determining the bandwidth quota amount 2 based on the overall device load and/or the device temperature, refer to the descriptions of the method shown in FIG. 7A.

It can be learned from the method that the electronic device can perform persistent bandwidth quota restriction on the delayable thread with the high CPU load, to reduce a burst load. The electronic device may alternatively perform dynamic bandwidth quota restriction on a thread in a group other than the restricted thread group in the non-foreground group based on the overall device load and/or the device temperature. This can control the overall device load and the device temperature of the electronic device, reduce an impact of a thread in the non-foreground group on running of a thread in the foreground group when the overall device load is excessively high, and reduce an excessively high device temperature.

In some embodiments, the electronic device may perform persistent bandwidth quota allocation on the common system thread group, the restricted thread group, and the common background thread group based on a preset bandwidth quota amount. A value of the preset bandwidth quota amount is not limited in embodiments of this application.

In some embodiments, priority inversion may occur in a running process of a thread. Priority inversion may indicate that when a high-priority thread needs to access a shared resource, and the shared resource has been occupied by a low-priority thread, the shared resource may be preempted by some other medium-priority threads when the low-priority thread accesses the shared resource. As a result, the high-priority thread is blocked by many threads with lower priorities.

To resolve the priority inversion, the electronic device may set a critical region, and add a thread that is in the non-foreground group and that is depended on by the foreground group to the critical region. The electronic device may implement fast running of the thread in the critical region based on one or more of the following measures: increasing a priority of the thread in the critical region, releasing bandwidth quota restriction on the thread in the critical region, increasing a length of a CPU time slice of the thread in the critical region, and the like.

**FIG. 8** **is a flowchart of an example of a processor resource allocation method.**

S811: When it is detected that a thread 1 in a foreground group is waiting for a binder/thread lock held by a thread 2 in a non-foreground group to be released, label the thread 2 with a critical region label, where the non-foreground group includes a common system thread group, a restricted thread group, and a common background thread group.

The binder is a mechanism of interprocess communication, and may allow data transmission and method invocation between different processes. In some embodiments, if the thread 1 needs to use a running result of the thread 2 in a running process, the thread 1 may wake up the thread 2 based on the binder. In this case, the thread 2 holds the binder depended on by the thread 1, and the thread 1 needs to wait for the thread 2 to release the binder before continuing to run.

The thread lock may be used to lock a shared resource, so that the shared resource is not accessed or modified by a plurality of threads at the same time. When the plurality of threads need to modify or access the shared resource, the thread lock may ensure that only one thread can perform a read/write operation on the shared resource. In some embodiments, if the thread 2 holds the thread lock of the shared resource, when the thread 1 needs to access the shared resource, the thread 1 needs to wait for the thread 2 to release the thread.

In some embodiments, the electronic device may detect whether a thread in the foreground group is waiting for release of a binder/thread lock held by a thread in the non-foreground group. It can be learned from the foregoing embodiment that the electronic device may perform operations such as CPU time slice shortening and/or bandwidth quota restriction on the thread in the non-foreground group. If the thread in the foreground group is waiting for release of the binder/thread lock held by the thread in the non-foreground group, CPU time slice shortening and/or bandwidth quota restriction may cause the thread in the foreground group to be blocked for a long time, affecting smooth running of the electronic device.

Herein, an example in which the thread 1 in the foreground group is waiting for release of the binder/thread lock held by the thread 2 in the non-foreground group is used for description. The electronic device may label the thread 2 with the critical region label. Labeling the thread 2 with the critical region label may indicate that the thread 2 is added to a critical region. An implementation method of the critical region label is not limited in this embodiment of this application.

S812: Perform one or more of the following operations on the thread with the critical region label: increasing a priority, increasing a CPU time slice length, and releasing bandwidth quota restriction.

In some embodiments, the CFS in the electronic device may perform one or more of the following operations on the thread 2: increasing the priority, increasing the CPU time slice length, and releasing the bandwidth quota restriction.

Increasing the priority of the thread 2 can reduce cases in which a processor resource is preempted by another thread with a higher priority when the thread 2 is running. This can reduce cases in which the thread 1 is blocked for a long time when waiting for the thread 2 to release the binder/thread lock becauses a thread whose priority is lower than that of the thread 1 but higher than that of the thread 2 runs before the thread 1.

Both increasing the CPU time slice length and releasing the bandwidth quota restriction can implement fast running of the thread 2, so that the thread 2 can release the binder/lock depended on by the thread 1 as soon as possible.

S813: When the thread 2 releases the binder/thread lock, remove the critical region label from the thread 2.

When the thread 2 releases the binder/thread lock depended on by the thread 1, the electronic device may remove the critical region label from the thread 2. Removing the critical region label from the thread 2 may indicate that the thread 2 is removed from the critical region. When the critical region label is removed from the thread 2, the CFS in the electronic device may restore the priority and the CPU time slice length of the thread 2 to an initial state (that is, a state of the thread 2 before the thread 2 is added to the critical region). In addition, the electronic device may perform bandwidth quota restriction on the thread 2 by using the method shown in FIG. 7A or FIG. 7B.

It can be learned from the method that, when a thread in the foreground group (for example, the top thread group or the secondary thread group) depends on a thread in the non-foreground group (for example, the common system thread group, the restricted thread group, or the common background thread group), the electronic device can temporarily increase a priority of the thread that is in the non-foreground group and that is depended on by the foreground group, increase a CPU time slice length of the thread, and release bandwidth quota restriction on the thread. In addition, moving the thread that is in the non-foreground group and that is depended on by the foreground group to the foreground group requires reaction and execution time of moving. Compared with changing the thread group of the thread that is depended on, the method for setting the critical region can more efficiently reduce priority inversion, and improve running smoothness of the thread in the foreground group.

In some embodiments, the electronic device may perform CPU frequency restriction on a non-critical thread determined according to the foregoing embodiment.

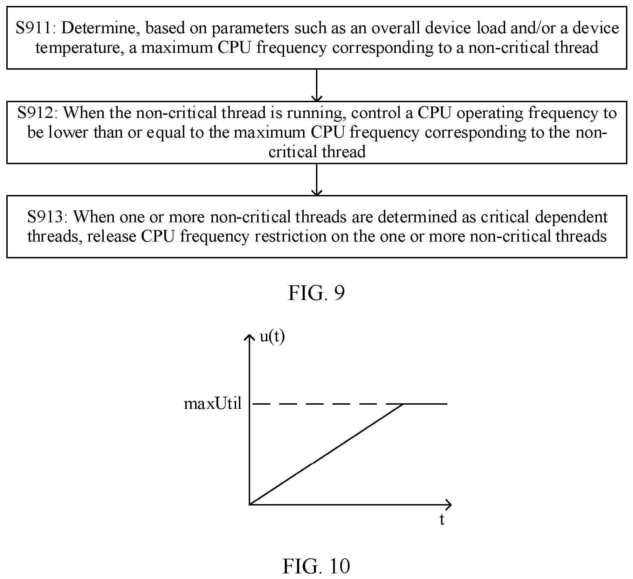

**FIG. 9** **is a flowchart of an example of a method for restricting a CPU frequency of a non-critical thread.**

S911: Determine, based on parameters such as an overall device load and/or a device temperature, a maximum CPU frequency corresponding to a non-critical thread.

For the overall device load and the device temperature, refer to the descriptions of FIG. 7A. The non-critical thread may include a thread other than a critical thread and a critical dependent thread in threads run by the electronic device. For a method for determining the critical dependent thread, refer to the descriptions in FIG. 3A and FIG. 3B, or refer to the descriptions in FIG. 4A and FIG. 4B.

In some embodiments, the electronic device may store a correspondence between the maximum CPU frequency corresponding to the non-critical thread and the overall device load and/or the device temperature.

For the correspondence between the overall device load and the maximum CPU frequency corresponding to the non-critical thread, refer to the following Table 6.

**Table 6**

| Overall device load | Maximum CPU frequency corresponding to the non-critical thread |
|---|---|
| Load range 1 | Frequency 1 |
| Load range 2 | Frequency 2 |
| Load range 3 | Frequency 3 |

For the correspondence between the device temperature and the maximum CPU frequency corresponding to the non-critical thread, refer to the following Table 7.

**Table 7**

| Device temperature | Maximum CPU frequency corresponding to the non-critical thread |
|---|---|
| Temperature range 1 | Frequency 1 |
| Temperature range 2 | Frequency 2 |
| Temperature range 3 | Frequency 3 |

Table 6 and Table 7 are merely examples for description of this application, and should not constitute a limitation on this application.

It should be noted that a higher overall device load indicates a lower maximum CPU frequency corresponding to the non-critical thread, and a higher CPU frequency restriction by the electronic device on the non-critical thread. A higher device temperature indicates a lower maximum CPU frequency corresponding to the non-critical thread, and a higher CPU frequency restriction by the electronic device on the non-critical thread.

In some embodiments, the electronic device may determine the maximum CPU frequency corresponding to the non-critical thread by combining the overall device load and the device temperature. When the overall device load and/or the device temperature change/changes, the electronic device may dynamically adjust CPU frequency restriction on the non-critical thread.

The electronic device may alternatively determine the maximum CPU frequency corresponding to the non-critical thread based on another factor. This is not limited to the overall device load and the device temperature. For example, the electronic device may alternatively determine the maximum CPU frequency corresponding to the non-critical thread based on current power consumption of the electronic device. A higher current power consumption of the electronic device indicates a lower maximum CPU frequency corresponding to the non-critical thread.

S912: When the non-critical thread is running, control a CPU operating frequency to be lower than or equal to the maximum CPU frequency corresponding to the non-critical thread.

In some embodiments, when the non-critical thread is run, the CPU operating frequency may change dynamically, and the CPU operating frequency does not exceed the maximum CPU frequency corresponding to the non-critical thread.

S913: When one or more non-critical threads are determined as critical dependent threads, release CPU frequency restriction on the one or more non-critical threads.

It can be learned from the methods shown in FIG. 4A and FIG. 4B that the electronic device can detect the critical dependent thread in real time in the online mode. When it is detected that one or more threads change from non-critical threads to critical dependent threads, the electronic device may not need to control the CPU frequency to be lower than or equal to the maximum CPU frequency corresponding to the non-critical thread (that is, releases CPU frequency restriction) when the one or more threads are running. The thread that changes from the non-critical thread to the critical dependent thread may include a thread newly added to the thread protection list when the thread protection list shown in FIG. 4A is updated.

In some embodiments, when a thread changes from a critical dependent thread to a non-critical thread, the electronic device may control, when the thread is running, a CPU operating frequency to be lower than or equal to the maximum CPU frequency corresponding to the non-critical thread (that is, perform CPU frequency restriction on the thread). The thread that changes from the critical dependent thread to the non-critical thread may include a thread removed from the thread protection list when the thread protection list shown in FIG. 4A is updated.

It can be learned from the method that through CPU frequency restriction on the non-critical thread, the electronic device can conserve power of the electronic device, and mitigate rapid temperature rise of the electronic device while the non-critical thread keeps running.

In some embodiments, the electronic device may further divide the threads in the electronic device into a group 1 and a group 2. The group 1 may include a critical thread, a critical dependent thread of the critical thread, and a thread of a foreground application in the current application scenario. The group 2 may include other threads except for those in the group 1. The electronic device may calculate a CPU load rate of the group 1, and adjust a ratio of CPU weights of the group 1 to the group 2 based on a load rate change of the group 1, and then adjust CPU time slice lengths of threads in the group 1 and the group 2 (for details, refer to the method shown in FIG. 6A).

Optionally, the electronic device may perform CPU bandwidth quota allocation on the thread in the group 2 (for details, refer to the method shown in FIG. 7A). The electronic device may further identify a delayable thread in the group 2, and perform persistent CPU bandwidth quota allocation on the delayable thread.

Optionally, the electronic device may further detect whether the thread in the group 1 is waiting for release of a binder/thread lock held by the thread in the group 2. For example, if a thread a1 in the group 1 is waiting for release of a binder/thread lock held by a thread a2 in the group 2, the electronic device may add the thread a2 to a critical region (for details, refer to the method shown in FIG. 8).

Optionally, the electronic device may perform frequency restriction on the thread in the group 2 (for details, refer to the method shown in FIG. 9).

In some embodiments, the electronic device may perform dynamic frequency adjustment on a critical thread and a critical dependent thread in the electronic device, to accurately supply processor resources to the critical thread and the critical dependent thread.

In the following embodiment of this application, a dynamic frequency adjustment method is specifically described by using a thread related to frame drawing (referred to as a frame drawing thread for short) as an example. Frame drawing may indicate drawing a user interface displayed by the electronic device. A quantity of times that the electronic device refreshes a drawn image on a screen in unit time may be determined by a refresh rate of the screen of the electronic device. For example, if the refresh rate of the electronic device is 120 hertz (hertz, Hz), the electronic device may refresh the screen every 8.3 ms, that is, draw one frame of image every 8.3 ms. The thread related to frame drawing may include a UI thread, an RS thread, a critical dependent thread depended on by the UI thread, and a critical dependent thread depended on by the RS thread.

**FIG. 10** **is a diagram of an example of a frequency adjustment curve.** The electronic device may perform dynamic frequency adjustment on a frame drawing thread according to the frequency adjustment curve shown in FIG. 10.

For a frequency adjustment function corresponding to the frequency adjustment curve shown in FIG. 10, refer to the following formula (1): $u \left(t\right) = \frac{maxUtil ∗ Time}{deadline - margin}$ (1)

u(t) may indicate CPU computing power provided to the thread at a moment. maxUtil may indicate maximum computing power that can be provided by a CPU. For example, maxUtil may be 1024. Time may indicate duration in which the electronic device has drawn when drawing a frame of image, that is, duration from a moment at which a frame drawing instruction (for example, a frame synchronization signal) for drawing the frame of image is delivered to a current moment. The deadline may indicate frame duration or a frame cycle, and may be determined by a refresh rate of a screen. For example, if the refresh rate of the screen is 120 Hz, the deadline may be 8.3 ms. If the refresh rate of the screen is 60 Hz, the deadline may be 16.67 ms. The margin may indicate duration in which a frame task corresponding to each frame is completed in history. For example, the margin may be an accumulation determined by historical average running duration. If running of a historical frame times out (for example, a frame drawing task is not completed in 8.3 ms), the margin increases. If running duration of the historical frame is shortened (for example, the frame drawing task is completed in less than 8.3 ms), the margin decreases.

In a coordinate axis shown in FIG. 10, a vertical axis may be u(t), and a horizontal axis may be the Time. It can be learned that, when the margin is fixed, in a process of drawing the frame of image by the frame drawing thread, the CPU computing power provided by the electronic device for the frame drawing thread linearly increases with time. The electronic device may store a frequency computing power table. The electronic device may adjust a CPU frequency based on the computing power determined based on the frequency adjustment curve.

For the frequency computing power table, refer to the following Table 8.

**Table 8**

| Computing power | Frequency |
|---|---|
| Computing power 1 | Frequency 1 |
| Computing power 2 | Frequency 2 |
| ... | ... |

In some embodiments, the CPU of the electronic device may include a plurality of CPU cores. Operating frequencies of different CPU cores may be different. Different CPU cores may run different threads at the same time to process different tasks. The frequency computing power table may include frequencies of different CPU cores under one piece of CPU computing power. In this way, the electronic device may adjust, based on the computing power provided to the thread, a frequency of a CPU core running the thread.

The electronic device may alternatively adjust the CPU frequency based on the computing power in another manner. This is not limited to the frequency computing power table.

It can be learned from the frequency adjustment curve shown in FIG. 10 that the electronic device provides small computing power for the frame drawing thread in an early stage of drawing the frame of image, and the task of the frame drawing thread is completed slowly. If the frame drawing thread needs to complete a large task amount to draw the frame of image, a frame may be lost because the frame drawing task cannot be completed in time. In addition, the electronic device provides high computing power to the frame drawing thread in a background of drawing the frame of image. If the frame drawing thread needs to complete a small task amount to draw the frame of image, the frame drawing task may have been completed, providing high computing power by the electronic device results in a waste of processor resources. Therefore, the frequency adjustment curve shown in FIG. 10 is not conducive to efficient utilization of the processor resources.

To improve utilization of the processor resources, the electronic device may perform dynamic frequency adjustment based on a frequency adjustment function shown in the following formula (2): $u \left(t\right) = \frac{kk ∗ maxUtil ∗ {Time}^{α}}{deadline - margin}$ (2)

kk is a slope parameter, and may be used to change a slope of the frequency adjustment function. α is a curvature parameter, and may be used to change a curvature of the frequency adjustment function.

In some embodiments, the server may perform simulation based on historical CPU load data, to determine values of kk and α in an optimal frequency adjustment function. Then, the server may send the optimal frequency adjustment function to the electronic device on a user side. The electronic device on the user side may perform dynamic frequency adjustment on critical threads such as the frame drawing thread and critical dependent threads by using the optimal frequency adjustment function. The following specifically describes a method for determining an optimal frequency adjustment function provided in this application.

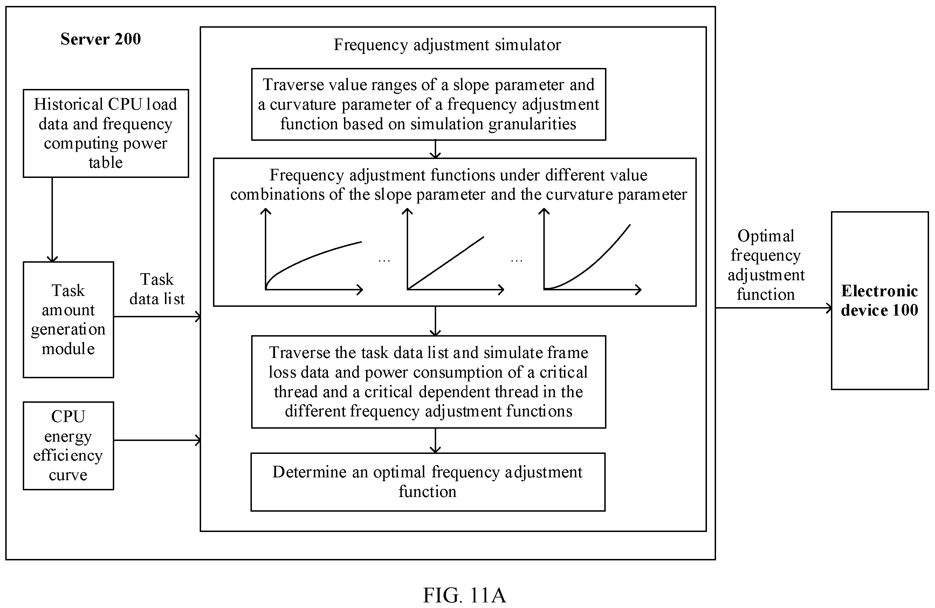

**FIG. 11A** **is a diagram of an example of determining an optimal frequency adjustment function.**

As shown in FIG. 11A, the server 200 may include a task amount generation module and a frequency adjustment simulator.

The task amount generation module may generate a task data list based on historical CPU load data and a frequency computing power table. The historical CPU load data may include running duration of a thread and a CPU frequency during running of the thread. In some embodiments, the historical CPU load data may be a trace file generated by tracing thread running of the electronic device. For example, the historical CPU load data may include thread running data (for example, running duration and a CPU frequency during running) after the electronic device starts one or more applications in a period of time (for example, 12 hours or 24 hours).

The task data list may include frame task amounts of a critical thread and a critical dependent thread. For example, the historical CPU load data may include a multi-frame task amount of a frame drawing thread drawing multiple frames of images. A task amount of each frame may correspond to one frame sequence number. The frame task amount of drawing one frame of image may be calculated based on running duration of the task amount of the frame executed by the frame drawing thread and computing power corresponding to a CPU frequency.

The task amount generation module may send the task data list to the frequency adjustment simulator.

The frequency adjustment simulator may determine an optimal frequency adjustment function based on the task data list and a CPU energy efficiency curve.

The CPU energy efficiency curve may reflect a correspondence between computing power and power consumption of a CPU during running. CPU energy efficiency curves of different CPU models may be different.

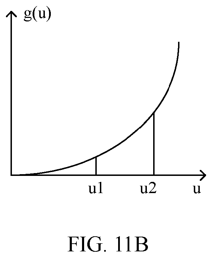

**FIG. 11B** **is a diagram of an example of a CPU energy efficiency curve.**

As shown in FIG. 11B, a horizontal axis u of a coordinate axis on which the CPU energy efficiency curve is located may indicate computing power provided by a CPU, and a vertical axis g(u) may indicate power consumption corresponding to the CPU at specific computing power, that is, power consumption required by the CPU to complete a unit task amount. It can be learned that higher computing power provided by the CPU indicates higher power consumption of the CPU. In addition, the CPU energy efficiency curve is a convex downward curve. This may indicate that as the computing power provided by the CPU increases by each unit, an increment of the CPU power consumption increases.

For example, an optimal energy efficiency part of the CPU energy efficiency curve may be a part corresponding to computing power of u1 to u2 shown in FIG. 11B. It may be understood that, in a part that is of the CPU energy efficiency curve and that corresponds to computing power less than u1, although power consumption of the CPU is low, excessively low computing power of the CPU causes slow thread running and non-smooth device performance. In a part that is of the CPU energy efficiency curve and that corresponds to computing power greater than u2, as the computing power of the CPU increases by each unit, an increment of the power consumption of the CPU is excessively high, that is, power consumption costs for increasing the computing power is excessively high. Therefore, the computing power provided by the electronic device in the range from u1 to u2 not only facilitates fast thread running, but also enables more tasks to be executed with lower power consumption, thereby conserving power of the electronic device. Values of u1 and u2 are related to a function expression of the CPU energy efficiency curve. The values of u1 and u2 are not limited in this embodiment of this application.

The CPU energy efficiency curve shown in FIG. 11B is merely an example for description of this application, and shall not constitute any limitation on this application.

A frequency adjustment simulator may traverse value ranges of a slope parameter and a curvature parameter of a frequency adjustment function based on simulation granularities, to determine frequency adjustment functions under different value combinations of the slope parameter and the curvature parameter.

The slope parameter is kk in the formula (2). The curvature parameter is α in the formula (2). The simulation granularities, the value range of kk, and the value range of α may be preset. For example, the value of kk may range from 0.1 to 20. The value of α may range from 0.1 to 5. The simulation granularities may be 0.1. The frequency adjustment simulator may determine, based on the simulation granularities, 200 values from the value range of kk and 50 values from the value range of α, to determine 10,000 combinations of different values of kk and α (that is, 10,000 different frequency adjustment functions). The simulation granularities, the value range of kk, and the value range of α are merely examples for description in this application, and shall not constitute any limitation on this application. In some embodiments, the simulation granularity for obtaining a value from the value range of kk may be different from the simulation granularity for obtaining a value from the value range of α.

The frequency adjustment simulator may traverse a task data list, simulate frame loss data and power consumption of a critical thread and a critical dependent thread under the different frequency adjustment functions, and determine an optimal frequency adjustment function based on the frame loss data and the power consumption. The power consumption of the critical thread and the critical dependent thread may be determined based on the CPU energy efficiency curve.

The server 200 may send the optimal frequency adjustment function determined by the frequency adjustment simulator to the electronic device 100. A CPU energy efficiency curve used by the frequency adjustment simulator in the server 200 may be the CPU energy efficiency curve of the CPU in the electronic device 100. In this way, the electronic device 100 can accurately supply a processor resource when running the critical thread and the critical dependent thread based on the optimal frequency adjustment function.

The following specifically describes a method for determining the optimal frequency adjustment function by the server 200 shown in FIG. 11A.

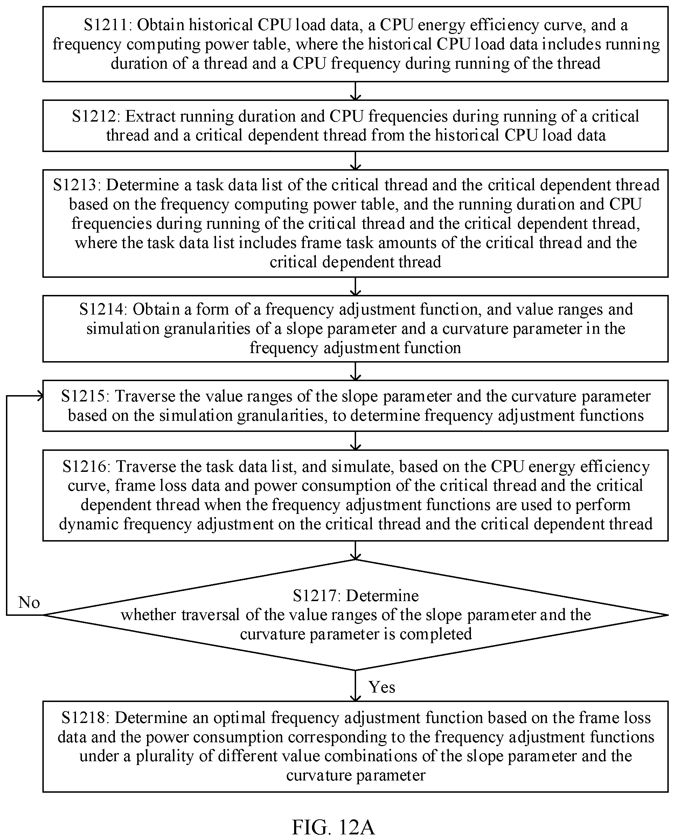

**FIG. 12A** **is a flowchart of an example of a method for determining an optimal frequency adjustment function.**

S1211: Obtain historical CPU load data, a CPU energy efficiency curve, and a frequency computing power table, where the historical CPU load data includes running duration of a thread and a CPU frequency during running of the thread.

S1212: Extract running duration and CPU frequencies during running of a critical thread and a critical dependent thread from the historical CPU load data.

In some embodiments, a task amount generation module in a server 200 may extract running duration and a CPU frequency during running of a frame drawing thread from the historical load data, for example, running duration and CPU frequencies during running of a UI thread and a critical dependent thread of the UI thread, and running duration and CPU frequencies during running of an RS thread and a critical dependent thread of the RS thread.

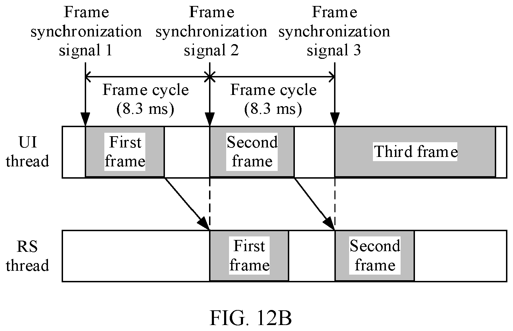

FIG. 12B is a diagram of an example of running a UI thread and an RS thread.

As shown in FIG. 12B, an electronic device may deliver a frame synchronization signal based on a frame cycle. The frame synchronization signal may indicate the UI thread and the RS thread to execute corresponding frame drawing tasks frame-wisely. For example, when a screen refresh rate is 120 Hz, the frame cycle may be 8.3 ms. The frame drawing task executed by the UI thread may include determining specific content displayed on each frame of user interface. The frame drawing task executed by the RS thread may include rendering and displaying each frame of user interface based on the specific content of each frame of user interface determined by the UI thread. When executing the frame drawing task in one frame cycle, the UI thread may need to depend on running of one or more critical dependent threads. Similarly, when executing the frame drawing task in one frame cycle, the RS thread may need to depend on running of one or more critical dependent threads.

For example, as shown in FIG. 12B, when receiving a frame synchronization signal 1, the UI thread may determine display content of a first frame of user interface, and send, to the RS thread through interprocess communication (interprocess communication, IPC), a frame drawing instruction for drawing the first frame of user interface. When receiving a frame synchronization signal 2, the RS thread may draw the first frame of user interface according to the frame drawing instruction for drawing the first frame of user interface. The RS thread may indicate a graphics processing unit (graphics processing unit, GPU) to draw the user interface. In addition, when receiving the frame synchronization signal 2, the UI thread may determine display content of a second frame of user interface, and send, to the RS thread through IPC, a frame drawing instruction for drawing the second frame of user interface. A time interval between the frame synchronization signal 1 and the frame synchronization signal 2 and a time interval between the frame synchronization signal 2 and a frame synchronization signal 3 are frame cycles. When receiving the frame synchronization signal 3, the RS thread may draw the second frame of user interface according to the frame drawing instruction for drawing the second frame of user interface. By analogy, the UI thread and the RS thread may refresh the user interface frame-wisely on the screen.

The running duration of the UI thread may include running duration of the UI thread to execute a frame drawing task of each frame. Running duration of the UI thread to execute a frame drawing task of one frame is related to a task amount of the frame drawing task of the frame. When computing power provided by a CPU remains unchanged, a larger task amount of a frame drawing task of one frame indicates longer running duration of the UI thread to execute the frame drawing task of the frame. For example, the running duration of the UI thread to execute a frame drawing task of one frame may be less than 8.3 ms, or may be greater than 8.3 ms. It should be noted that the running duration of the UI thread to execute a frame drawing task of one frame may include duration for the UI thread to wait for running of the critical dependent thread of the UI thread to execute the frame drawing task of the frame.

For the running duration of the RS thread, refer to the running duration of the UI thread.

S1213: Determine a task data list of the critical thread and the critical dependent thread based on the frequency computing power table, and the running duration and CPU frequencies during running of the critical thread and the critical dependent thread, where the task data list includes frame task amounts of the critical thread and the critical dependent thread.

The task amount generation module in the server 200 may determine, based on the frequency computing power table, CPU computing power corresponding to the CPU frequencies during running of the critical thread and the critical dependent thread. The task amount generation module may calculate frame task amounts of each frame executed by the critical thread and the critical dependent thread, and then generate the task data list. For the task data list, refer to the following Table 9.

**Table 9**

| Frame sequence number | Frame task amount |
|---|---|
| 1 | Task amount 1 |
| 2 | Task amount 2 |
| ... | ... |

The frame sequence numbers may be arranged according to an execution sequence of tasks of all frames. For example, in tasks of frames executed by the UI thread and the RS thread, frame sequence numbers may be sequence numbers of the frame synchronization signals shown in FIG. 12B. A task amount of a frame may be a product of running duration of the frame and computing power of the CPU during running of the frame, or may be an integral of the computing power of the CPU during running of the frame to the running duration of the frame. In some embodiments, the task amount of the frame may be a task amount obtained after normalization processing.

The task data list may include a task amount corresponding to each frame executed by the UI thread and a task amount corresponding to each frame executed by the RS thread.

For the frame tasks executed by the UI thread and the RS thread, refer to the descriptions of FIG. 12B. In some embodiments, if the critical thread is an audio playing thread, a task amount of one frame executed by the audio playing thread may include a task amount of playing one frame of audio. Task types of frame tasks executed by the critical thread and the critical dependent thread are not limited in this embodiment of this application.

S1214: Obtain a form of a frequency adjustment function, and value ranges and simulation granularities of a slope parameter and a curvature parameter in the frequency adjustment function.

For the form of the frequency adjustment function, refer to the formula (2).

S1215: Traverse the value ranges of the slope parameter and the curvature parameter based on the simulation granularities, to determine frequency adjustment functions.

S1216: Traverse the task data list, and simulate, based on the CPU energy efficiency curve, frame loss data and power consumption of the critical thread and the critical dependent thread when the frequency adjustment functions are used to perform dynamic frequency adjustment on the critical thread and the critical dependent thread.

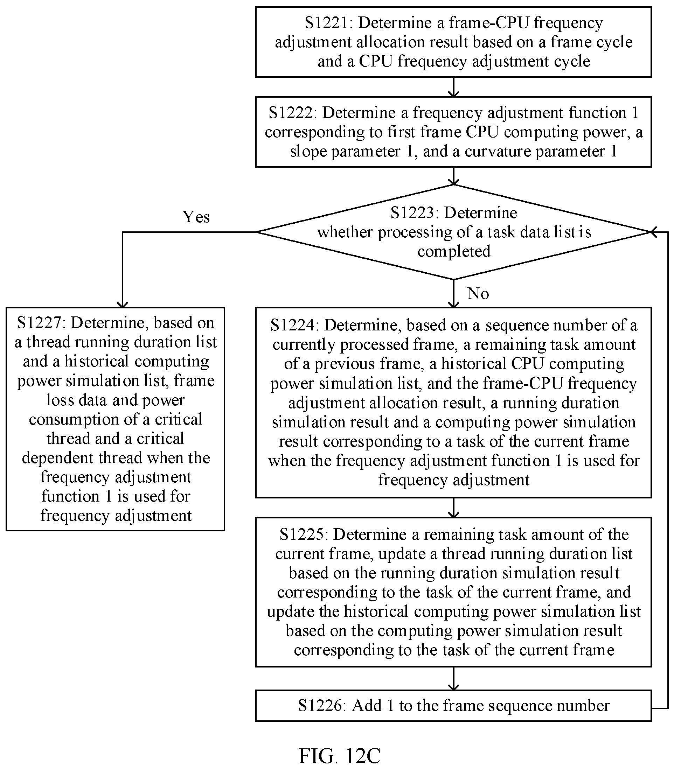

For a method for determining the frame loss data and the power consumption of the critical thread and the critical dependent thread, refer to the following method shown in FIG. 12C in this application.

S1217: Determine whether traversal of the value ranges of the slope parameter and the curvature parameter is completed.

If traversal of the value ranges of the slope parameter and the curvature parameter is completed, the frequency adjustment simulator in the server 200 may perform the following step S1218.

If traversal of the value ranges of the slope parameter and the curvature parameter is not completed, the frequency adjustment simulator in the server 200 may continue to perform the foregoing step S1215.

S1218: Determine an optimal frequency adjustment function based on the frame loss data and the power consumption corresponding to the frequency adjustment functions under a plurality of different value combinations of the slope parameter and the curvature parameter.

The frequency adjustment simulator may determine the different frequency adjustment functions based on the different value combinations of the slope parameter and the curvature parameter. The frequency adjustment simulator may obtain, through simulation, frame loss data and power consumption corresponding to the different frequency adjustment functions when frequency adjustment is performed on the same critical thread and the same critical dependent thread.

In some embodiments, the frequency adjustment simulator may first select frequency adjustment functions with smallest frame loss data, and determine a frequency adjustment function with lowest power consumption in the frequency adjustment functions with the smallest frame loss data as the optimal frequency adjustment function. Alternatively, the frequency adjustment simulator may first select frequency adjustment functions with lowest power consumption, and determine a frequency adjustment function with smallest frame loss data in the frequency adjustment functions with the lowest power consumption as the optimal frequency adjustment function. Alternatively, the frequency adjustment simulator may perform weighted summation on the frame loss data and the power consumption corresponding to the frequency adjustment functions, and determine a frequency adjustment function with a smallest weighted summation value as the optimal frequency adjustment function.

The method for determining the optimal frequency adjustment function based on the frame loss data and the power consumption corresponding to the frequency adjustment functions is merely an example description of this application, and shall not constitute any limitation on this application.

**FIG. 12C** **is a flowchart of an example of a method for determining frame loss data and power consumption of a critical thread and a critical dependent thread based on a set of slope parameters and curvature parameters.**

S1221: Determine a frame-CPU frequency adjustment allocation result based on a frame cycle and a CPU frequency adjustment cycle.

In some embodiments, the frame cycle may indicate a time interval between two adjacent frame synchronization signal deliveries. For a frame synchronization signal, refer to the descriptions in FIG. 12B. The CPU frequency adjustment cycle may indicate a time interval between two adjacent CPU frequency adjustments.

The CPU frequency adjustment cycle and the frame cycle may be different. For example, the frame cycle may be 8.3 ms. The CPU frequency adjustment cycle may be 4 ms. Therefore, a moment at which an electronic device performs CPU frequency adjustment may be different moments in different frame cycles.

For example, the electronic device may perform a first CPU frequency adjustment at 4 ms, perform a second CPU frequency adjustment at 8 ms, perform a third CPU frequency adjustment at 12 ms, and perform a fourth CPU frequency adjustment at 16 ms. The critical thread of the electronic device runs a task of a first frame after 0 ms and before 8.3 ms, and runs a task of a second frame after 8.3 ms and before 16.6 ms. In this case, the electronic device may perform the first CPU frequency adjustment at 4 ms in a frame cycle in which the task of the first frame is located. The electronic device may perform the second CPU frequency adjustment at 8 ms in the frame cycle in which the task of the first frame is located. The electronic device may perform the third CPU frequency adjustment at 3.7 ms in a frame cycle in which the task of the second frame is located. The electronic device may perform the fourth CPU frequency adjustment at 7.7 ms in the frame cycle in which the task of the second frame is located.

The frame-CPU frequency adjustment allocation result may indicate a correspondence between the CPU frequency adjustment cycle and the frame cycle, to determine a frame cycle in which a current CPU frequency adjustment is located. In this way, the electronic device may determine, based on whether a frame task in the frame cycle in which the current CPU frequency adjustment is located is completed, whether to increase or reduce a frequency.

S1222: Determine a frequency adjustment function 1 corresponding to first frame CPU computing power, a slope parameter 1, and a curvature parameter 1.

The first frame CPU computing power may be preset. A frequency adjustment simulator may determine, based on a frequency adjustment computing power table, a first frame CPU frequency corresponding to the first frame computing power. A value of the first frame CPU computing power is not limited in this embodiment of this application.

S1223: Determine whether processing of a task data list is completed.

That processing of the task data list is completed may indicate that the frequency adjustment simulator uses the frequency adjustment function 1 to simulate all frame tasks in the task data list. Using the frequency adjustment function 1 to simulate a task of one frame may indicate that the frequency adjustment simulator uses the frequency adjustment function 1 to adjust the CPU frequency in a running process of the task of the frame, to determine running duration and power consumption of the task of the frame under an action of the frequency adjustment function 1.

In some embodiments, the frequency adjustment simulator may use the frequency adjustment function 1 to simulate the frame tasks in the task data list according to a sequence of frame sequence numbers in the task data list.

If processing of the task data list is completed, the frequency adjustment simulator may perform the following step S1227.

If processing of the task data list is not completed, the frequency adjustment simulator may perform the following step S1224.

S1224: Determine, based on a sequence number of a currently processed frame, a remaining task amount of a previous frame, a historical CPU computing power simulation list, and the frame-CPU frequency adjustment allocation result, a running duration simulation result and a computing power simulation result corresponding to a task of the current frame when the frequency adjustment function 1 is used for frequency adjustment.

The frequency adjustment simulator may obtain the sequence number of the currently processed frame, and then determine a task amount of the current frame task based on the frame sequence number.

In some embodiments, a task amount of the previous frame of the current frame may not be fully completed in a frame cycle (for example, 8.3 ms) in which the task of the previous frame is running. In this case, the remaining task amount of the previous frame may continue to be performed in the frame cycle corresponding to the task of the current frame. In the frame cycle corresponding to the task of the current frame, the frequency adjustment simulator may first complete the remaining task amount of the previous frame, and then start to run the task of the current frame. If there is no remaining task amount of the previous frame, the frequency adjustment simulator may directly start to run the task of the current frame in the frame cycle corresponding to the task of the current frame.

The historical CPU computing power simulation list may include each frame task before the task of the current frame, running duration under the action of the frequency adjustment function 1, and computing power corresponding to a running stage. The frequency adjustment simulator may determine a value of margin in the frequency adjustment function 1 based on current existing data in the historical CPU computing power simulation list, and then simulate the task of the current frame based on the frequency adjustment function 1 corresponding to the margin. In some embodiments, the value of margin may be an average value of running duration of current existing frame tasks in the historical CPU computing power simulation list.

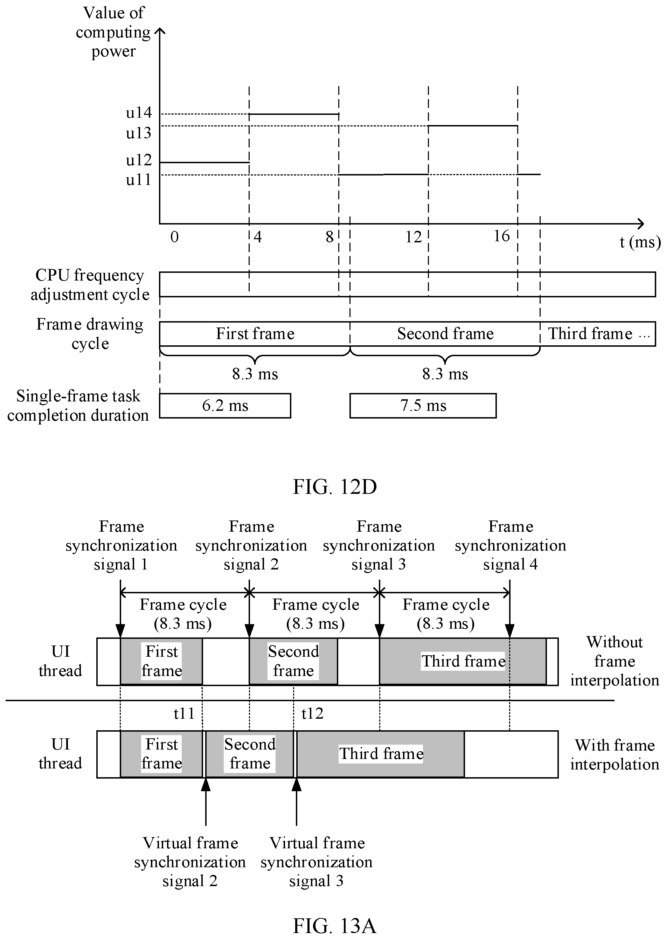

FIG. 12D is a diagram of an example of simulating different frame tasks of a thread based on a frequency adjustment function 1.

As shown in FIG. 12D, a CPU frequency adjustment cycle is 4 ms. The CPU frequency adjustment cycle may also be referred to as a computing power adjustment cycle. A frame drawing cycle may be 8.3 ms. The frame drawing cycle may be a frame cycle of a frame drawing thread (for example, a UI thread or an RS thread). First frame CPU computing power may be u12. The frequency adjustment simulator may start to run a task of a first frame of the frame drawing thread from 0 ms.

The frequency adjustment simulator may start to run the task of the first frame of the frame drawing thread, that is, simulate the task of the first frame, at 0 ms.

After 0 ms and before 4 ms, CPU computing power provided by the frequency adjustment simulator for the frame drawing thread may be u12. 4 ms may be a CPU frequency adjustment moment. At 4 ms, the frequency adjustment simulator may determine whether the task of the first frame is completed. If the task of the first frame is not completed, the frequency adjustment simulator may increase the CPU computing power provided for the frame drawing thread from u12 to u14 shown in FIG. 12D based on the frequency adjustment function 1, that is, increase a CPU frequency. After 4 ms and before 8 ms, the CPU computing power provided by the frequency adjustment simulator for the frame drawing thread may be u14. When the frequency adjustment function 1 is used for frequency adjustment in the process of running the task of the first frame, the value of margin in the frequency adjustment function 1 may be preset. For example, the value of margin may be 6 ms. In addition, when the CPU frequency adjustment is performed at 4 ms, because running time of the task of the first frame is 4 ms, a value of Time in the frequency adjustment function 1 may be 4 ms. In this way, the frequency adjustment simulator may calculate an adjusted CPU frequency after CPU frequency adjustment is performed at 4 ms based on the frequency adjustment function 1.

As shown in FIG. 12D, duration of completing the task of the first frame is 6.2 ms. It may be understood that 6.2 ms may include duration of running the task of the first frame by the frame drawing thread (for example, the UI thread or the RS thread) and duration for the frame drawing thread to wait for running of a critical dependent thread of the frame drawing thread to run the task of the first frame.

8 ms may be a CPU frequency adjustment moment. Because 8 ms is still in a first frame drawing cycle, the frequency adjustment simulator may determine whether the task of the first frame is completed. If the task of the first frame is completed, the frequency adjustment simulator may reduce the CPU computing power provided for the frame drawing thread from u14 to u11 shown in FIG. 12D, that is, reduce the CPU frequency. After 8 ms and before 12 ms, the CPU computing power provided by the frequency adjustment simulator for the frame drawing thread may be u11. A value of u11 may be preset. The value of u11 is not limited in this embodiment of this application.

The frequency adjustment simulator may start to run a task of a second frame of the frame drawing thread, that is, simulate the task of the second frame, at 8.3 ms.

12 ms may be a CPU frequency adjustment moment. Because 12 ms is in a second frame drawing cycle, the frequency adjustment simulator may determine whether the task of the second frame is completed. If the task of the second frame is not completed, the frequency adjustment simulator may increase the CPU computing power provided for the frame drawing thread from u11 to u13 shown in FIG. 12D based on the frequency adjustment function 1. When the frequency adjustment function 1 is used for frequency adjustment in the process of running the task of the second frame, the value of margin in the frequency adjustment function 1 may be the running duration of the task of the first frame (for example, 6.2 ms). In addition, when the CPU frequency adjustment is performed at 12 ms, because running time of the task of the second frame is 3.7 ms (that is, before 12 ms and after 8.3 ms), the value of Time in the frequency adjustment function 1 may be 3.7 ms. In this way, the frequency adjustment simulator may calculate an adjusted CPU frequency after CPU frequency adjustment is performed at 12 ms based on the frequency adjustment function 1.

As shown in FIG. 12D, duration of completing the task of the second frame is 7.5 ms. It can be learned that the task of the second frame is completed at 15.8 ms (that is, 8.3 ms+7.5 ms). It may be understood that 7.5 ms may include duration of running the task of the second frame by the frame drawing thread (for example, the UI thread or the RS thread) and duration for the frame drawing thread to wait for running of the critical dependent thread of the frame drawing thread to run the task of the second frame.

16 ms may be a CPU frequency adjustment moment. Because 16 ms is in the second frame drawing cycle, the frequency adjustment simulator may determine whether the task of the second frame is completed. If the task of the second frame is completed, the frequency adjustment simulator may reduce the CPU computing power provided for the frame drawing thread from u13 to u11 shown in FIG. 12D.

Similarly, the frequency adjustment simulator may start to run a task of a third frame of the frame drawing thread, that is, simulate the task of the third frame, at 16.6 ms. When the frequency adjustment function 1 is used for frequency adjustment in the process of running the task of the third frame, the value of margin in the frequency adjustment function 1 may be an average value of running duration of the task of the first frame and running duration of the task of the second frame, that is, (6.2+7.5)/2=6.85 ms. By analogy, the frequency adjustment simulator may use the frequency adjustment function 1 to complete simulation of all frame tasks in the task data list.

When the frequency adjustment function 1 is used to simulate all the frame tasks, the frequency adjustment simulator may determine running duration simulation results and computing power simulation results that correspond to all the frame tasks when the frequency adjustment function 1 is used for frequency adjustment.

For example, as shown in FIG. 12D, when the frequency adjustment function 1 is used for frequency adjustment, a running duration simulation result of the task of the first frame is 6.2 ms, and a computing power simulation result may include: CPU computing power is u12 after 0 ms and before 4 ms during running of the task of the first frame, and CPU computing power is u14 after 4 ms and before 6.2 ms.

When the frequency adjustment function 1 is used for frequency adjustment, a running duration simulation result of the task of the second frame is 7.5 ms, and a computing power simulation result may include: the CPU computing power after 0 ms and before 3.7 ms during running of the task of the second frame is u11, and the CPU computing power after 3.7 ms and before 7.5 ms is u13.

The computing power value adjustment process shown in FIG. 12D is merely an example for description of this application, and shall not constitute any limitation on this application.

S1225: Determine a remaining task amount of the current frame, update a thread running duration list based on the running duration simulation result corresponding to the task of the current frame, and update the historical computing power simulation list based on the computing power simulation result corresponding to the task of the current frame.

If a task amount of the task of the current frame is not completed in the frame cycle (for example, 8.3 ms) corresponding to the task of the current frame, the remaining task amount of the current frame may be performed in a frame cycle corresponding to a task of a next frame. The running duration simulation result corresponding to the task of the current frame may indicate duration spent in fully completing the task amount of the current frame when the frequency adjustment function 1 is used for frequency adjustment.

For the thread running duration list, refer to the following Table 10.

**Table 10**

| Frame sequence number | Running duration simulation result (ms) |
|---|---|
| 1 | 6.2 |
| 2 | 7.5 |
| 3 | T3 |
| ... | ... |

For the historical computing power simulation list, refer to the following Table 11.

**Table 11**

| Frame sequence number | Frequency adjustments | Frame running period | Computing power |
|---|---|---|---|
| 1 | 1 | 0 ms to 4 ms | u12 |
| | 2 | 4 ms to 6.2 ms | u14 |
| 2 | 3 | 0 ms to 3.7 ms | u11 |
| | 4 | 3.7 ms to 7.5 ms | u13 |
| ... | ... | ... | ... |

Table 10 and Table 11 are merely examples for description of this application, and should not constitute a limitation on this application.

The frequency adjustment simulator may add the running duration simulation result corresponding to the task of the current frame to the thread running duration list, and add the computing power simulation result corresponding to the task of the current frame to the historical computing power simulation list.

S1226: Add 1 to the frame sequence number.

The frequency adjustment simulator may add 1 to the frame sequence number of the task of the current frame in step S1223 and step S1225, and perform step S1223, to determine whether processing of the task data list is completed. If the task data list does not include the frame sequence number obtained after 1 is added to the frame sequence number, the frequency adjustment simulator may determine that processing of the task data list is completed. If the frame sequence number obtained by adding 1 to the frame sequence number exists in the task data list, the frequency adjustment simulator may determine the frame sequence number obtained by adding 1 to the frame sequence number as a currently processed frame sequence number, and simulate the task of the current frame by using the frequency adjustment function 1 by using the method of step S1224 and step S1225.

S1227: Determine, based on a thread running duration list and a historical computing power simulation list, frame loss data and power consumption of a critical thread and a critical dependent thread when the frequency adjustment function 1 is used for frequency adjustment.

After simulating all the frame tasks in the task data list by using the frequency adjustment function 1, the frequency adjustment simulator may determine, based on the thread running duration list and the historical computing power simulation list, the frame loss data and the power consumption of the critical thread and the critical dependent thread when the frequency adjustment function 1 is used for frequency adjustment.

In some embodiments, the thread running duration list and the historical computing power simulation list may include running data of a multi-frame task of the UI thread under an action of the frequency adjustment function 1. The frequency adjustment simulator may calculate frame loss data and power consumption of the UI thread under the action of the frequency adjustment function 1. The frame loss data may include a quantity of lost frames (or referred to as the quantity of lost frames).

The number of lost frames of the UI thread under the action of the frequency adjustment function 1 may be calculated according to the following formula (3): $\begin{matrix}Number of lost frames = {\sum }_{i = 0}^{n 1} {d}_{i} {d}_{i} = \\ \left\{\begin{matrix}1 & running duration simulation result of a task of an {i}^{th} frame > time thread 1 \\ 0 & running duration simulation result of a task of an {i}^{th} frame \leq time thread 1\end{matrix}\right.\end{matrix}$ (3)

n1 may indicate a total quantity of frame tasks of the UI thread in the task data list. For example, if the task data list includes tasks of 100 frames of the UI thread, n1 is 100. A running duration simulation result of the task of the i^{th} frame in the UI thread may be obtained by querying the thread running duration list. A duration threshold 1 may be preset. For example, the duration threshold 1 may be 8.33 ms, 16.66 ms, 33.33 ms, or the like. A value of the duration threshold 1 is not limited in this embodiment of this application.

The running duration simulation result of the task of the i^{th} frame greater than the duration threshold 1 may indicate a frame loss in the task of the i^{th} frame. It may be understood that after completing a task of one frame, the UI thread indicates the RS thread to draw an image corresponding to the frame. Running duration of the task of one frame of the UI thread is greater than the frame drawing cycle, and a frame loss of a user interface may not actually occur. Therefore, the duration threshold 1 may be greater than the frame drawing cycle (for example, 8.3 ms).

The power consumption of the UI thread under the action of the frequency adjustment function 1 may be calculated according to the following formula (4): $Power consumption = f \left({\sum }_{i = 0}^{m} computing power i \times running duration i\right)$ (4)

m may indicate a total quantity of frequency adjustments in a running process of a frame task of the UI thread in the task data list. The computing power i may indicate a computing power value after an i^{th} frequency adjustment. The running duration i may indicate running duration of a frame task of the UI thread after the i^{th} frequency adjustment. Refer to Table 11. For example, a task of the first frame is a frame task of the UI thread. A computing power value after a first frequency adjustment of the frequency adjustment simulator is u12, and frame task running duration of the UI thread is 4 ms. Therefore, computing power 1×running duration 1=4×u12. A computing power value after a second frequency adjustment of the frequency adjustment simulator is u14, and frame task running duration of the UI thread is 2.2 ms. Therefore, computing power 2 × running duration 2=2.2 × u12. f() may be a conversion formula of power consumption computing power. f() may be determined by a CPU energy efficiency curve.

In some embodiments, the thread running duration list and the historical computing power simulation list may include running data of a multi-frame task of the RS thread under the action of the frequency adjustment function 1. The frequency adjustment simulator may calculate frame loss data and power consumption of the RS thread under the action of the frequency adjustment function 1.

The number of lost frames of the RS thread under the action of the frequency adjustment function 1 may be calculated according to the following formula (5): $\begin{matrix}Number of lost frames = {\sum }_{i = 0}^{n 2} {d}_{i} {d}_{i} = \\ \left\{\begin{matrix}1 & running duration simulation result of the task of the {i}^{th} frame > time thread 2 \\ 0 & running duration simulation result of the task of the {i}^{th} frame \leq time thread 2\end{matrix}\right.\end{matrix}$ (5)

n2 may indicate a total quantity of frame tasks of the RS thread in the task data list. For example, if the task data list includes tasks of 100 frames of the RS thread, n2 is 100. A running duration simulation result of the task of the i^{th} frame in the RS thread may be obtained by querying the thread running duration list. A duration threshold 2 may be preset. The duration threshold 2 may be the same as or different from the duration threshold 1. It may be understood that the frame task of the RS thread is directly related to rendering and displaying the user interface. Running duration of a task of one frame of the RS thread is greater than the frame drawing cycle, and a frame loss of a user interface may not actually occur. Therefore, a value of the duration threshold 2 may be less than the value of the duration threshold 1. This can more accurately reflect a quantity of lost frames.

For power consumption of the RS thread under the action of the frequency adjustment function 1, refer to the calculation method of the formula (4).

Because both the UI thread and the RS thread are frame drawing threads, the frequency adjustment simulator may determine a total quantity of lost frames based on the quantities of lost frames of the UI thread and the RS thread under the action of the frequency adjustment function 1. For example, the frequency adjustment simulator may determine a sum of the quantities of lost frames of the UI thread and the RS thread under the action of the frequency adjustment function 1 as the total quantity of lost frames. Alternatively, the frequency adjustment simulator may perform weighted summation on the quantities of lost frames of the UI thread and the RS thread under the action of the frequency adjustment function 1, to determine the total quantity of lost frames.

The frequency adjustment simulator may further determine total power consumption based on power consumption of the UI thread and the RS thread under the action of the frequency adjustment function 1. For example, the frequency adjustment simulator may determine a sum of power consumption of the UI thread and the RS thread under the action of the frequency adjustment function 1 as the total power consumption.

For a method in which the frequency adjustment simulator performs simulation by using frequency adjustment functions corresponding to other slope parameters and curvature parameters, refer to the foregoing method for performing simulation by using the frequency adjustment function 1.

The frequency adjustment simulator may determine an optimal frequency adjustment function based on the total quantity of lost frames and total power consumption of the UI thread and the RS thread in the task data list when different frequency adjustment functions are used for frequency adjustment. The different frequency adjustment functions may include frequency adjustment functions under different value combinations of the slope parameters and the curvature parameters.

In some embodiments, the frequency adjustment simulator may alternatively determine a total quantity of lost frames and total power consumption corresponding to the frequency adjustment function in combination with a quantity of lost frames and power consumption of another type of critical thread (for example, an audio playing thread) under the action of the frequency adjustment function, and then select the optimal frequency adjustment function. This is not limited to the UI thread and the RS thread. Optionally, the frequency adjustment simulator may separately determine the total quantity of lost frames and the total power consumption corresponding to the frequency adjustment function by using the quantity of lost frames and the power consumption of the UI thread under the action of the frequency adjustment function, and then select the optimal frequency adjustment function. Alternatively, the frequency adjustment simulator may separately determine the total quantity of lost frames and the total power consumption corresponding to the frequency adjustment function by using the quantity of lost frames and the power consumption of the RS thread under the action of the frequency adjustment function, and then select the optimal frequency adjustment function.

In some embodiments, when a frequency adjustment simulator simulates a frame task by using a frequency adjustment function (for example, a frequency adjustment function 1), a frame interpolation scenario and/or a frame skipping scenario may be further considered, to improve accuracy of a simulation result.

Frame interpolation may be used to run a short frame task in advance, so that a subsequent long frame task can be completed in a corresponding frame cycle. Frame interpolation can reduce frame losses caused by timeout of frame task running. The short frame task may indicate a frame with a small task amount that can be completed in advance in a frame cycle. The long frame task may indicate a frame with a large task amount that cannot be completed in a cycle.

**FIG. 13A** **is a diagram of an example of a frame interpolation scenario.**

As shown in FIG. 13A, a task of a first frame and a task of a second frame of a UI thread are both short frame tasks, and a task of a third frame is a long frame task. Without frame interpolation, the UI thread may start to run the task of the third frame when receiving a frame synchronization signal 3. The task of the third frame has a large task amount. When the UI thread receives a frame synchronization signal 4, the task amount of the third frame is not completed.

When a frame interpolation strategy is used, an electronic device may detect completion time of a task of each frame. When a short frame task is completed in advance in a frame cycle, the electronic device may deliver a virtual synchronization signal to the UI thread, to indicate the UI thread to start to run a task of a next frame.

For example, as shown in FIG. 13A, when it is detected that the task of the first frame is completed at a moment t11, the electronic device may deliver a virtual frame synchronization signal 2 to the UI thread. The moment t11 may be a moment in a frame cycle corresponding to a frame synchronization signal 1 and a frame synchronization signal 2. The UI thread may start to run the task of the second frame based on the virtual frame synchronization signal 2. When it is detected that the task of the second frame is completed at a moment t12, the electronic device may deliver a virtual frame synchronization signal 3 to the UI thread. The moment t12 is earlier than a delivery moment of the frame synchronization signal 3. The UI thread may start to run the task of the third frame based on the virtual frame synchronization signal 3. It can be learned that, because the UI thread has started to run the task of the third frame before the frame synchronization signal 3 arrives, the UI thread may fully complete a task amount of the task of the third frame before a frame synchronization signal 4 arrives. This can avoid a remaining task amount of the third frame that needs to be run in a next frame cycle.

When simulating a frame task by using a frequency adjustment function, the frequency adjustment simulator may use a frame interpolation strategy. Because frame interpolation advances running time of one or more frames of tasks, the frequency adjustment simulator may determine a frame of a frame task that is actually run each frequency adjustment, and then determine a running time period of each frame task and CPU computing power during running.

Frame skipping may be used to discard a task that waits for excessively long. Frame skipping may reduce a quantity of lost frames by reducing a backlog of frame tasks.

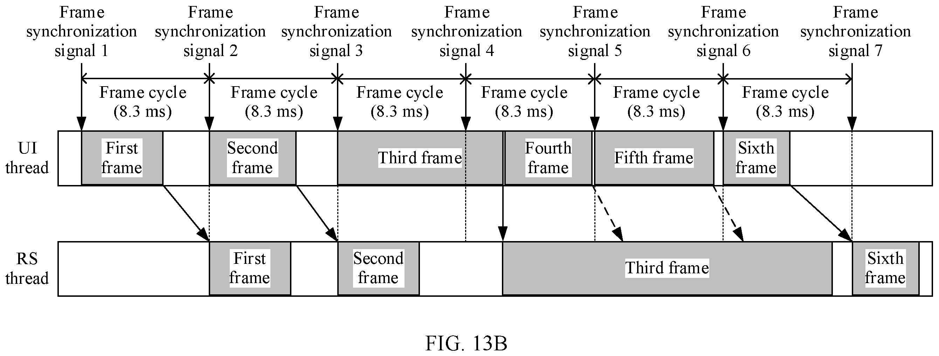

**FIG. 13B** **is a diagram of an example of a frame skipping scenario.**

The following describes the frame skipping scenario by using frame skipping of an RS thread as an example.

As shown in FIG. 13B, a UI thread may run a corresponding frame task based on a received frame synchronization signal. It can be learned from the descriptions of FIG. 12B that after completing a task of a frame, the UI thread sends, to the RS thread, a drawing instruction corresponding to the task of the frame, to instruct the RS thread to draw a user interface corresponding to the task of the frame.

For example, after receiving a frame synchronization signal 3, the UI thread may run a task of a third frame (for example, determining display content of a user interface of the third frame) of the UI thread. The task of the third frame of the UI thread has a large task amount. After receiving a frame synchronization signal 4, the UI thread may continue to run a remaining task amount of the third frame of the UI thread, and after running of the task of the third frame ends, start to run a task of a fourth frame of the UI thread.

After the task of the third frame of the UI thread ends, the UI thread may send, to the RS thread, a frame drawing instruction for drawing the user interface of the third frame. Based on the frame drawing instruction, the RS thread may run a task of the third frame (for example, rendering and displaying the user interface of the third frame) of the RS thread. The task of the third frame of the RS thread has a large task amount. Before the RS thread receives a frame synchronization signal 6, the task of the third frame of the RS thread is still not completed. Therefore, after receiving the frame synchronization signal 6, the RS thread may continue to run the task of the third frame of the RS thread.

After receiving a frame synchronization signal 5, the UI thread may run a task of a fifth frame of the UI thread, and after receiving the frame synchronization signal 6, run a task of a sixth frame of the UI thread. After completing the task of the fourth frame of the UI thread, the UI thread may send, to the RS thread, a frame drawing instruction for drawing a user interface of the fourth frame, and after completing the task of the fifth frame of the UI thread, send, to the RS thread, a frame drawing instruction for drawing a user interface of the fifth frame. However, because the RS thread is running the task of the third frame of the RS thread, a task of the fourth frame (for example, rendering and displaying the user interface of the fourth frame) and a task of the fifth frame (for example, rendering and displaying the user interface of the fifth frame) of the RS thread need to wait for completion of the task of the third frame of the RS thread.

In some embodiments, when time during which a task of a frame is waiting for running exceeds a preset time threshold, a thread may skip the frame and directly run a task of a next frame. A value of the time threshold is not limited in this embodiment of this application. For example, when the task of the third frame of the RS thread is completed, waiting time of the task of the fourth frame of the RS thread is T4, and waiting time of the task of the fifth frame of the RS thread is T5. If both T4 and T5 are greater than the time threshold, the RS thread may skip the task of the fourth frame and the task of the fifth frame of the RS thread. After completing the task of the third frame of the RS thread, the RS thread may run the task of the sixth frame of the RS thread (for example, rendering and displaying a user interface of the sixth frame) based on a frame synchronization signal 7.

When simulating a frame task by using a frequency adjustment function, the frequency adjustment simulator may use a frame skipping strategy. Frame skipping skips running of one or more frames of tasks. The frequency adjustment simulator may determine a quantity of lost frames based on a quantity of skipped frames. The quantity of lost frames may include the quantity of skipped frames. In addition, because a skipped frame task is not run, the frequency adjustment simulator may not need to calculate power consumption corresponding to the skipped frame task when calculating power consumption of a thread.

It may be understood that, in an actual running scenario of a thread, the electronic device may use a frame interpolation strategy and/or a frame skipping strategy for a frame task of the thread. That the frequency adjustment simulator performs simulation by using the frequency adjustment function and the frame interpolation strategy and/or the frame skipping strategy can more realistically simulate an actual running process of the thread, thereby more accurately finding an optimal frequency adjustment function.

The optimal frequency adjustment function determined by the frequency adjustment simulator through simulation by the frequency adjustment simulator has the following features: A curvature parameter of the optimal frequency adjustment function is less than 1 (that is, a frequency adjustment curve corresponding to the optimal frequency adjustment function is a convex upward curve), a convexity of the frequency adjustment curve corresponding to the optimal frequency adjustment function is positively correlated with a convexity of a CPU energy efficiency curve, and an increment of the optimal frequency adjustment function decreases with an increase of running time (that is, Time in the formula (2)) of a frame task, complying with a trend that a task amount of the frame task decreases with an increase of the running time of the frame task. The frequency adjustment curve corresponding to the optimal frequency adjustment function may be referred to as an optimal frequency adjustment curve.

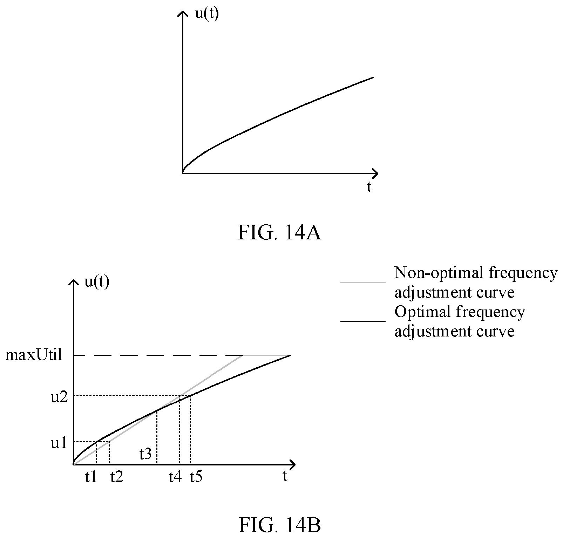

**FIG. 14A** **is a diagram of an example of an optimal frequency adjustment curve.**

As shown in FIG. 14A, the optimal frequency adjustment curve is a convex upward curve. For a coordinate axis on which the optimal frequency adjustment curve is located, refer to the descriptions of the coordinate axis on which the frequency adjustment curve shown in FIG. 10 is located. It can be learned that, in a period of time (that is, when time t is small) in which a frame task starts to run, an increment of computing power u(t) is great. As the time t (that is, Time in the frequency adjustment function) increases, the increment of the computing power u(t) gradually decreases.

A slope parameter and a curvature parameter of the optimal frequency adjustment curve are related to a CPU energy efficiency curve. Optimal frequency adjustment curves corresponding to different CPU energy efficiency curves may be different. In some embodiments, the server 200 may obtain, through simulation by the frequency adjustment simulator shown in FIG. 11A, an optimal frequency adjustment function corresponding to a CPU of any model. The frequency adjustment simulator may determine the optimal frequency adjustment function of the CPU of the model based on historical CPU load data of the CPU of the model running in a time period and a CPU energy efficiency curve of the CPU of the model. For a method for determining the optimal frequency adjustment function, refer to the methods shown in FIG. 12A and FIG. 12C.

**FIG. 14B** **is a diagram of an example of comparison between an optimal frequency adjustment curve and a non-optimal frequency adjustment curve.**

As shown in FIG. 14B, a black line may indicate the optimal frequency adjustment curve, and a gray line may indicate the non-optimal frequency adjustment curve. For the non-optimal frequency adjustment curve, refer to the frequency adjustment curve shown in FIG. 10. It may be understood that all frequency adjustment curves other than the optimal frequency adjustment curve are non-optimal frequency adjustment curves. The non-optimal frequency adjustment curve shown in FIG. 14B is merely an example of the non-optimal frequency adjustment curve.

It can be learned from comparison between the optimal frequency adjustment curve and the non-optimal frequency adjustment curve that the optimal frequency adjustment curve and the non-optimal frequency adjustment curve intersect at a moment t3. Before the moment t3, computing power on the optimal frequency adjustment curve at a same moment is greater. After the moment t3, computing power on the optimal frequency adjustment curve at a same moment is less.

A time period in which time t is small may be a time period in which a task of a frame just starts to run. In this case, the task of the frame surely have a to-be-completed task amount. A time period in which the time t is large is a time period after the task of the frame has been running for a period of time. In this case, a task amount of the task of the frame may have been completed.

Compared with the non-optimal frequency adjustment curve, the optimal frequency adjustment curve can faster increase CPU computing power when the time t is small (that is, at a frame header of the task of the frame). This not only can improve a frame task running speed to faster complete a corresponding frame task amount, but also can reduce an urgent and violent frequency increase at a frame tail of the task of the frame. Compared with the non-optimal frequency adjustment curve, the optimal frequency adjustment curve can reduce a growth speed of CPU computing power when the time t is large (that is, at the frame tail of the task of the frame). This can reduce a fast increase of CPU computing power after a task of a frame is completed, thereby reducing a waste of the CPU computing power.

It can be learned from the energy efficiency curve shown in FIG. 11B that when computing power is from u1 to u2, energy efficiency of a CPU is optimal (that is, the CPU can execute a maximum quantity of tasks at same power consumption).

As shown in FIG. 14B, computing power on the optimal frequency adjustment curve corresponding to a moment t1 is u1, and computing power on the optimal frequency adjustment curve corresponding to a moment t5 is u2. Computing power on the non-optimal frequency adjustment curve corresponding to a moment t2 is u1, and computing power corresponding to a moment t4 is u2. The moment t1 is earlier than the moment t2, and the moment t5 is later than the moment t4. Compared with the non-optimal frequency adjustment curve, when frequency adjustment is performed based on the optimal frequency adjustment curve, the CPU can be in an optimal energy efficiency state in a longer time period. This facilitates efficient utilization of CPU resources, to complete more tasks with less power consumption.

It can be learned that the optimal frequency adjustment curve can improve a running speed of a frame task, so that the frame task can be completed in a corresponding frame cycle. This can reduce non-smooth performance like freezing of an electronic device caused by a frame loss. In addition, the optimal frequency adjustment curve can reduce power consumption of the electronic device during frame task running, thereby improving battery endurance of the electronic device and mitigate excessively rapid temperature rise of the electronic device.

In some embodiments, the task generation module and the frequency adjustment simulator shown in FIG. 11A may be used as an optimal frequency adjustment function determining tool for a developer. The optimal frequency adjustment function determining tool can help the developer determine an optimal frequency adjustment function of a CPU of any model. The optimal frequency adjustment function determining tool may provide an input interface for the developer to input parameters such as historical CPU load data, a CPU energy efficiency curve, a slope parameter value range, a curvature parameter value range, and a simulation granularity. Based on the parameters input by the developer, the optimal frequency adjustment function determining tool may generate and output the optimal frequency adjustment function.

In some embodiments, in addition to using the optimal frequency adjustment function for frequency adjustment, the electronic device may further perform frequency adjustment in combination with one or more other frequency adjustment strategies. For example, the electronic device may further detect a start moment and an end moment of running a task of each frame on a critical thread and a critical dependent thread. In addition to using the optimal frequency adjustment function for frequency adjustment based on a preset CPU frequency adjustment cycle, the electronic device may further increase a frequency at a start moment of running a task of a frame, and decrease the frequency at an end moment of running the task of the frame. This can better conserve power of the electronic device.

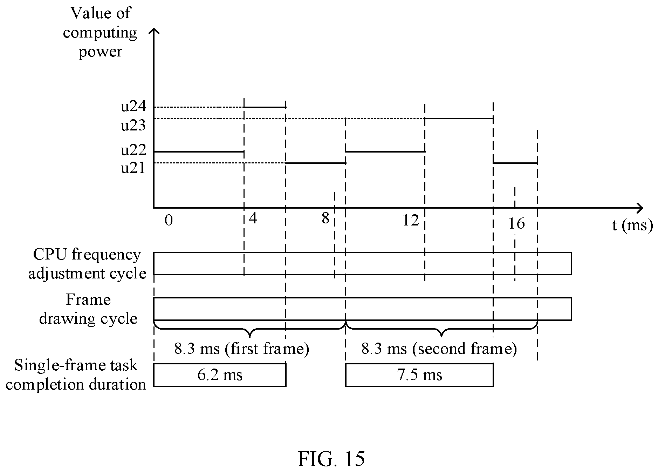

**FIG. 15** **is a diagram of an example of frequency adjustment according to this application.**

The following describes the diagram of CPU frequency adjustment during running of a frame drawing thread by using an example in which a CPU frequency adjustment cycle is 4 ms and a frame drawing cycle is 8.3 ms.

As shown in FIG. 15, an electronic device may start to run a task of a first frame of the frame drawing thread at 0 ms. When it is detected that 0 ms is a start moment of running the task of the first frame, the electronic device may increase CPU computing power to u22. The electronic device may adjust, based on a frequency computing power table, a CPU frequency to a CPU frequency corresponding to u22. Adjusting the CPU frequency may include adjusting a frequency of a CPU core of the task of the first frame of the frame drawing thread. The CPU computing power (that is, u22) increased by the electronic device at the start moment of running the task of the frame is not limited in this embodiment of this application.

After 0 ms and before 4 ms, the CPU for running the task of the first frame of the frame drawing thread may maintain the CPU frequency as the CPU frequency corresponding to u22. After 0 ms and before 4 ms, if a critical thread (for example, a UI thread or an RS thread) in the frame drawing thread suspends running and waits for running of a critical dependent thread (for example, a critical dependent thread of the UI thread or a critical dependent thread of the RS thread) in the frame drawing thread, the critical dependent thread can obtain more processor resources during running, to run fast and reduce waiting time of the critical thread.

4 ms may be a CPU frequency adjustment moment determined based on the CPU frequency adjustment cycle. At 4 ms, the electronic device may determine whether the task of the first frame is completed. If the task of the first frame is not completed, the electronic device may increase the CPU computing power to u24 based on an optimal frequency adjustment function. For a method for determining u24, refer to the method for determining u14 shown in FIG. 12D. The electronic device may adjust, based on the frequency computing power table, the CPU frequency to a CPU frequency corresponding to u24.

As shown in FIG. 15, duration of completing the task of the first frame is 6.2 ms. When it is detected that 6.2 ms is an end moment of running the task of the first frame, the electronic device may reduce the CPU computing power to u21. The electronic device may adjust, based on the frequency computing power table, the CPU frequency to a CPU frequency corresponding to u21. The CPU computing power (that is, u21) reduced by the electronic device at the end moment of running the task of the frame is not limited in this embodiment of this application.

8 ms may be a CPU frequency adjustment moment determined based on the CPU frequency adjustment cycle. Because 8 ms is still in a frame drawing cycle of the first frame, the electronic device may determine whether the task of the first frame is completed. It can be learned that the task of the first frame is already completed before 8 ms. Because the electronic device has reduced the CPU frequency when the task of the first frame is completed, the electronic device may not need to adjust the CPU frequency based on the optimal frequency adjustment function at 8 ms.

The electronic device may start to run a task of a second frame of the frame drawing thread at 8.3 ms. When it is detected that 8.3 ms is a start moment of running the task of the second frame, the electronic device may increase the CPU computing power to u22.

12 ms may be a CPU frequency adjustment moment determined based on the CPU frequency adjustment cycle. Because 12 ms is in a frame drawing cycle of the second frame, the electronic device may determine whether the task of the second frame is completed. If the task of the second frame is not completed, the electronic device may increase the CPU computing power to u23 based on the optimal frequency adjustment function. For a method for determining u23, refer to the method for determining u13 shown in FIG. 12D. The electronic device may adjust, based on the frequency computing power table, the CPU frequency to the CPU frequency corresponding to u23.

As shown in FIG. 15, duration of completing the task of the second frame is 7.5 ms. When it is detected that 15.8 ms (that is, 8.3 ms+7.5 ms) is an end moment of running the task of the second frame, the electronic device may reduce the CPU computing power to u21.

16 ms may be a CPU frequency adjustment moment determined based on the CPU frequency adjustment cycle. Because 16 ms is in the frame drawing cycle of the second frame, the electronic device may determine whether the task of the second frame is completed. It can be learned that the task of the second frame is already completed before 16 ms. Because the electronic device has reduced the CPU frequency when the task of the second frame is completed, the electronic device may not need to adjust the CPU frequency based on the optimal frequency adjustment function at 16 ms.

It can be learned from FIG. 15 that the electronic device may increase the CPU frequency in real time when a frame task of the critical thread and a frame task of the critical dependent thread start, and reduce the CPU frequency in real time when the frame task of the critical thread and the frame task of the critical dependent thread end. During running of the frame task of the critical thread and the frame task of the critical dependent thread, the electronic device may perform CPU frequency adjustment based on the optimal frequency adjustment function. This can improve accuracy of a processor resource supply to the critical thread and the critical dependent thread, thereby improving utilization of the processor resources, and achieving a balance between smooth device performance and requirements of long battery endurance and rapid cooling.

The following describes a structure of an electronic device in this application.

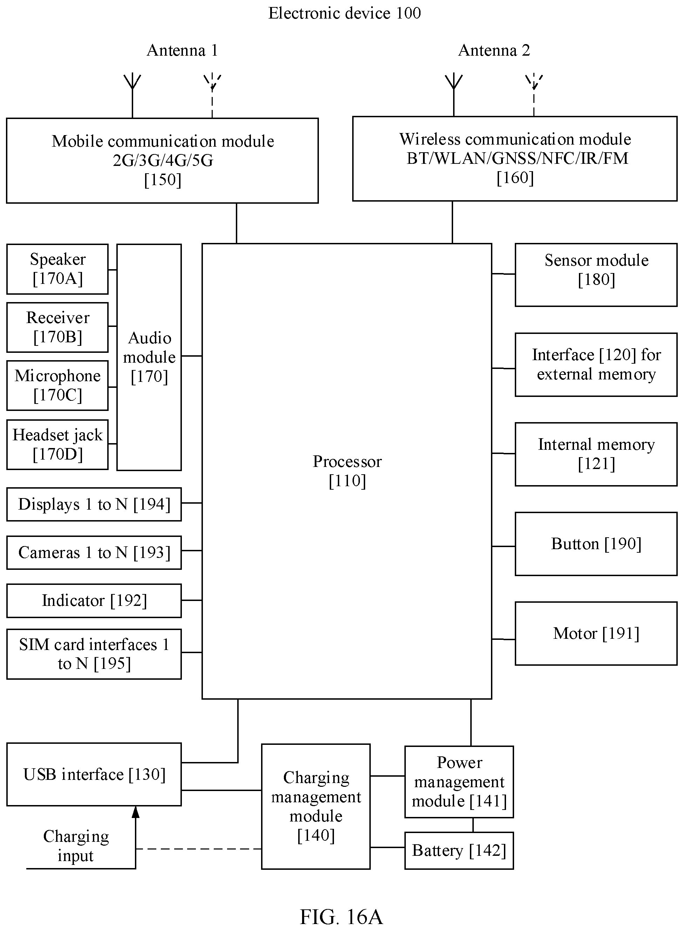

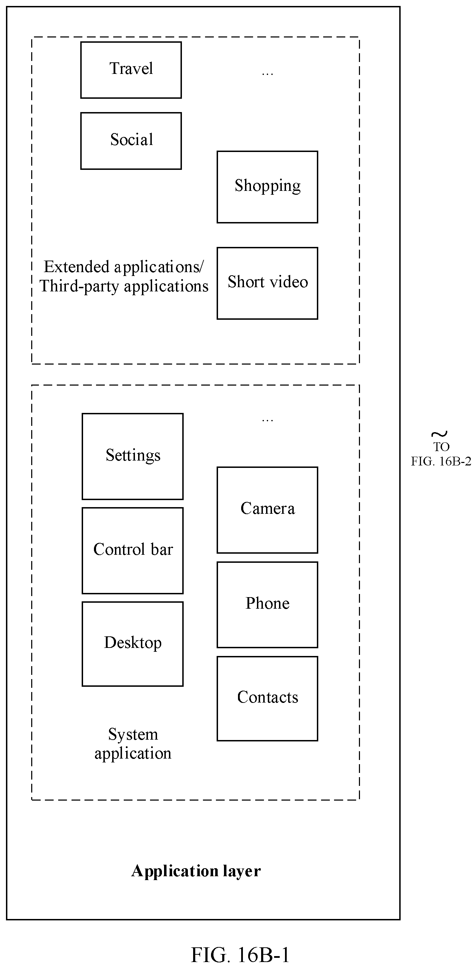

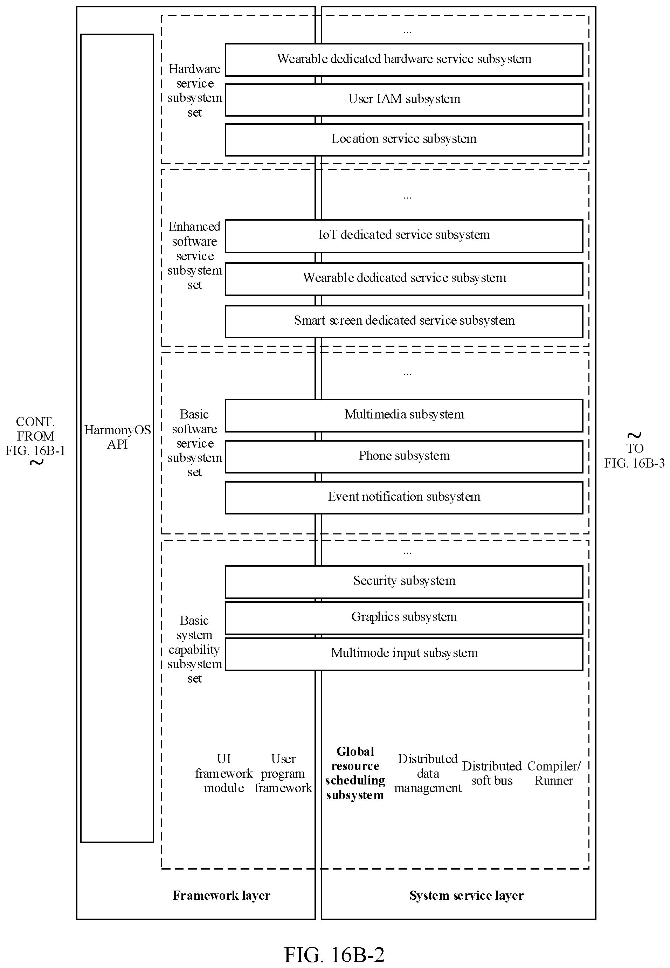

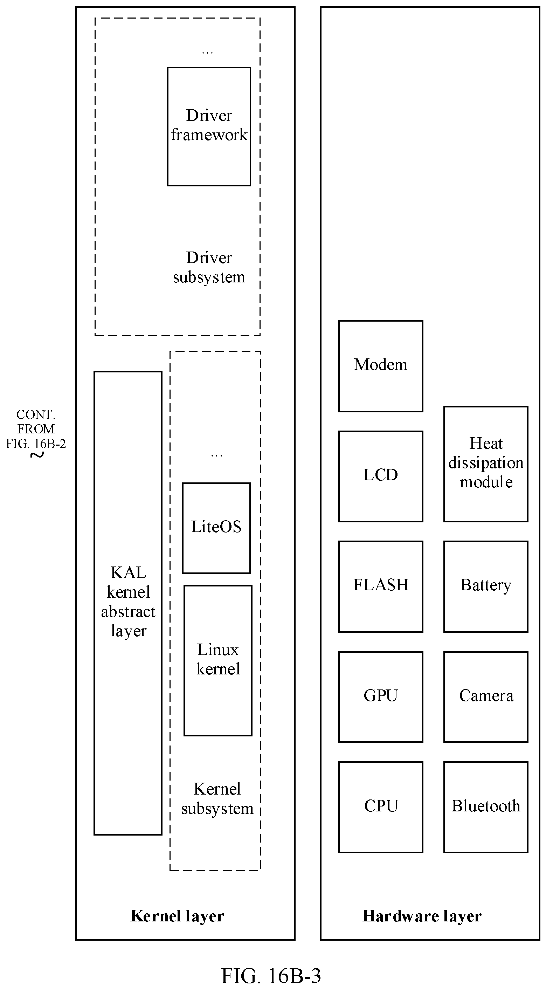

**FIG. 16A** **is a diagram of an example of a hardware structure of an electronic device 100.**

As shown in FIG. 16A, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In this application, the memory may store a computer program, so that the controller or the processor can implement the processor resource management method in this application through an interface or by using a protocol. For example, the computer program stored in the memory may be used to: identify a critical thread, a critical dependent thread, and a non-critical thread; increase priorities of the critical thread and the critical dependent thread; perform group management and control on CPU time slices allocated to threads; perform CPU bandwidth quota allocation to a thread in a target group; perform one or more of the following operations on a thread temporarily depended on by a thread in a foreground group: increasing a priority, increasing a CPU time slice length, and releasing bandwidth quota restriction; perform CPU frequency restriction on the thread in the target group; and dynamically adjust a CPU frequency during running of the critical thread and the critical dependent thread based on an optimal frequency adjustment function.

The USB interface 130 is an interface that complies with a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset.

The charging management module 140 is configured to receive a charging input from the charger. The charger may be a wireless charger or a wired charger. The charging management module 140 supplies power to the electronic device through the power management module 141 while charging the battery 142.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may also be reused to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image.

The display 194 is configured to display an image, a video, and the like. In some embodiments, the electronic device 100 may include one or N displays 194, where N is a positive integer greater than 1.

The electronic device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image.

The camera 193 is configured to capture a static image or a video. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The NPU is a neural-network (neural-network, NN) computing processor. The NPU quickly processes input information according to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The interface 120 for external memory may be configured to connect to an external memory card, for example, a micro SD card, to extend a storage capability of the electronic device 100. The external memory card communicates with the processor 110 through the interface 120 for external memory, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or a phone book) and the like created when the electronic device 100 is used. In addition, the internal memory 121 may include a high-speed random access memory, or may further include a non-volatile memory, for example, at least one magnetic disk storage device, a flash memory device, or a universal flash storage (universal flash storage, UFS).

The electronic device 100 may implement audio functions, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or a part of functional modules of the audio module 170 may be disposed in the processor 110.

The speaker 170A, also referred to as a "loudspeaker", is configured to convert an electrical audio signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or a voice message is listened to by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may place the mouth of the user near the microphone 170C to make a sound, to input a sound signal to the microphone 170C.

The headset jack 170D is configured to connect to a wired headset.

In this application, the speaker 170A, the receiver 170B, and the microphone 170C are all optional.

The sensor module 180 may include a pressure sensor, a gyroscope sensor, a barometric pressure sensor, a magnetic sensor, an acceleration sensor, a gravity sensor, a distance sensor, an optical proximity sensor, a fingerprint sensor, a temperature sensor, a touch sensor, an ambient light sensor, a bone conduction sensor, an angle sensor, and the like.

The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The electronic device 100 interacts with a network through the SIM card, to implement functions such as conversation and data communication. In some examples, the electronic device 100 uses an eSIM, namely, an embedded SIM card. The eSIM card may be embedded into the electronic device 100, and cannot be separated from the electronic device 100.

The electronic device 100 may be a mobile phone, a tablet computer, a smartwatch, a smart band, a sound box, a television, or the like. A type of the electronic device 100 is not limited in embodiments of this application.

**FIG. 16B-1 to FIG. 16B-3** **are a diagram of an example of a software structure of an electronic device 100.**

The electronic device 100 may run an operating system. The operating system may be various operating systems currently applied in the industry, including but not limited to: an operating system developed based on OpenHarmony, for example, HarmonyOS, or another operating system, for example, Android^{®} or an iOS^{®} mobile operating system; or may be various open-source operating systems or derivative operating systems thereof, such as a Linux OS and another embedded operating system; or may be a new operating system in the future, such as an artificial intelligence AI-based operating system. The operating system is a set of interrelated system software programs that manage and control an operation and use of the electronic device, run hardware and software resources, and provide public services to organize user interaction. The operating system plays a connecting role in the electronic device, connects to a physical device at a hardware layer downwards, and provides a running environment for application software upwards.

The following describes the software structure of the electronic device 100 by using HarmonyOS as an example. A person skilled in the art may derive implementation of embodiments of this application in another specific operating system based on this.

As shown in FIG. 16B-1 to FIG. 16B-3, the software structure of the electronic device 100 may be divided into several layers. In some embodiments, the layers are sequentially a kernel layer, a system service layer, a framework layer, and an application layer from bottom to top. The layers communicate with each other through a software interface. In deployment scenarios of different device forms, system functions can be tailored, added, or combined at a granularity of a subsystem, and each subsystem can be tailored, added, or combined at a granularity of a function. The electronic device 100 may further include a hardware layer. The hardware layer may include hardware apparatuses such as a CPU, a GPU, a flash memory (FLASH), a liquid crystal display (liquid crystal display, LCD), Bluetooth, a camera, a battery, and a heat dissipation module. An application at the application layer in the electronic device 100 may control a hardware apparatus at the hardware layer through the framework layer, the system service layer, and the kernel layer.

The kernel layer may include a kernel abstract layer (KAL, Kernel Abstract Layer), a kernel subsystem, and a driver subsystem. The kernel abstract layer shields a difference among a plurality of kernels and provides a basic kernel ability for an upper layer, including but not limited to process/thread management, memory management, file system management, network management, peripheral management, and the like. The kernel subsystem supports selection of an appropriate OS kernel for different resource-limited devices, including but not limited to Linux kernel, Harmony kernel, and LiteOS. The driver subsystem may include a driver framework. A driver framework is a basis of hardware ecosystem openness of the system, and provides a unified peripheral access capability and a driver development and management framework. The driver framework includes a display driver, a camera driver, an audio driver, a Bluetooth driver, a sensor driver, and the like. The kernel layer may further include a scheduler. The scheduler may be configured to schedule a running sequence of threads, and allocate resources such as CPU computing power to the threads.

The system service layer includes a set of core capabilities of the system and provides services for the applications through the framework layer. This layer includes subsystem sets, but is not limited to the following:
a basic system capability subsystem set, providing basic capabilities for operations such as running, scheduling, and migration of a distributed application on a plurality of devices, for example, including a global resource scheduling subsystem, distributed data management, a distributed soft bus, and a compiler/runner, and further including a multimode input subsystem, a graphics subsystem, a security subsystem, and the like;
a basic software service subsystem set, providing common and general software services, for example, including an event notification subsystem, a phone service subsystem, and a multimedia subsystem;
an enhanced software service subsystem set, providing differentiated capability enhanced software services for different devices, for example, including a smart screen dedicated service subsystem, a wearable dedicated service subsystem, and an IoT dedicated service subsystem; and
a hardware service subsystem set, providing a hardware service, for example, including subsystems such as a location service subsystem, a user IAM (Identity and Access Management, unified identity and access management) subsystem, a wearable dedicated hardware service subsystem, a biometric feature recognition subsystem, and an IoT dedicated hardware service subsystem.

The global resource scheduling subsystem may be configured to manage and schedule software and hardware resources in the electronic device 100, for example, a processor resource.

In some embodiments, the global resource scheduling subsystem may set a related parameter of a thread running priority, so that the scheduler at the kernel layer adjusts a priority of a thread.

In some embodiments, the global resource scheduling subsystem may further adjust a ratio of CPU weights of thread groups based on CPU load rates of threads in the different thread groups, so that the scheduler at the kernel layer adjusts CPU time slice lengths allocated to the different thread groups.

In some embodiments, the global resource scheduling subsystem may further set a related parameter of a CPU bandwidth quota of a thread, so that the scheduler at the kernel layer performs bandwidth quota allocation on the thread when scheduling the corresponding thread.

In some embodiments, the global resource scheduling subsystem may further label a thread temporarily depended on by a thread in a foreground group with a critical region label, so that the scheduler at the kernel layer can preferentially schedule the thread with the critical region label, allocate a longer CPU time slice to the thread with the critical region label, and release bandwidth quota restriction on the thread with the critical region label.

In some embodiments, the global resource scheduling subsystem may further adjust a CPU frequency through the kernel layer. For example, when a non-critical thread is running, the CPU frequency is controlled to be less than or equal to a preset maximum frequency. This can implement CPU frequency restriction on the non-critical thread, conserve device power, and mitigate rapid device temperature rise. For another example, when a critical thread and a critical dependent thread are running, the CPU frequency is dynamically adjusted based on an optimal frequency adjustment function. This can accurately supply processor resources to the critical thread and the critical dependent thread, and reduce an oversupply or undersupply of the processor resources. The CPU frequency adjustment can improve utilization of the processor resources, ensure smooth running of the critical thread and the critical dependent thread, and provide a user with smooth experience of using the electronic device.

Distributed data management may implement data synchronization, data storage, data sharing, and data access functions across devices in all scenarios.

The distributed soft bus provides communication-related capabilities, including WLAN service capabilities, Bluetooth service capabilities, a soft bus, and interprocess communication RPC (Remote Procedure Call).

The compiler/runner is a unified compilation and runtime platform designed to support joint compilation and running of a plurality of programming languages and a plurality of chip platforms. For example, the compiler/runner may be an ArkCompiler (ArkCompiler).

The framework layer provides an application programming interface (application programming interface, API) and a programming framework for an application at the application layer, for example, a UI framework module (the UI framework module provides complete infrastructure for UI development of a system application, including UI functions such as a component, a layout, an animation, and an interaction event, and a real-time interface preview tool), a user program framework, and an Ability framework (Ability is a lightweight application, and the Ability framework schedules and manages running and a life cycle of Ability). Different devices may run different operating systems and support different APIs.

HarmonyOS APIs are a series of open capabilities provided to support HarmonyOS application development. The HarmonyOS APIs may be set at the framework layer or be set independent of the framework layer. For example, the HarmonyOS API includes an Audio API (audio service), a Push API (push service), and an Account API (account service).

The applications may include the system applications and extended applications/thirdparty applications. The system application may include desktop, control bar, settings, contacts, phone, camera, and the like. The extended applications/third-party applications may include a social application, a travel application, a short video application, a shopping application, and the like.

An embodiment of this application further provides a computer-readable storage medium. The computer-readable storage medium stores a computer program. When the computer program is executed by a processor, steps in the foregoing method embodiments may be implemented.

An embodiment of this application further provides a computer program product, including a computer program. When the computer program is run on a processor, steps in the foregoing method embodiments may be implemented.

An embodiment of this application further provides a chip system. The chip system includes a processing circuit and an interface circuit. The interface circuit is configured to receive code instructions and transmit the code instructions to the processing circuit. The processing circuit is configured to run the code instructions, so that the chip system implements the steps in method embodiments of this application. The chip system may be a single chip, or a chip module including a plurality of chips.

It may be understood that each user interface described in embodiments of this application is merely an example interface, and constitutes no limitation on the solutions of this application. In another embodiment, the user interface may use different interface layouts, may include more or fewer controls, and may add or reduce other function options, and provided that the user interface is based on a same inventive idea provided in this application, all fall within the protection scope of this application.

It should be noted that, if no contradiction or conflict occurs, any feature or any part of any feature in any embodiment of this application may be combined, and a combined technical solution also falls within the scope of embodiments of this application.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to a part of the technical features thereof. These modifications or replacements do not cause the essence of the corresponding technical solutions to depart from the scope of the technical solutions of embodiments of this application.

## Claims

1. A processor resource management method, wherein the method is applied to an electronic device, and the method comprises:
running a first critical thread, and identifying, by the electronic device, a critical dependent thread of the first critical thread, wherein the critical dependent thread of the first critical thread comprises a thread other than the first critical thread on a first critical path, one node on the first critical path corresponds to one thread, both a head node and a tail node on the first critical path correspond to the first critical thread, and there is a wakeup relationship between two adjacent nodes on the first critical path; and
increasing, by the electronic device, a running priority of the critical dependent thread of the first critical thread.

2. The method according to claim 1, wherein the first critical thread is associated with a first application scenario, and before increasing, by the electronic device, the running priority of the critical dependent thread of the first critical thread, the method further comprises:
determining, by the electronic device based on a first application running in a foreground, that the electronic device is in the first application scenario.

3. The method according to claim 2, wherein after increasing, by the electronic device, the running priority of the critical dependent thread of the first critical thread, the method further comprises:
determining, by the electronic device based on a second application running in the foreground, that the electronic device is in a second application scenario;
identifying, by the electronic device, a critical dependent thread of a second critical thread, wherein the second critical thread is associated with the second application scenario, the critical dependent thread of the second critical thread comprises a thread other than the second critical thread on a second critical path, one node on the second critical path corresponds to one thread, both a head node and a tail node on the second critical path correspond to the second critical thread, and there is a wakeup relationship between two adjacent nodes on the second critical path; and
increasing, by the electronic device, a running priority of the critical dependent thread of the second critical thread.

4. The method according to claim 3, wherein after determining, by the electronic device based on the application running in the foreground, that the electronic device is in the second application scenario, the method further comprises:
lowering, by the electronic device, the running priority of the critical dependent thread of the first critical thread.

5. The method according to any one of claims 1 to 4, wherein identifying, by the electronic device, the critical dependent thread of the first critical thread comprises:
obtaining, by the electronic device, the critical dependent thread of the first critical thread based on a first critical dependent thread list, wherein the first critical dependent thread list comprises the critical dependent thread of the first critical thread, and the first critical dependent thread list is obtained by the electronic device from a server, or the first critical dependent thread list is generated or updated by the electronic device.

6. The method according to any one of claims 1 to 4, wherein identifying, by the electronic device, the critical dependent thread of the first critical thread comprises:
detecting, by the electronic device, a first thread wakeup event, wherein the first thread wakeup event indicates a first wakeup relationship corresponding to a first thread waking up a second thread;
obtaining, by the electronic device, a first historical quantity of occurrences of the first wakeup relationship and a second historical quantity of occurrences of the first wakeup relationship on the first critical path; and
in response to the first historical quantity greater than a first quantity threshold, and a proportion of the second historical quantity to the first historical quantity greater than a first probability threshold, identifying, by the electronic device, that a thread other than the first critical thread in the first thread and the second thread is the critical dependent thread of the first critical thread.

7. The method according to claim 5, wherein the first critical dependent thread list is generated or updated by the electronic device, and the method further comprises:
detecting, by the electronic device, a first thread wakeup event, wherein the first thread wakeup event indicates a first wakeup relationship corresponding to a first thread waking up a second thread;
obtaining, by the electronic device, a first historical quantity of occurrences of the first wakeup relationship and a second historical quantity of occurrences of the first wakeup relationship on the first critical path; and
in response to the first historical quantity greater than a first quantity threshold, and a proportion of the second historical quantity to the first historical quantity greater than a first probability threshold, adding, by the electronic device, a thread other than the first critical thread in the first thread and the second thread to the first critical dependent thread list.

8. The method according to claim 5 or 7, wherein the first critical dependent thread list comprises a third thread, and the method further comprises:
detecting, by the electronic device, a second thread wakeup event, wherein the second thread wakeup event indicates a second wakeup relationship corresponding to the third thread waking up another thread or another thread waking up the third thread;
obtaining, by the electronic device, a third historical quantity of occurrences of the second wakeup relationship and a fourth historical quantity of occurrences of the second wakeup relationship on the first critical path; and
in response to the third historical quantity less than or equal to a second quantity threshold, or a proportion of the fourth historical quantity to the third historical quantity less than or equal to a second probability threshold, removing, by the electronic device, the third thread from the first critical dependent thread list.

9. The method according to any one of claims 5 to 8, wherein the first critical thread is any thread in a first critical thread list, and the first critical dependent thread list comprises a critical dependent thread of one or more critical threads in the first critical thread list.

10. The method according to any one of claims 1 to 9, wherein the method further comprises:
dividing, by the electronic device, threads in the electronic device into a foreground group and a non-foreground group, wherein the foreground group comprises a thread of a foreground application running in the foreground and a thread that is in a system service and that is associated with the foreground application, and the non-foreground group comprises a thread that is in the system service and that is not associated with the foreground application and a thread of a background application running in a background;
detecting, by the electronic device, a CPU load rate of the thread in the foreground group;
when the CPU load rate of the thread in the foreground group increases, determining, by the electronic device, a first increment of a CPU time slice length based on an increment of the CPU load rate of the thread in the foreground group; and
increasing, by the electronic device, the CPU time slice length of the thread in the foreground group based on the first increment, and reducing a CPU time slice length of the thread in the non-foreground group.

11. The method according to claim 10, wherein before detecting, by the electronic device, the CPU load rate of the thread in the foreground group, the method further comprises:
detecting, by the electronic device, a first foreground event, wherein the first foreground event comprises a change of the foreground application running in the foreground.

12. The method according to any one of claims 1 to 11, wherein the method further comprises:
dividing, by the electronic device, threads in the electronic device into a foreground group and a non-foreground group, wherein the foreground group comprises a thread of a foreground application running in the foreground and a thread that is in a system service and that is associated with the foreground application, and the non-foreground group comprises a thread that is in the system service and that is not associated with the foreground application and a thread of a background application running in a background;
detecting, by the electronic device, an overall device load and/or a device housing temperature of the electronic device, wherein the overall device load comprises CPU loads of the threads in the foreground group and the non-foreground group; and
when the overall device load is a first load and/or the device housing temperature is a first temperature, determining, by the electronic device, a first bandwidth quota amount based on the first load and/or the first temperature, and performing CPU bandwidth quota allocation to the thread in the non-foreground group based on the first bandwidth quota amount.

13. The method according to claim 12, wherein the method further comprises:
when the overall device load changes to a second load and/or the device housing temperature changes to a second temperature, determining, by the electronic device, a second bandwidth quota amount based on the second load and/or the second temperature, and performing CPU bandwidth quota allocation to the thread in the non-foreground group based on the second bandwidth quota amount, wherein
if the second load is higher than the first load and/or the second temperature is higher than the first temperature, the second bandwidth quota amount is smaller than the first bandwidth quota amount.

14. The method according to any one of claims 1 to 11, wherein the method further comprises:
dividing, by the electronic device, threads in the electronic device into a foreground group, a common thread group, and a restricted thread group, wherein the foreground group comprises a thread of a foreground application running in the foreground and a thread that is in a system service and that is associated with the foreground application, the restricted thread group comprises a delayable thread that is in the system service and that is not associated with the foreground application and a delayable thread in a background application running in a background, and the common thread group comprises a thread that is in the system service and not in the restricted thread group and that is not associated with the foreground application and a thread that is in the background application and not in the restricted thread group;
continuously performing, by the electronic device, CPU bandwidth quota allocation to the thread in the restricted thread group based on a third bandwidth quota amount;
detecting, by the electronic device, an overall device load and/or a device housing temperature of the electronic device, wherein the overall device load comprises CPU loads of the threads in the foreground group, the common thread group, and the restricted thread group; and
when the overall device load is a first load and/or the device housing temperature is a first temperature, determining, by the electronic device, a first bandwidth quota amount based on the first load and/or the first temperature, and performing CPU bandwidth quota allocation to the thread in the common thread group based on the first bandwidth quota amount.

15. The method according to any one of claims 1 to 14, wherein the method further comprises:
dividing, by the electronic device, threads in the electronic device into a foreground group and a non-foreground group, wherein the foreground group comprises a thread of a foreground application running in the foreground and a thread that is in a system service and that is associated with the foreground application, and the non-foreground group comprises a thread that is in the system service and that is not associated with the foreground application and a thread of a background application running in a background;
when it is detected that the third thread is waiting for a fourth thread to release a first shared resource or waiting to obtain a first running result from the fourth thread, labeling, by the electronic device, the fourth thread with a first label, wherein the third thread is the thread in the foreground group, and the fourth thread is the thread in the non-foreground group;
performing, by the electronic device, one or more of the following operations on the thread with the first label: increasing a running priority, increasing a CPU time slice length, and releasing a CPU bandwidth quota; and
when the fourth thread releases the first shared resource or sends the first running result to the third thread, removing, by the electronic device, the first label from the fourth thread.

16. The method according to any one of claims 10 to 15, wherein the foreground group comprises the critical thread in the first critical thread list and the critical dependent thread of the critical thread in the first critical thread list.

17. The method according to claim 2, wherein
detecting, by the electronic device, an overall device load and/or a device housing temperature of the electronic device, wherein the overall device load comprises loads of all threads in the electronic device; and
determining, by the electronic device, a first CPU frequency based on the overall device load and/or the device housing temperature, and controlling a CPU frequency to be lower than or equal to the first CPU frequency when a CPU runs a non-critical thread, wherein the non-critical thread comprises a thread other than the critical thread in the first critical thread list and the critical dependent thread of the critical thread in the first critical thread list.

18. The method according to any one of claims 1 to 17, wherein the first critical thread is for completing a multi-frame task, and the method further comprises:
in a running process of the first critical thread and the critical dependent thread of the first critical thread, determining, by the electronic device based on a CPU frequency adjustment cycle, that a first frequency adjustment moment is in a time period in which a task of a first frame in the multi-frame task is running;
detecting, by the electronic device at the first frequency adjustment moment, whether the task of the first frame is completed; and
if the task of the first frame is not completed, increasing, by the electronic device, the CPU frequency to a second CPU frequency based on a first frequency adjustment function, wherein
the first frequency adjustment function is a power function in which CPU computing power is a dependent variable, running time of a task of one frame in the multi-frame task is an independent variable, and an exponent is a positive number less than 1.

19. The method according to claim 18, wherein the method further comprises:
if the task of the first frame is completed, reducing, by the electronic device, the CPU frequency to a third CPU frequency.

20. The method according to claim 18, wherein neither a moment at which the task of the first frame starts to run nor a moment at which the task of the first frame is completed is the frequency adjustment moment determined based on the CPU frequency adjustment cycle, and the method further comprises:
when it is detected that the task of the first frame starts to run, increasing, by the electronic device, the CPU frequency to a fourth CPU frequency; and
when it is detected that the task of the first frame is completed, reducing, by the electronic device, the CPU frequency to a fifth CPU frequency.

21. The method according to any one of claims 18 to 20, wherein after the task of the first frame is completed, the method further comprises:
determining, by the electronic device based on the CPU frequency adjustment cycle, that a second frequency adjustment moment is in a time period in which a task of a second frame in the multi-frame task is running;
detecting, by the electronic device at the second frequency adjustment moment, whether the task of the second frame is completed; and
if the task of the second frame is not completed, increasing, by the electronic device, the CPU frequency to a sixth CPU frequency based on the first frequency adjustment function.

22. The method according to any one of claims 18 to 21, wherein the first critical thread is a thread for determining display content of a user interface, and the task of one frame in the multi-frame task comprises determining display content of one frame of user interface; or the first critical thread is a thread for rendering the user interface, and the task of one frame in the multi-frame task comprises rendering one frame of user interface.

23. The method according to claim 22, wherein the first frequency adjustment function is: $u \left(t\right) = \frac{kk ∗ maxUtil ∗ {Time}^{α}}{deadline - margin} ,$ wherein
u(t) is computing power provided by the CPU of the electronic device at a moment, maxUtil is maximum computing power of the CPU of the electronic device, Time is time from the current moment to a moment at which a synchronization signal of a task of a current frame is delivered, the synchronization signal of the task of the current frame indicates the electronic device to run the task of the current frame, deadline is a cycle in which the electronic device refreshes the user interface, margin is determined based on duration in which one or more frames of tasks before the running task of the current frame in the first critical thread are completed, kk and α are determined based on historical running data of one or more threads and a CPU energy efficiency curve of the electronic device, and the one or more threads comprise the first critical thread and the critical dependent thread of the first critical thread.

24. The method according to any one of claims 5 to 9, wherein the first critical dependent thread list is generated based on one or more of the following: a frequency of occurrences of a critical dependent thread on a critical path, a quantity of occurrences of a critical dependent thread in a wakeup relationship, a priority of a critical dependent thread on a critical path, an overall priority of a critical dependent thread, or running duration of a critical dependent thread.

25. A processor resource management method, wherein the method comprises:
dividing, by an electronic device, threads in the electronic device into a foreground group and a non-foreground group, wherein the foreground group comprises a thread of a foreground application running in a foreground and a thread that is in a system service and that is associated with the foreground application, and the non-foreground group comprises a thread that is in the system service and that is not associated with the foreground application and a thread of a background application running in a background; and
performing, by the electronic device, one or more of the following operations on the thread in the non-foreground group: adjusting a CPU time slice length of one or more threads in the non-foreground group based on a change of a load rate of the thread in the foreground group, performing CPU bandwidth quota allocation to one or more threads in the non-foreground group, and controlling a CPU frequency to be lower than or equal to a first CPU frequency when a CPU runs one or more threads in the non-foreground group.

26. The method according to claim 25, wherein adjusting the CPU time slice length of the one or more threads in the non-foreground group based on the change of the load rate of the thread in the foreground group specifically comprises:
when the CPU load rate of the thread in the foreground group increases, determining, by the electronic device, a first increment of the CPU time slice length based on an increment of the CPU load rate of the thread in the foreground group; and
increasing, by the electronic device, a CPU time slice length of one or more threads in the foreground group based on the first increment, and reducing the CPU time slice length of the one or more threads in the non-foreground group.

27. The method according to claim 25 or 26, wherein performing CPU bandwidth quota allocation to the one or more threads in the non-foreground group specifically comprises:
detecting, by the electronic device, an overall device load and/or a device housing temperature of the electronic device, wherein the overall device load comprises CPU loads of the threads in the foreground group and the non-foreground group; and
when the overall device load is a first load and/or the device housing temperature is a first temperature, determining, by the electronic device, a first bandwidth quota amount based on the first load and/or the first temperature, and performing CPU bandwidth quota allocation to the one or more threads in the non-foreground group based on the first bandwidth quota amount.

28. The method according to claim 27, wherein the method further comprises:
when the overall device load changes to a second load and/or the device housing temperature changes to a second temperature, determining, by the electronic device, a second bandwidth quota amount based on the second load and/or the second temperature, and performing CPU bandwidth quota allocation to the one or more threads in the non-foreground group based on the second bandwidth quota amount, wherein
if the second load is higher than the first load and/or the second temperature is higher than the first temperature, the second bandwidth quota amount is smaller than the first bandwidth quota amount.

29. The method according to claim 25 or 26, wherein the non-foreground group comprises a common thread group and a restricted thread group, the restricted thread group comprises a delayable thread that is in the system service and that is not associated with the foreground application and a delayable thread in the background application running in the background, and the common thread group comprises a thread that is in the system service and not in the restricted thread group and that is not associated with the foreground application and a thread that is in the background application and not in the restricted thread group; and performing CPU bandwidth quota allocation to the one or more threads in the non-foreground group specifically comprises:
continuously performing, by the electronic device, CPU bandwidth quota allocation to one or more threads in the restricted thread group based on a third bandwidth quota amount;
detecting, by the electronic device, an overall device load and/or a device housing temperature of the electronic device, wherein the overall device load comprises CPU loads of the threads in the foreground group, the non-common thread group, and the restricted thread group; and
when the overall device load is a first load and/or the device housing temperature is a first temperature, determining, by the electronic device, a first bandwidth quota amount based on the first load and/or the first temperature, and performing CPU bandwidth quota allocation to one or more threads in the common thread group based on the first bandwidth quota amount.

30. The method according to any one of claims 25 to 29, wherein the first CPU frequency is determined based on the overall device load and/or the device housing temperature of the electronic device, and the overall device load comprises loads of all the threads in the electronic device.

31. The method according to any one of claims 25 to 30, wherein the method further comprises:
when it is detected that a third thread is waiting for a fourth thread to release a first shared resource or waiting to obtain a first running result from the fourth thread, labeling, by the electronic device, the fourth thread with a first label, wherein the third thread is the thread in the foreground group, and the fourth thread is the thread in the non-foreground group;
performing, by the electronic device, one or more of the following operations on the thread with the first label: increasing a running priority, increasing a CPU time slice length, and releasing a CPU bandwidth quota; and
when the fourth thread releases the first shared resource or sends the first running result to the third thread, removing, by the electronic device, the first label from the fourth thread.

32. An electronic device, wherein the electronic device comprises a memory and a processor, the memory is configured to store a computer program, and the processor executes the computer program to implement the method according to any one of claims 1 to 31.

33. A computing-readable storage medium, storing instructions, wherein when the instructions are executed by a processor, the method according to any one of claims 1 to 31 is implemented.

34. A computer program product, wherein the computer program product comprises computer instructions, and when the computer instructions are executed by a processor, the method according to any one of claims 1 to 31 is implemented.
